# EUROPEAN PATENT APPLICATION

(11) **EP 3 978 137 A1**
(43) Date of publication of application: **06.04.2022**
(21) Application number: 20915096.0
(22) Date of filing: 04.12.2020
(51) Int. Cl.: B04C 3/00, B04C 3/06, B04C 9/00, B01D 53/18, B01D 53/50, B01D 53/78, B01D 53/92, F01N 3/04, F23J 15/00

(54) **EXHAUST GAS TREATMENT DEVICE**

(30) Priority: 21.01.2020 JP 2020007533
(71) Applicant: Fuji Electric Co., Ltd., Kawasaki-shi, Kanagawa 210-9530 (JP)
(72) Inventor: ENAMI, Yoshiaki, Kawasaki-shi, Kanagawa 210-9530 (JP); TAKAHASHI, Kuniyuki, Kawasaki-shi, Kanagawa 210-9530 (JP)
(74) Representative: MERH-IP Matias Erny Reichl Hoffmann Patentanwälte PartG mbB
(86) International application number: PCT/JP2020/045337
(87) International publication number: WO 2021/149370

(57) **Abstract**

Provided is an exhaust gas treatment apparatus, including: a reaction tower, including an exhaust gas inlet and an exhaust gas outlet, wherein a liquid for treating the exhaust gas is supplied; and a spinning portion, configured to spin the exhaust gas, including an ingoing end; an outgoing end, wherein the reaction tower includes a liquid spraying portion provided between the exhaust gas inlet and the exhaust gas outlet; wherein in the liquid spraying portion, the liquid is sprayed in an interior of the reaction tower; the exhaust gas is configured to travel in a direction from the exhaust gas inlet to the exhaust gas outlet through the interior of the reaction tower, while spinning in a predetermined spinning direction through the liquid spraying portion; the exhaust gas is configured to travel in a direction from the ingoing end to the outgoing end; the spinning portion is configured to spin the exhaust gas in a predetermined spinning direction when seen from a direction from the outgoing end to the ingoing end; and the spinning direction in the liquid spraying portion of the exhaust gas when seen from the travelling direction of the exhaust gas is the same as the spinning direction of the exhaust gas in the spinning portion.

## Description

### BACKGROUND

### 1. TECHNICAL FIELD

The present invention relates to an exhaust gas treatment apparatus.

### 2. RELATED ART

Conventional exhaust gas treatment apparatuses are known to separate liquids included in exhaust gas from the exhaust gas (refer to, for example, Patent Documents 1-7).
Patent Document 1: Japanese Patent Application Publication No. H9-229346
Patent Document 2: Japanese Patent Application Publication No. H7-229325
Patent Document 3: Japanese Patent Application Publication No. H9-292120
Patent Document 4: Japanese Patent Application Publication No. H11-151426
Patent Document 5: Japanese Patent Application Publication No. 2010-43969
Patent Document 6: Japanese Patent Application Publication No. 2001-234708
Patent Document 7: Japanese Patent Application Publication No. 2006-255573

### 3. TECHNICAL PROBLEM

In the exhaust gas treatment apparatus, it is preferable to suppress the liquid included in the exhaust gas from being discharged outside the exhaust gas treatment apparatus.

### GENERAL DISCLOSURE

A first aspect of the present invention provides an exhaust gas treatment apparatus. The exhaust gas treatment apparatus includes a reaction tower, including an exhaust gas inlet where exhaust gas is introduced; and an exhaust gas outlet where the exhaust gas is discharged, wherein a liquid for treating the exhaust gas is supplied, and a spinning portion, configured to spin the exhaust gas, including an ingoing end wherein the exhaust gas is introduced; an outgoing end wherein the exhaust gas is led out. The reaction tower includes a liquid spraying portion provided between the exhaust gas inlet and the exhaust gas outlet. In the liquid spraying portion, the liquid is sprayed in an interior of the reaction tower. The exhaust gas is configured to travel in a direction from the exhaust gas inlet to the exhaust gas outlet through the interior of the reaction tower, while spinning in a predetermined spinning direction through the liquid spraying portion. The exhaust gas is configured to travel in a direction from the ingoing end to the outgoing end through the interior of the spinning portion. The spinning portion is configured to spin the exhaust gas in a predetermined spinning direction when seen from a direction from the outgoing end to the ingoing end. The spinning direction in the liquid spraying portion of the exhaust gas when seen from the travelling direction of the exhaust gas in the interior of the reaction tower is the same as the spinning direction of the exhaust gas when seen from the travelling direction of the exhaust gas in the spinning portion.

The spinning portion may include one or more wing portions configured to spin the exhaust gas. A normal line direction of a back surface of the wing portion and the travelling direction of the exhaust gas in the spinning portion may be configured to form an acute angle.

The spinning portion may include a first wing portion and a second wing portion included in the plurality of wing portions. The first wing portion may be overlapped with the second wing portion when seen from the travelling direction of the exhaust gas in the spinning portion.

The exhaust gas spun by the spinning portion may be configured to spin through surroundings of a predetermined central axis when seen from the travelling direction of the exhaust gas in the spinning portion. An overlapping width on the central axis side of the first wing portion and the second wing portion may be larger than an overlapping width on an outer peripheral side from the central axis side of the first wing portion and the second wing portion, when seen from the travelling direction of the exhaust gas in the spinning portion.

The plurality of wing portions may be provided to enclose the central axis. A direction of spinning of the plurality of wing portions may be the same as the spinning direction of the exhaust gas in the liquid spraying portion, when seen from the travelling direction of the exhaust gas in the spinning portion.

The spinning portion may include a supporting column provided in the central axis. The supporting column may be a polygonal shape when seen from the travelling direction of the exhaust gas in the spinning portion.

The reaction tower may further include a trunk tube where the liquid is supplied, provided in the liquid spraying portion. The end portion of the exhaust gas outlet side of the trunk tube and the end portion of the exhaust gas inlet side of the supporting column may be in contact.

A distance on the outgoing end side between the first wing portion and the second wing portion may be smaller than a distance on the ingoing end side between the first wing portion and the second wing portion.

A back surface of the wing portion may include a first surface, and a second surface provided on the outgoing end side from the first surface. In a side view of the spinning portion, the first surface and the travelling direction of the exhaust gas in the spinning portion may be configured to form a first angle. In a side view of the spinning portion, the second surface and the travelling direction of the exhaust gas in the spinning portion may be configured to form a second angle, which is different from the first angle. The second angle may be larger than the first angle.

A thickness between a front surface and a back surface of the wing portion on the outgoing end side may be greater than a thickness between a front surface and a back surface of the wing portion on the ingoing end side in one wing portion.

A groove for controlling a travelling direction of the liquid included in the exhaust gas may be provided in the back surface of the wing portion.

The wing portion may further include a support portion for controlling the pressure loss of the exhaust gas.

The spinning portion may be provided in the interior of the reaction tower, and is provided between the liquid spraying portion and the exhaust gas outlet in the travelling direction of the exhaust gas in the interior of the reaction tower.

The wing portion may include one end arranged on a predetermined central axis side, and an other end arranged on an outer peripheral side from the central axis side, when seen from the travelling direction of the exhaust gas in the spinning portion. At least a part of the other end of the wing portion may be connected to a side wall of the reaction tower.

The other end of the wing portion may be connected to the side wall of the reaction tower on the outgoing end side, or may be away from the side wall of the reaction tower on the ingoing end side.

The entire interior of the reaction tower may be covered by the plurality of wing portions when seen from the travelling direction of the exhaust gas in the spinning portion.

The exhaust gas treatment apparatus may be provided on the downstream side in the travelling direction of the exhaust gas from the spinning portion in the travelling direction of the exhaust gas in the interior of the reaction tower, and may be provided on the side wall of the reaction tower, and may further include one or more collection portions for collecting liquid that has treated the exhaust gas. A first aperture where the liquid that has treated the exhaust gas is introduced may be provided in the collection portion. The liquid travelling on the downstream side in the travelling direction of the exhaust gas from the spinning portion may be collected in the collection portion from the first aperture. The collection portion may include a drainage portion for draining the liquid that has treated the exhaust gas.

The exhaust gas treatment apparatus may further include an exhaust gas outgoing portion connected to the exhaust gas outlet. A cross-sectional area of the exhaust gas outgoing portion may be smaller than a cross-sectional area of the liquid spraying portion in a direction intersecting with a travelling direction of the exhaust gas in the exhaust gas outgoing portion. The spinning portion may be provided in the exhaust gas outgoing portion.

The wing portion may include one end arranged on a predetermined central axis side, and an other end arranged on an outer peripheral side from the central axis side, when seen from the travelling direction of the exhaust gas in the spinning portion. At least a part of the other end of the wing portion may be connected to a side wall of the exhaust gas outgoing portion.

The other end of the wing portion may be connected to the side wall of the exhaust gas outgoing portion on the outgoing end side, or may be away from the side wall of the exhaust gas outgoing portion on the ingoing end side.

The entire interior of the exhaust gas outgoing portion may be covered by the plurality of wing portions when seen from the travelling direction of the exhaust gas in the spinning portion.

The exhaust gas treatment apparatus may be provided on the downstream side in the travelling direction of the exhaust gas from the spinning portion, and provided on the side wall of the exhaust gas outgoing portion in the travelling direction of the exhaust gas in the interior of the exhaust gas outgoing portion, and may further include one or more collection portions for collecting the liquid that has treated the exhaust gas. A first aperture may be provided in the collection portion, wherein the liquid that has treated the exhaust gas is introduced. The liquid travelling on the downstream side in the travelling direction of the exhaust gas from the spinning portion may be collected in the collection portion from the first aperture. The collection portion may include a drainage portion for draining the liquid that has treated the exhaust gas.

The exhaust gas treatment apparatus may further include an exhaust gas outgoing portion connected to the exhaust gas outlet. A cross-sectional area of the exhaust gas outgoing portion may be smaller than a cross-sectional area of the liquid spraying portion in a direction intersecting with a travelling direction of the exhaust gas in the exhaust gas outgoing portion. The exhaust gas outgoing portion may include a partition that prevents the passage of at least a part of the exhaust gas provided in the interior of the exhaust gas outgoing portion. The spinning portion may include a tube provided outside the exhaust gas outgoing portion. In the travelling direction of the exhaust gas in the exhaust gas outgoing portion, the interior of the exhaust gas outgoing portion on one side of the partition may be connected to the interior of the exhaust gas outgoing portion of the other side of the partition by the tube.

The exhaust gas treatment apparatus may further include a flue connected directly or indirectly to the exhaust gas outlet. In the direction intersecting with the travelling direction of the exhaust gas in the flue, the cross-sectional area of the flue may be smaller than the cross-sectional area of the liquid spraying portion. The spinning portion may be provided in the flue.

The wing portion may include one end arranged on a predetermined central axis side, and an other end arranged on an outer peripheral side from the central axis side, when seen from the travelling direction of the exhaust gas in the spinning portion. At least a part of the other end of the wing portion may be connected to a side wall of the flue.

The other end of the wing portion may be connected to the side wall of the flue on the outgoing end side, or may be away from the side wall of the flue on the ingoing end side.

The entire interior of the flue may be covered by the plurality of wing portions when seen from the travelling direction of the exhaust gas in the spinning portion.

The exhaust gas treatment apparatus may be provided on the downstream side in the travelling direction of the exhaust gas from the spinning portion in the travelling direction of the exhaust gas in the interior of the flue, and may be provided on the side wall of the flue, and may further include one or more collection portions for collecting liquid that has treated the exhaust gas. A first aperture may be provided in the collection portion, wherein the liquid that has treated the exhaust gas is introduced. The liquid travelling on the downstream side in the travelling direction of the exhaust gas from the spinning portion may be collected in the collection portion from the first aperture. The collection portion may include a drainage portion for draining the liquid that has treated the exhaust gas.

A second aperture where the liquid that has treated the exhaust gas is introduced may be further provided in the collection portion. The liquid travelling on the downstream side in the travelling direction of the exhaust gas from the spinning portion may be collected in the collection portion from the second aperture.

The exhaust gas treatment apparatus may include a first collection portion and a second collection portion included in the plurality of collection portions. In the travelling direction of the exhaust gas, the second collection portion may be provided on the downstream side of the exhaust gas from the first collection portion. The first collection portion may include a first aperture and a drainage portion. The second collection portion may include a first aperture, a second aperture and a drainage portion.

The first collection portion may be connected with the second collection portion. The second collection portion may further include an exhaust gas outlet for leading out the exhaust gas.

A second aspect of the present invention provides a flue unit. The flue unit includes an exhaust gas passage portion, a spinning portion, which is provided in the exhaust gas passage portion, for spinning the exhaust gas.

### BRIEF DESCRIPTION OF THE DRAWINGS

Fig. 1 illustrates one example of an exhaust gas treatment apparatus 100 according to one embodiment of the present invention.
Fig. 2 illustrates an enlarged view of a liquid spraying portion 90 in Fig. 1.
Fig. 3 illustrates one example in a top view of the exhaust gas treatment apparatus 100 illustrated in Fig. 1 and Fig. 2.
Fig. 4 illustrates a perspective view showing one example of a spinning portion 80 in Fig. 1.
Fig. 5 illustrates one example in a case where the spinning portion 80 illustrated in Fig. 1 and Fig. 4 is seen from a travelling direction E2 of an exhaust gas 30.
Fig. 6A illustrates an enlarged view of a supporting column 81, a wing portion 82-1 and a wing portion 82-2 in Fig. 5.
Fig. 6B illustrates another example of a case where the spinning portion 80 illustrated in Fig. 1 and Fig. 4 is seen from the travelling direction E2 of the exhaust gas 30.
Fig 7 illustrates one example of a side view seen in a direction along a line G1-G2 from G1 to G2 of Fig. 6A in the spinning portion 80 illustrated in Fig. 4.
Fig. 8 illustrates one example of a side view seen in a direction along a line H1-H2 from HI to H2 of Fig. 6A in the spinning portion 80 illustrated in Fig. 4.
Fig 9 illustrates a perspective view showing another example of the spinning portion 80 in Fig. 1.
Fig. 10 illustrates one example of a side view seen in a direction along the line G1-G2 from G1 to G2 of Fig. 6A in the spinning portion 80 illustrated in Fig 9.
Fig. 11 illustrates one example of a side view when seen in a direction along the line H1-H2 from H1 to H2 of Fig. 6A in the spinning portion 80 illustrated in Fig 9.
Fig. 12 illustrates one example of a side view when seen in a direction along the line K1-K2 from K1 to K2 of Fig. 6A in the spinning portion 80 illustrated in Fig. 4.
Fig. 13 illustrates a perspective view showing another example of the spinning portion 80 in Fig. 1.
Fig. 14 illustrates one example of a side view when seen in a direction along the line G1-G2 from G1 to G2 of Fig. 6A in the spinning portion 80 illustrated in Fig. 13.
Fig. 15 illustrates enlarged views of a third surface 97 and a third surface 98 of the wing portion 82-1, a part of a first surface 93 and a part of a first surface 95, and a part of a second surface 94 and a part of the second surface 96 in Fig. 14.
Fig. 16 illustrates another example of a side view seen in a direction along the line G1-G2 from G1 to G2 of Fig. 6A.
Fig. 17 illustrates another example of a side view seen in a direction along the line G1-G2 from G1 to G2 of Fig. 6A.
Fig. 18 illustrates another example in a top view of the spinning portion 80 illustrated in Fig. 1 and Fig. 4.
Fig. 19 illustrates another example of a side view seen in a direction along the line G1-G2 from G1 to G2 of Fig. 6A in the spinning portion 80 illustrated in Fig. 18.
Fig. 20 illustrates another example in a top view of the spinning portion 80 illustrated in Fig. 1 and Fig. 4.
Fig. 21 illustrates an enlarged view of a supporting column 81 and a wing portion 82-1 in Fig. 5.
Fig. 22 illustrates another example of a case where the spinning portion 80 illustrated in Fig. 1 and Fig. 4 is seen from the travelling direction E2 of the exhaust gas 30.
Fig. 23A illustrates another example of the exhaust gas treatment apparatus 100 according to one embodiment of the present invention.
Fig. 23B illustrates a perspective view showing another example of the exhaust gas treatment apparatus 100 according to the one embodiment of the present invention.
Fig. 23C illustrates one example of the B-B' cross-section in Fig. 23B.
Fig. 24 illustrates another example of the exhaust gas treatment apparatus 100 according to the one embodiment of the present invention.
Fig. 25 illustrates another example of the exhaust gas treatment apparatus 100 according to the one embodiment of the present invention.
Fig. 26 illustrates one example of a case where the spinning portion 80 illustrated in Fig. 25 is seen from the travelling direction E3 of the exhaust gas 30.
Fig. 27 illustrates another example of the exhaust gas outgoing portion 91.
Fig. 28 illustrates one example of a case where the exhaust gas outgoing portion 91 illustrated in the Fig. 27 is seen from the travelling direction E3 of the exhaust gas 30.
Fig. 29 illustrates another example of the exhaust gas treatment apparatus 100 according to the one embodiment of the present invention.
Fig. 30 illustrates one example of the collection portion 51 illustrated in Fig. 29 when the reaction tower 10 is seen from the travelling direction E1 of the exhaust gas 30.
Fig. 31 illustrates one example of the A-A' cross-section in Fig. 30.
Fig. 32 illustrates another example of the A-A' cross-section in Fig. 30.
Fig. 33 illustrates another example of the A-A' cross-section in Fig. 30.
Fig. 34 illustrates another example of the A-A' cross-section in Fig. 30.
Fig. 35 illustrates one example excluding the spinning portion 80 in the exhaust gas treatment apparatus 100 illustrated in Fig. 29.
Fig. 36 illustrates a perspective view showing one example of the exhaust gas outgoing portion 91 illustrated in Fig. 25 to Fig. 28.
Fig. 37 illustrates a perspective view showing another example of the exhaust gas outgoing portion 91 illustrated in Fig. 25 to Fig. 28.
Fig. 38 illustrates one example excluding the spinning portion 80 in the exhaust gas outgoing portion 91 illustrated in Fig. 36.
Fig. 39 illustrates one example excluding the spinning portion 80 in the exhaust gas outgoing portion 91 illustrated in Fig. 37.
Fig. 40 illustrates one example of the exhaust gas treatment apparatus 100 according to the one embodiment of the present invention.
Fig. 41 illustrates another example of the exhaust gas treatment apparatus 100 according to the one embodiment of the present invention.
Fig. 42 illustrates another example of the exhaust gas treatment apparatus 100 according to the one embodiment of the present invention.
Fig. 43 illustrates another example of the exhaust gas treatment apparatus 100 according to the one embodiment of the present invention.
Fig. 44 illustrates another example of the exhaust gas treatment apparatus 100 according to the one embodiment of the present invention.

### DESCRIPTION OF EXEMPLARY EMBODIMENTS

Hereinafter, (some) embodiment(s) of the present invention will be described. The embodiment(s) do(es) not limit the invention according to the claims, And all the combinations of the features described in the embodiment(s) are not necessarily essential to means provided by aspects of the invention.

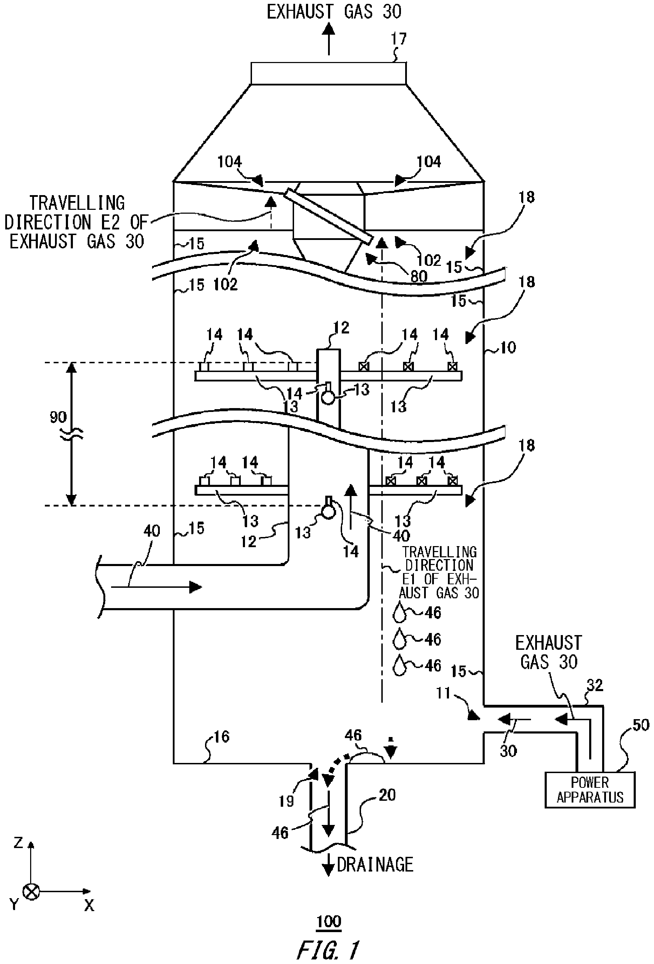

Fig. 1 illustrates one example of an exhaust gas treatment apparatus 100 according to one embodiment of the present invention. The exhaust gas treatment apparatus 100 includes a reaction tower 10 and a spinning portion 80. The spinning portion 80 of the present example is provided inside the reaction tower 10. The exhaust gas treatment apparatus 100 may include an exhaust gas introducing pipe 32, a power apparatus 50, and a drainage pipe 20.

The power apparatus 50 is, for example, an engine, a boiler, etc. The power apparatus 50 discharges an exhaust gas 30. The exhaust gas introducing pipe 32 connects the power apparatus 50 to the reaction tower 10. The exhaust gas 30 is introduced into the reaction tower 10. In the present example, the exhaust gas 30 discharged from the power apparatus 50 is introduced into the reaction tower 10 after passing through the exhaust gas introducing pipe 32.

The reaction tower 10 includes an exhaust gas inlet 11 for introducing the exhaust gas 30, and an exhaust gas outlet 17 for discharging the exhaust gas 30. A liquid 40 for treating the exhaust gas 30 is supplied to the reaction tower 10. The liquid 40 supplied to the reaction tower 10 treats the exhaust gas 30 in the interior of the reaction tower 10. The liquid 40 is, for example, sea water or alkaline liquid. Treating the exhaust gas 30 refers to removing harmful substances included in the exhaust gas 30. The liquid 40 turns into an exhaust liquid 46 after treating the exhaust gas 30.

The reaction tower 10 of the present example includes a side wall 15, a bottom surface 16, a gas treatment portion 18 and a liquid outlet 19. The reaction tower 10 in the present example has a cylindrical shape. In the present example, the exhaust gas outlet 17 is arranged in a position facing the bottom surface 16 in a parallel direction with the central axis of the reaction tower 10 in a cylindrical shape. In the present example, the side wall 15 and the bottom surface 16 are an inner side surface and bottom surface of the cylindrical reaction tower 10, respectively. The exhaust gas inlet 11 may be provided on the side wall 15. In the present example, the exhaust gas 30 is introduced into the gas treatment portion 18 after passing through the exhaust gas inlet 11 from the exhaust gas introducing pipe 32.

The gas treatment portion 18 is a space surrounded by the side wall 15, the bottom surface 16 and the exhaust gas outlet 17. The gas treatment portion 18 is in contact with the side wall 15, the bottom surface 16 and the exhaust gas outlet 17. The gas treatment portion 18 is a space for treating the exhaust gas 30 in the interior of the reaction tower 10. The bottom surface 16 is a surface on which the exhaust liquid 46 falls. The exhaust liquid 46 is discharged to the drainage pipe 20 after passing through the liquid outlet 19.

The side wall 15 and the bottom surface 16 are formed of material with durability for the exhaust gas 30, the liquid 40 and the exhaust liquid 46. The material may be a combination of iron material such as SS400 or S-TEN (registered trademark) and at least one of the coating and painting agents, a copper alloy such as Neval brass, an aluminum alloy such as Aluminum Brass, a nickel alloy such as Cupronickel, a stainless steel such as Hastelloy (registered trademark), SUS316L, SUS329J4L or SUS312.

Herein, the technical matter may be described using the orthogonal coordinate axes consisting of X axis, Y axis, and Z axis. Herein, the surface parallel to the bottom surface 16 of the reaction tower 10 is the XY surface, and the direction from the bottom surface 16 to the exhaust gas outlet 17 (the direction perpendicular to the bottom surface 16) is the Z axis. Herein, a predetermined direction in the XY surface is referred to as the X axis direction, and the direction orthogonal to the X axis in the XY surface is referred to as the Y axis direction.

The Z axis direction may be parallel to the gravitational direction. When the Z axis direction is parallel to the gravitational direction, the XY surface may be a horizontal surface. The Z axis direction may also be parallel to the horizontal direction. When the Z axis direction is parallel to the horizontal direction, the XY surface may also be parallel to the gravitational direction.

Herein the side view refers to a case where the exhaust gas treatment apparatus 100 is seen in a direction perpendicular to the Z axis (a predetermined direction in the XY surface). Herein the side view refers to a figure in a side view.

The exhaust gas treatment apparatus 100 is a cyclone scrubber for ships, for example. In the cyclone scrubber, the exhaust gas 30 introduced into the reaction tower 10 travels to the direction toward the exhaust gas outlet 17 from the exhaust gas inlet 11 (the Z axis direction in the present example) while spinning in the interior of the reaction tower 10. In the present example, the exhaust gas 30 is spun in the XY surface when seen in a direction from the exhaust gas outlet 17 to the bottom surface 16.

The reaction tower 10 includes a liquid spraying portion 90. The liquid spraying portion 90 is provided between the exhaust gas inlet 11 and the exhaust gas outlet 17. The liquid spraying portion 90 may be a partial region between the exhaust gas inlet 11 and the exhaust gas outlet 17 in the travelling direction of the exhaust gas 30 (the Z axis direction). The liquid spraying portion 90 may be an entire region of the reaction tower 10 when the reaction tower 10 is seen in a direction from the exhaust gas outlet 17 to the bottom surface 16 (the XY surface). In the liquid spraying portion 90, the liquid 40 is sprayed in the interior of the reaction tower 10.

The reaction tower 10 may include one or more trunk tubes 12, and one or more branch tubes 13 through which the liquid 40 is supplied. The reaction tower 10 may have one or more discharge ion portions 14 for discharging the liquid 40. In the present example, the discharge ion portion 14 is connected to the branch tube 13, and the branch tube 13 is connected to the trunk tube 12.

In the present example, at least a part of the trunk tube 12, the branch tube 13 and the discharge ion portion 14 are provided in the liquid spraying portion 90. In Fig. 1, the range of the liquid spraying portion 90 in the interior of the reaction tower 10 is illustrated by a two-way arrow. The liquid spraying portion 90 may be a range from the discharge ion portion 14, arranged on the side closest to the exhaust gas inlet 11 to the discharge ion portion 14 arranged on the side closest to the exhaust gas outlet 17 in the direction parallel to the Z axis. The liquid spraying portion 90 may be a region surrounded by the side wall 15 in the XY surface.

In the present example, the exhaust gas 30 travels in a direction from the exhaust gas inlet 11 to the exhaust gas outlet 17 through the interior of the reaction tower 10 while spinning through the liquid spraying portion 90 in a predetermined direction (a spinning direction F1 described below). In the interior of the reaction tower 10, the travelling direction of the exhaust gas 30 from the exhaust gas inlet 11 to the exhaust gas outlet 17 is set as a travelling direction E1. In the present example, the travelling direction E1 of the exhaust gas 30 is parallel to the Z axis. That is, in the present example, the exhaust gas 30 travels in a travelling direction E1 in a side view of the reaction tower 10, and is spun in a spinning direction F1 when seen from the travelling direction E1.

The spinning portion 80 includes an ingoing end 102 for introducing the exhaust gas 30 and an outgoing end 104 for leading out the exhaust gas 30. The exhaust gas 30 travels in a direction from the ingoing end 102 to the outgoing end 104 in the interior of the spinning portion 80. The travelling direction of the exhaust gas 30 from the ingoing end 102 to the outgoing end 104 is set as a travelling direction E2. In the present example, the travelling direction E2 is parallel to the Z axis. That is, in the present example, the exhaust gas 30 travels in the travelling direction E2 in a side view of the spinning portion 80, and is spun in a predetermined spinning direction when seen from the travelling direction E2 (a spinning direction F2 described below).

The ingoing end 102 is an end portion of the most upstream of the exhaust gas 30 in the travelling direction E2 of the exhaust gas 30. The ingoing end 102 is an end portion of the inlet side of the exhaust gas 30 in the spinning portion 80. The ingoing end 102 may be a planar region including an end portion of the most upstream of the exhaust gas 30. The planar region may intersect with the travelling direction E2 of the exhaust gas 30. The exhaust gas 30 may pass through the planar region.

The outgoing end 104 is an end portion of the most downstream side of the exhaust gas 30 in the travelling direction E2 of the exhaust gas 30. The outgoing end 104 is an end portion of the outlet side of the exhaust gas 30 in the spinning portion 80. The outgoing end 104 may be a planar region including the end portion of the most downstream side of the exhaust gas 30. The planar region may intersect with the travelling direction E2 of the exhaust gas 30. The exhaust gas 30 may pass through the planar region.

The travelling direction E1 of the exhaust gas 30 in the reaction tower 10 may be parallel to the travelling direction E2 of the exhaust gas 30 in the spinning portion 80, or not. In the present example, the travelling direction E1 is parallel to the travelling direction E2.

In the present example, the cylindrical reaction tower 10 may be placed so that the central axis of the reaction tower 10 is parallel to the vertical direction, or may be placed so that the central axis is parallel to the horizontal direction. When the reaction tower 10 is placed so that the central axis is parallel to the vertical direction, the travelling direction E1 of the exhaust gas 30 (a direction parallel to the Z axis) is parallel to the vertical direction and is a direction from downward to upward in the vertical direction. When the reaction tower 10 is placed so that the central axis is parallel to the horizontal direction, the travelling direction E1 of the exhaust gas 30 (a direction parallel to the Z axis) is parallel to the horizontal direction.

The spinning portion 80 of the present example is provided on the downstream side of the exhaust gas 30 from the liquid spraying portion 90 in the travelling direction of the exhaust gas 30 (the Z axis direction in the present example). In the present example, the spinning portion 80 is provided between the liquid spraying portion 90 and the exhaust gas outlet 17 in the Z axis direction. As described later, the spinning portion 80 increases the velocity of the exhaust gas 30.

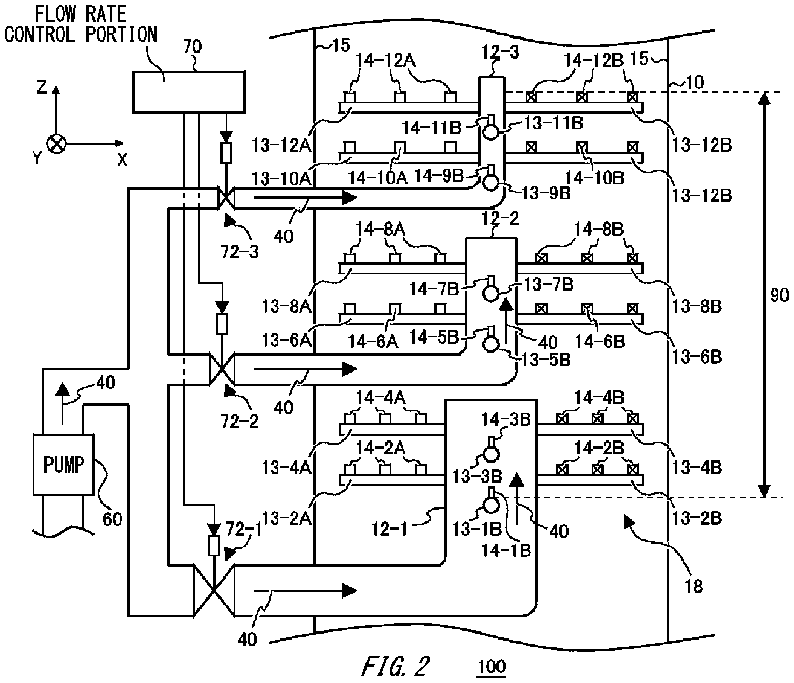

Fig. 2 illustrates an enlarged view of the liquid spraying portion 90 in Fig. 1. The reaction tower 10 of the present example includes three trunk tubes 12 (a trunk tube 12-1, a trunk tube 12-2, and a trunk tube 12-3). In the present example, the trunk tube 12-1 and the trunk tube 12-3 are trunk tubes 12 provided on the side closest to the exhaust gas inlet 11 and the side closest to the exhaust gas outlet 17, respectively, in the direction parallel to the Z axis. In the present example, the trunk tube 12-2 is a trunk tube 12 provided between the trunk tube 12-1 and the trunk tube 12-3 in the Z axis direction.

The reaction tower 10 of the present example includes branch tubes 13-1 to 13-12. In the present example, the branch tube 13-1 and the branch tube 13-12 are branch tubes 13 provided on the side closest to the exhaust gas inlet 11 and the side closest to the exhaust gas outlet 17, respectively, in the direction parallel to the Z axis. In the present example, the branch tube 13-1, the branch tube 13-3, the branch tube 13-5, the branch tube 13-7, the branch tube 13-9 and the branch tube 13-11 extend in the Y axis direction, and the branch tube 13-2, the branch tube 13-4, the branch tube 13-6, the branch tube 13-8, the branch tube 13-10 and the branch tube 13-12 extend in the X axis direction.

In the present example, the branch tubes 13-1 to 13-4 are connected to the trunk tube 12-1, the branch tubes 13-5 to 13-8 are connected to the trunk tube 12-2, and the branch tubes 13-9 to 13-12 are connected to the trunk tube 12-3. The branch tube 13-1, the branch tube 13-3, the branch tube 13-5, the branch tube 13-7, the branch tube 13-9 and the branch tube 13-11 may be arranged on both sides of the trunk tube 12 in the direction parallel to the Y axis. The branch tube 13-2, the branch tube 13-4, the branch tube 13-6, the branch tube 13-8, the branch tube 13-10 and the branch tube 13-12 may be arranged on both sides of the trunk tube 12 in the direction parallel to the X axis.

Using the branch tube 13-1 as an example for description, the branch tube 13-1A and the branch tube 13-1B are branch tubes 13-1 arranged on one side and the other side of the trunk tube 12-1, respectively, in the direction parallel to the Y axis. In the direction parallel to the Y axis, the branch tube 13-1A and the branch tube 13-1B may be provided so as to sandwich the trunk tube 12-1. It should be noted that the branch tube 13-1A and the branch tube 13-3A in Fig. 2 are arranged in a position overlapping the trunk tube 12-1, so they are not illustrated.

Using the branch tube 13-2 as an example for description, the branch tube 13-2A and the branch tube 13-2B are branch tubes 13-2 arranged on one side and the other side of the trunk tube 12-1, respectively, in the direction parallel to the X axis. In the direction parallel to the X axis, the branch tube 13-2A and the branch tube 13-2B may be provided to sandwich the trunk tube 12-1.

The reaction tower 10 of the present example includes the discharge ion portions 14-1 to 14-12. In the present example, the discharge ion portion 14-1 and the discharge ion portion 14-12 are discharge ion portions 14 provided on the side closest to the exhaust gas inlet 11 and the side closest to the exhaust gas outlet 17, respectively, in the direction parallel to the Z axis. The discharge ion portions 14-1 to 14-12 of the present example are connected to the branch tubes 13-1 to 13-12, respectively. In one branch tube 13 extending to the Y axis direction, a plurality of discharge ion portions 14 may be provided on one side of the trunk tube 12 in the direction parallel to the Y axis, and a plurality of discharge ion portions 14 may also be provided on the other side. In one branch tube 13 extending to the X axis direction, a plurality of discharge ion portions 14 may be provided on one side of the trunk tube 12 in the direction parallel to the X axis, and a plurality of discharge ion portions 14 may also be provided on the other side. It should be noted that in Fig. 2, the discharge ion portion 14-1A, the discharge ion portion 14-3A, the discharge ion portion 14-5A, the discharge ion portion 14-7A, the discharge ion portion 14-9A, the discharge ion portion 14-11A are arranged in a position overlapping the trunk tube 12, so they are not illustrated.

The discharge ion portion 14 includes an opening surface for discharging the liquid 40. In Fig. 2, the opening surface is illustrates by a "x" sign. In one branch tube 13, the opening surface of each of the discharge ion portions 14 arranged on the one side and the other side of the trunk tube 12 may face one direction that forms a predetermined angle θ (described below) with the extending direction of the branch tube 13 and the other directions. The angle θ may be from 30 degrees to 90 degrees. The direction that the opening surface refers to is the direction of the central axis in the direction that the liquid 40 is discharged from the discharge ion portion 14.

The exhaust gas treatment apparatus 100 may include a pump 60, and a volumetric flow rate control portion 70. The volumetric flow rate control portion 70 controls the volumetric flow rate of the liquid 40 supplied to the reaction tower 10. The volumetric flow rate control portion 70 may have a valve 72. In the present example, the volumetric flow rate control portion 70 controls, by the valve 72, the volumetric flow rate of the liquid 40 supplied from the pump 60 to the discharge ion portion 14. The volumetric flow rate control portion 70 of the present example includes three valves 72 (a valve 72-1, a valve 72-2 and a valve 72-3). The volumetric flow rate control portion 70 of the present example controls the volumetric flow rate of the liquid 40 supplied to the trunk tube 12-1 respectively, the trunk tube 12-2 and the trunk tube 12-3, by the valve 72-1, the valve 72-2 and the valve 72-3. The liquid 40 supplied to the trunk tube 12 is discharged to the interior of the reaction tower 10 (the gas treatment portion 18) from the discharge ion portion 14 after passing through the branch tube 13.

The volumetric flow rate control portion 70 may control the volumetric flow rate of the liquid 40 so that the volumetric flow rate of the liquid 40 supplied to the trunk tube 12-1 becomes greater than the volumetric flow rate of the liquid 40 supplied to the trunk tube 12-2. The volumetric flow rate control portion 70 may control the volumetric flow rate of the liquid 40 so that the volumetric flow rate of the liquid 40 supplied to the trunk tube 12-2 is greater than the volumetric flow rate of the liquid 40 supplied to the trunk tube 12-3. The ratio of the volumetric flow rate of the liquid 40 supplied to the trunk tube 12-3, the volumetric flow rate of the liquid 40 supplied to the trunk tube 12-2, and the volumetric flow rate of the liquid 40 supplied to the trunk tube 12-1 is 1:2:9, for example.

As described above, the liquid 40 is, for example, sea water or an alkaline liquid. When the liquid 40 is an alkaline liquid, the liquid 40 may be an alkaline liquid to which at least one of sodium hydroxide (NaOH) and sodium bicarbonate (Na₂CO₃) has been added.

The exhaust gas 30 includes harmful substances such as a sulfur oxide (SOₓ). The sulfur oxide (SOₓ) is, for example, sulfurous acid gas (SO₂). When the liquid 40 is a sodium hydroxide (NaOH) solution, the reaction between sulfurous acid gas (SO₂) contained in the exhaust gas 30 and sodium hydroxide (NaOH) is shown in the following chemical formula 1.

[Chemical Formula 1] SO₂ + Na⁺ + OH⁻ → Na + HSO₃⁻

As shown in Chemical Formula 1, sulfurous acid gas (SO₂) is chemically reacted to form hydrogen sulfite ion (HSO₃⁻). The liquid 40 turns into an exhaust liquid 46 including hydrogen sulfite ion (HSO₃⁻) by the chemical reaction. The exhaust liquid 46 may be discharged to the outside of the exhaust gas treatment apparatus 100 from the drainage pipe 20.

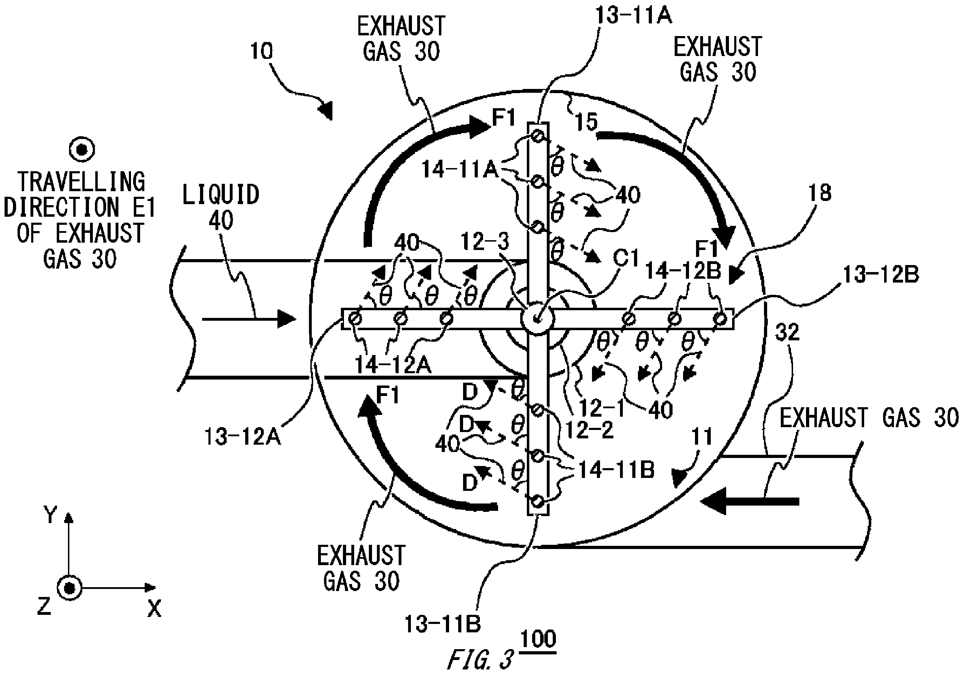

Fig. 3 illustrates one example of a case where the exhaust gas treatment apparatus 100 illustrated in Fig. 1 and Fig. 2 is seen from the travelling direction E1 of the exhaust gas 30. In Fig. 3, the power apparatus 50, the pump 60, the volumetric flow rate control portion 70, the spinning portion 80 and the exhaust gas outlet 17 are omitted.

The trunk tube 12-1, the trunk tube 12-2 and the trunk tube 12-3 are provided in the interior of the reaction tower 10. The trunk tube 12-1, the trunk tube 12-2 and the trunk tube 12-3 may be in a cylindrical shape having the central axis parallel to the Z axis. In the XY surface, the position of the central axis of the trunk tube 12-1, the trunk tube 12-2, and the trunk tube 12-3 may be the same as the position of the central axis of the reaction tower 10. That is, the trunk tube 12-1, the trunk tube 12-2, the trunk tube 12-3 and the reaction tower 10 may be arranged in concentric circles when seen from the travelling direction E1 of the exhaust gas 30. In Fig. 3, the position of the central axis is illustrated as position C1. In the present example, the trunk tube 12-2 is arranged under the trunk tube 12-3, and the trunk tube 12-1 is arranged under the trunk tube 12-2.

In the XY surface, the cross-sectional area of the trunk tube 12 on the exhaust gas inlet 11 side (refer to Fig. 1) may be larger than the cross-sectional area of the trunk tube 12 on the exhaust gas outlet 17 side (refer to Fig. 1). In the present example, the cross-sectional area of the trunk tube 12-1 is larger than the cross-sectional area of the trunk tube 12-2, and the cross-sectional area of the trunk tube 12-2 is larger than the cross-sectional area of the trunk tube 12-3.

The discharge ion portion 14 discharges the liquid 40 to the interior of the reaction tower 10. The discharge ion portion 14 discharges the liquid 40 in a direction that forms the predetermined angle θ with the extending direction of the branch tube 13. In Fig. 3, the directions in which the liquid 40 is discharged from the discharge ion portion 14-11 and the discharge ion portion 14-12 to the gas treatment portion 18 are illustrated with dashed arrows.

In the present example, the direction in which the liquid 40 is discharged from the discharge ion portion 14-11A is one direction in the direction that forms the angle θ with the extending direction of the branch tube 13-11, and the direction in which the liquid 40 is discharged from the discharge ion portion 14-11B is the other direction in the direction that forms the angle θ with the extending direction of the branch tube 13-11. The direction in which the liquid 40 is discharged from the discharge ion portion 14-1A, the discharge ion portion 14-3A, the discharge ion portion 14-5A, the discharge ion portion 14-7A, and the discharge ion portion 14-9A may be the one direction. The direction in which the liquid 40 is discharged from the discharge ion portion 14-1B, the discharge ion portion 14-3B, the discharge ion portion 14-5B, the discharge ion portion 14-7B, and the discharge ion portion 14-9B may also be the other direction.

In the present example, the direction in which the liquid 40 is discharged from the discharge ion portion 14-12A is one direction in the direction that forms the angle θ with the extending direction of the branch tube 13-12, and the direction in which the liquid 40 is discharged from the discharge ion portion 14-12B is the other direction in the direction that forms the angle θ with the extending direction of the branch tube 13-12. The direction in which the liquid 40 is discharged from the discharge ion portion 14-2A, the discharge ion portion 14-4A, the discharge ion portion 14-6A, the discharge ion portion 14-8A, and the discharge ion portion 14-10A may also be the one direction. The direction in which the liquid 40 is discharged from the discharge ion portion 14-2B, the discharge ion portion 14-4B, the discharge ion portion 14-6B, the discharge ion portion 14-8B, and the discharge ion portion 14-10B may also be the other direction.

When seen from the travelling direction E1 of the exhaust gas 30, the exhaust gas introducing pipe 32 may be provided in a position that the extending line in the extending direction of the exhaust gas introducing pipe 32 does not overlap with the position C1 of the center of the reaction tower 10. The extending direction of the exhaust gas introducing pipe 32 refers to the travelling direction of the exhaust gas 30 passing through the exhaust gas inlet 11. By providing the exhaust gas introducing pipe 32 in the above-mentioned position, the exhaust gas 30 travels toward the exhaust gas outlet 17 from the exhaust gas inlet 11 while spinning through the gas treatment portion 18 in a spiral pattern (in a cyclone shape). In the present example, the exhaust gas 30 spins clockwise in the gas treatment portion 18 when seen from the travelling direction E1 of the exhaust gas 30. The spinning direction of the exhaust gas 30 is set as the spinning direction F1.

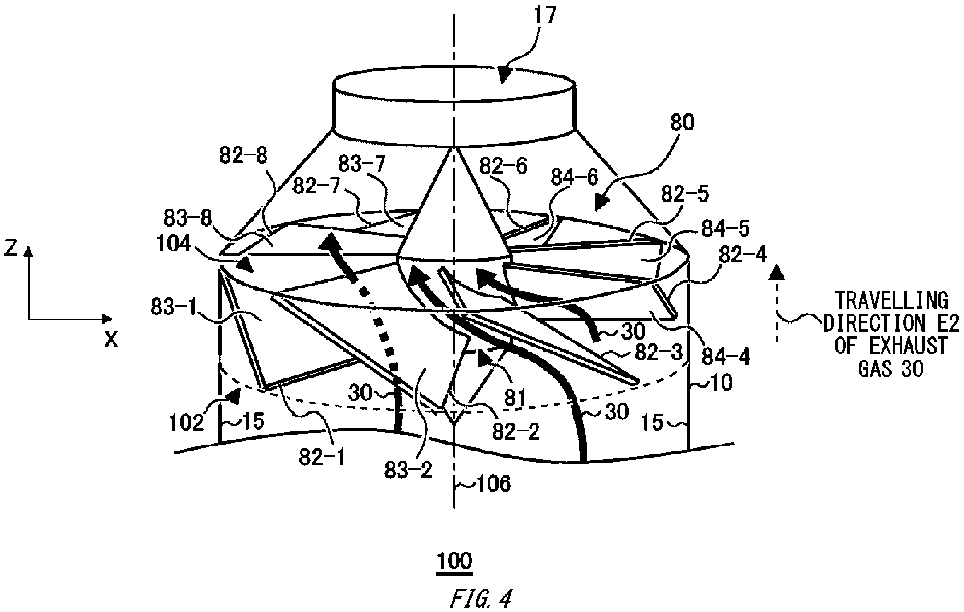

Fig. 4 illustrates a perspective view showing one example of the spinning portion 80 in Fig. 1. The spinning portion 80 of the present example is provided on the downstream side of the exhaust gas 30 from the liquid spraying portion 90 (refer to Fig. 1 and Fig. 2), in the travelling direction E1 of the exhaust gas 30 in the interior of the reaction tower 10. The spinning portion 80 of the present example is provided between the liquid spraying portion 90 and the exhaust gas outlet 17 (refer to Fig. 1), in the travelling direction E1 of the exhaust gas 30.

The spinning portion 80 spins the exhaust gas 30 in a predetermined spinning direction (the spinning direction F2 described below) when seen in a direction from the outgoing end 104 to the ingoing end 102 (the Z axis direction). As described below, the spinning direction F1 of the exhaust gas 30 spinning through the liquid spraying portion 90 when seen from the travelling direction E1 of the exhaust gas 30, is the same as the spinning direction F2 (described below) of the exhaust gas 30 when seen from the travelling direction E2 of the exhaust gas 30 in the spinning portion 80.

The spinning direction F1 being the same as the spinning direction F2 (described below) refers to that the spinning direction F1 seen from the travelling direction E1 being the same as the spinning direction F2 (described below) seen from the travelling direction E2. Even if the travelling direction E1 is not parallel to the travelling direction E2, when the spinning direction F1 seen from the travelling direction E1 is the same as the spinning direction F2 (described below) seen from the travelling direction E2, the spinning direction F1 may be considered as being the same as the spinning direction F2 (described below).

The exhaust gas 30 spun by the spinning portion 80 may spin around the predetermined central axis 106 when seen from the travelling direction E2 of the exhaust gas 30. In Fig. 4, the central axis 106 is illustrated by a chain line.

When seen from the travelling direction E2 of the exhaust gas 30, the central axis 106 may be parallel to the central axis of the cylindrical reaction tower 10, or may be not. In the present example, the central axis 106 is parallel to the central axis of the reaction tower 10.

The position of the central axis 106 when seen from the travelling direction E2 of the exhaust gas 30 may match the position of the central axis of the reaction tower 10 (position C1) when seen from the travelling direction E1 of the exhaust gas 30 (refer to Fig. 1), or may not match. In the present example, the position of the central axis 106 when seen from the travelling direction E2 matches the position C1 of the central axis of the reaction tower when seen from the travelling direction E1.

The spinning portion 80 of the present example includes a supporting column 81 and a wing portion 82. The supporting column 81 may be arranged in a position of the central axis 106 when seen from the travelling direction E2 of the exhaust gas 30. The supporting column 81 may be in a cylindrical shape having a central axis parallel to the central axis 106. When seen from the travelling direction E2 of the exhaust gas 30, the position of the central axis of the cylindrical supporting column 81 may match the position of the central axis 106.

In the present example, the wing portion 82 is connected to the supporting column 81. The spinning portion 80 may have a plurality of wing portions 82. The spinning portion 80 of the present example includes eight wing portions 82 (the wing portions 82-1 to 82-8).

The wing portion 82 may be in a board shape having a front surface 83 and a back surface 84. In the present example, the front surface 83 of the wing portion 82 is a visible surface when seen from the travelling direction E1 of the exhaust gas 30, and the back surface 84 of the wing portion 82 is a visible surface when seen from a direction opposite to the travelling direction E1. The wing portions 82-1 to 82-8 of the present example each includes front surfaces 83-1 to 83-8. The wing portions 82-1 to 82-8 of the present example each includes back surfaces 84-1 to 84-8. The back surface 84 is inclined at a predetermined angle to the XY surface. The front surface 83 may be inclined at a predetermined angle to the XY surface.

The exhaust gas 30, which travels to the exhaust gas outlet 17 while spinning through the liquid spraying portion 90, is introduced into the spinning portion 80 after passing through the liquid spraying portion 90. The exhaust gas 30 introduced into the spinning portion 80 is outgoing from the spinning portion 80 after passing through the interior of the spinning portion 80. In the present example, the exhaust gas 30 passes between the back surface 84 of one wing portion 82 and the front surface 83 of another wing portion 82 adjacent to the one wing portion 82. Using the wing portion 82-3 and the wing portion 82-4 as an example for description, the exhaust gas 30 passes between the back surface 84-4 of the wing portion 82-4 and the front surface 83-3 of the wing portion 82-3. In Fig. 4, the flow channel of this exhaust gas 30 is illustrates by a bold arrow.

The spinning portion 80 increases the velocity of the exhaust gas 30 introduced into the spinning portion 80, or controls the travelling direction of the exhaust gas 30. The spinning portion 80 may increase the velocity and control the travelling direction.

The spinning portion 80 of the present example increases the velocity of the exhaust gas 30 introduced into the spinning portion 80. The spinning portion 80 of the present example increases the velocity of the exhaust gas 30 in the interior of the spinning portion 80. The velocity of the exhaust gas 30 before being introduced into the spinning portion 80 is set as velocity V1. The velocity of the exhaust gas 30 after being led out from the spinning portion 80 is set as velocity V2. In the present example, the velocity V2 is greater than the velocity V1. The bold arrow illustrated in Fig. 4 is one example of the direction of the flow channel of the exhaust gas 30 passing through the spinning portion 80.

In the present example, when seen from the travelling direction E2 of the exhaust gas 30, the exhaust gas 30 travels from the ingoing end 102 to the outgoing end 104 while spinning around the surroundings of the supporting column 81. The velocity of the exhaust gas 30 refers to a velocity in the tangential direction of the flow channel of the exhaust gas 30 at any position in the XY surface in the flow of the exhaust gas 30 when seen from the travelling direction E2 of the exhaust gas 30.

In a standard state at the standard temperature of 0°C and standard pressure of 1 atm, the velocity VI may be from 5 m/s to 25 m/s, or from 10 m/s to 20 m/s. The velocity V2 may be from 30 m/s to 50 m/s, or from 35 m/s to 45 m/s.

The spinning portion 80 may guide the travelling direction of the exhaust gas 30 to be led out from the spinning portion 80 in a predetermined direction. The predetermined direction is, for example, the direction from the central axis 106 to the side wall 15 when seen from the travelling direction E2 of the exhaust gas 30, as described below.

The contact area between the liquid 40 and the exhaust gas 30 tends to increase as the droplet size of the liquid 40 becomes smaller. Therefore, in order to remove the harmful substances such as sulfur oxide (SOₓ) included in the exhaust gas 30, the liquid 40 to be discharged from the discharge ion portion 14 is desirably in a misting (mist) state. When the liquid 40 is in a misting state, a part of the liquid 40 discharged to the exhaust gas 30 tends to travel in a direction toward the exhaust gas outlet 17 accompanying the spinning of the exhaust gas 30 and its travelling to the exhaust gas outlet 17. When a part of the liquid 40 travels in the direction toward the exhaust gas outlet 17, the liquid 40 may be discharged outside the exhaust gas treatment apparatus 100 accompanying the exhaust gas 30. The liquid 40 may include hydrogen sulfite ion (HSO₃⁻) due to the contact with the exhaust gas 30. Therefore, when the liquid 40 including hydrogen sulfite ion (HSO₃⁻) has been discharged outside the exhaust gas treatment apparatus 100, the liquid 40 may corrode steel or other material outside the exhaust gas treatment apparatus 100.

The exhaust gas treatment apparatus 100 of the present example includes a spinning portion 80 on the downstream side of the exhaust gas 30 from the liquid spraying portion 90 in the travelling direction of the exhaust gas 30. Also, the spinning portion 80 of the present example increases the velocity of the exhaust gas 30 after passing through the liquid spraying portion 90. Therefore, the liquid 40 in a misting state accompanying the exhaust gas 30 and travelling toward the exhaust gas outlet 17 from the liquid spraying portion 90 tends to accumulate on the side wall 15 on the downstream side of the exhaust gas 30 from the spinning portion 80. When the liquid 40 in a misting state is accumulated on the side wall 15, the liquid 40 tends to be turned to a liquid film. When the liquid 40 is turned to a liquid film when the travelling direction E1 of the exhaust gas 30 has a vertical component (when the travelling direction E1 is other than horizontal), the liquid 40 tends to fall to the bottom surface 16 of the reaction tower 10. Therefore, the liquid 40 is less likely to be discharged outside the exhaust gas treatment apparatus 100 accompanying the exhaust gas 30. As a result, the exhaust gas treatment apparatus 100 in the present example is less likely to corrode steel or other material outside the exhaust gas treatment apparatus 100.

When the liquid 40 in a misting state is discharged outside the exhaust gas treatment apparatus 100, the steel or other material outside the exhaust gas treatment apparatus 100 tends to be corroded as the droplet size of the liquid 40 becomes larger. Therefore, the droplet size of the liquid 40 is desirably smaller than the predetermined size L of the droplet size. The size L is desirably 100 µm or less, further desirably 50 µm or less. In the exhaust gas treatment apparatus 100 of the present example, since the spinning portion 80 increases the velocity of the exhaust gas 30 after passing through the liquid spraying portion 90, the liquid 40 with a droplet size larger than the size L tends to accumulate on the side wall 15 due to the centrifugal force. Therefore, the liquid 40 with a droplet size larger than the size L is less likely to be discharged outside the exhaust gas treatment apparatus 100 accompanying the exhaust gas 30.

In order to increases the treatment amount of the exhaust gas 30 per unit time, the area of the gas treatment portion 18 when seen from the travelling direction E1 of the exhaust gas 30 is preferably large. In a case where the spinning portion 80 is provided inside the reaction tower 10, if the area of the gas treatment portion 18 when seen from the travelling direction E1 of the exhaust gas 30 is enlarged, if the velocity of the exhaust gas 30 spinning in the spinning direction F1 is constant, the centrifugal force applied to the liquid 40 in a misting state accompanying the exhaust gas 30 tends to decrease as moving away from the center position C1 (refer to Fig. 3). Also, if the area of the gas treatment portion 18 when seen from the travelling direction E1 of the exhaust gas 30 is enlarged, as the number of the branch tubes 13 and the discharge ion portions 14 tends to increase, the resistance to the flow of the exhaust gas 30 tends to increase due to the branch tubes 13 and the discharge ion portions 14. As a result, the velocity of the exhaust gas 30 tends to fall down.

In the exhaust gas treatment apparatus 100 of present example, the spinning portion 80 is provided inside the reaction tower 10. Therefore, as described above, in at least any case of a case where the centrifugal force applied on the liquid 40 in a misting state has fallen down, and a case where the velocity of the exhaust gas 30 has fallen down, the exhaust gas treatment apparatus 100 of the present example can increase the velocity of the exhaust gas 30. As a result, the liquid 40 in a misting state tends to accumulate on the side wall 15.

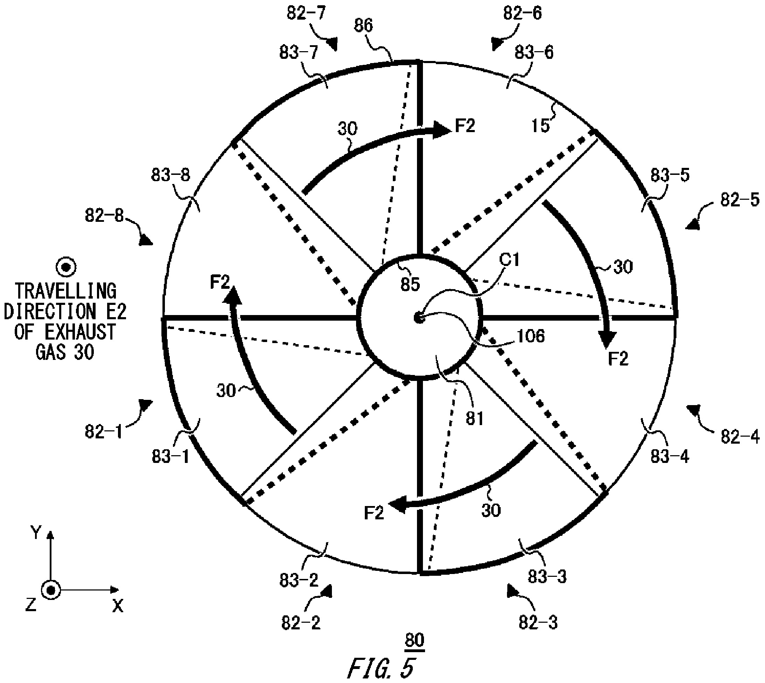

Fig. 5 illustrates one example when the spinning portion 80 illustrated in Fig. 1 and Fig. 4 is seen from the travelling direction E2 of the exhaust gas 30. In the present example, the spinning portion 80 includes a supporting column 81, which is provided on the central axis 106. In the present example, the supporting column 81 is provided in a position of the central axis 106. The supporting column 81 of the present example is in a cylindrical shape with a central axis parallel to the Z axis. The position of the central axis of the cylindrical supporting column 81 may match the position of the central axis 106. The position of the central axis of the cylindrical supporting column 81 may be a position C1 (refer to Fig. 3). A plurality of wing portions 82 may be provided to enclose the central axis 106 when seen from the travelling direction E2 of the exhaust gas 30. In the present example, the plurality of wing portions 82 are provided to enclose the surroundings of the supporting column 81 when seen from the travelling direction E2 of the exhaust gas 30.

The wing portion 82 of the present example includes one end 85 and the other end 86. One end 85 is an end portion of the wing portion 82, which is arranged on the central axis 106 side when seen from the travelling direction E2 of the exhaust gas 30. The other end 86 is an end portion of the wing portion 82, which is arranged on the outer peripheral side in the spinning direction F2 (described below) from the central axis 106 side when seen from the travelling direction E2 of the exhaust gas 30.

At least a part of the other end 86 of the wing portion 82 may be connected to the side wall 15 of the reaction tower 10 when seen from the travelling direction E2 of the exhaust gas 30. In the present example, the entire of the other end 86 of the wing portion 82 is connected to the side wall 15 when seen from the travelling direction E2. At least a part of the other end 86 of the wing portion 82 may be fixed on the side wall 15 of the reaction tower 10. At least a part of the other end 86 of the wing portion 82 may also be welded onto the side wall 15 of the reaction tower 10.

As described above, the spinning portion 80 of the present example includes eight wing portions 82 (the wing portions 82-1 to 82-8). In Fig. 5, the outer edges of the wing portion 82-1, the wing portion 82-3, the wing portion 82-5 and the wing portion 82-7 are illustrated with bold lines. In the present example, when seen from the travelling direction E2 of the exhaust gas 30, the entire of the interior of the reaction tower 10 is covered by the plurality of wing portions 82. That is, when seen from the travelling direction E2 of the exhaust gas 30, the positions of the other ends 86 (positions at the outer edges) of the eight wing portions 82 may be the same as the position of the side wall 15 of the reaction tower 10.

In the present example, the exhaust gas 30 spins clockwise in the spinning portion 80 when seen from the travelling direction E2 of the exhaust gas 30. The direction of spinning of the exhaust gas 30 is set as the spinning direction F2. The direction of spinning of the spinning direction F2 is the same as that of the spinning direction F1 (refer to Fig. 3).

The plurality of wing portions 82 may be arranged so that the exhaust gas 30 does not pass through the position of the central axis 106 when seen from the travelling direction E2 of the exhaust gas 30 inside the spinning portion 80. In the present example, the supporting column 81 is arranged in the position of the central axis 106 so that the exhaust gas 30 does not pass through the position of the central axis 106 inside the spinning portion 80. Due to arranging the plurality of wing portions 82 so that the exhaust gas 30 does not pass through the position of the central axis 106, the liquid 40 in a misting state accompanying the exhaust gas 30 also does not pass through the position of the central axis 106. The velocity of the exhaust gas 30 passing through the central axis 106 side from the side wall 15 tends to be less than the velocity of the exhaust gas 30 passing through the side wall 15 side from the central axis 106. Therefore, the centrifugal force applied on the liquid 40 in a misting state, which is included in the exhaust gas 30 passing through the central axis 106 side from the side wall 15, tends to be less than the centrifugal force applied on the liquid 40 in a misting state, which is included in the exhaust gas 30 passing through the side wall 15 side from the central axis 106. Therefore, in order to accumulate the liquid 40 in a misting state included in the exhaust gas 30 on the side wall 15, the exhaust gas 30 is preferably not to pass through the position of the central axis 106.

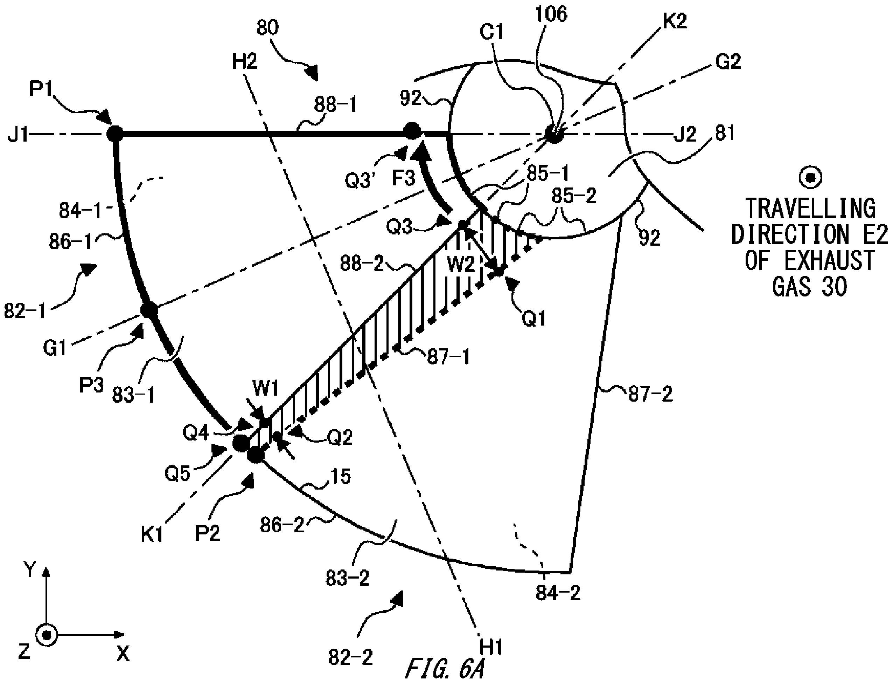

Fig. 6A illustrates an enlarged view of the supporting column 81, the wing portion 82-1 and the wing portion 82-2 in Fig. 5. The supporting column 81 may include a side surface 92. The side surface 92 of the present example is a side surface of the cylindrical supporting column 81. In Fig. 6A, the wing portions 82-3 to 82-8 are omitted.

In the present example, the wing portions 82-1 to 82-8 each includes one ends 85-1 to 85-5. In the present example, the wing portions 82-1 to 82-8 each includes the other ends 86-1 to 86-8. In Fig. 6A, the one ends 85-3 to 85-8 and the other ends 86-3 to 86-8 are not illustrated.

The wing portion 82 may include a first end portion 87 and a second end portion 88. In the present example, the first end portion 87 is an end portion of the wing portion 82, which is arranged on an outgoing end 104 (refer to Fig. 1 and Fig. 4) side from an ingoing end 102 (refer to Fig. 1 and Fig. 4) side in the travelling direction E2 of the exhaust gas 30. In the present example, the second end portion 88 is an end portion of the wing portion 82, which is arranged on the ingoing end 102 (refer to Fig. 1 and Fig. 4) side from the outgoing end 104 (refer to Fig. 1 and Fig. 4) side in the travelling direction E2 of the exhaust gas 30. The first end portion 87 and the second end portion 88 may extend from the one end 85 to the other end 86 in a straight line shape when seen from the travelling direction E2 of the exhaust gas 30.

In the present example, the wing portions 82-1 to 82-8 respectively includes first ends portion 87-1 to 87-8. In the present example, the wing portions 82-1 to 82-8 each includes second ends 88-1 to 88-8. In Fig. 6A, the first end portions 87-3 to 87-8 and the second end portions 88-3 to 88-8 are not illustrated.

In the present example, the wing portion 82-1 and the wing portion 82-2 are set as the first wing portion 82-1 and the second wing portion 82-2, respectively. When seen from the travelling direction E2 of the exhaust gas 30, the first wing portion 82-1 may be overlapped with the second wing portion 82-2. In the present example, a part of the first wing portion 82-1 and a part of the second wing portion 82-2 may be overlapped when seen from the travelling direction E2 of the exhaust gas 30. In Fig. 6A, the region where the first wing portion 82-1 and the second wing portion 82-2 are overlapped when seen from the travelling direction E2 is illustrated by hatching. In the present example, the first end portion 87-1 of the first wing portion 82-1 is overlapped with the second wing portion 82-2, and the second end portion 88-2 of the second wing portion 82-2 is overlapped with the first wing portion 82-1.

In the first end portion 87-1 of the first wing portion 82-1, the predetermined position on the central axis 106 side is set as a position Q1, and the position on the outer peripheral side (the side wall 15 side) in the spinning direction F2 (refer to Fig. 5) from the position Q1 is set as a position Q2. When seen from the travelling direction E2 of the exhaust gas 30, the position of the intersection point where a perpendicular line in the position Q1 of the first end portion 87-1 intersects with the second end portion 88-2 of the second wing portion 82-2 is set as a position Q3. When seen from the travelling direction E2 of the exhaust gas 30, the position of the intersection point where a perpendicular line in the position Q2 of the first end portion 87-1 intersects with the second end portion 88-2 of the second wing portion 82-2 is set as a position Q4.

The width of the overlap between the first wing portion 82-1 and the second wing portion 82-2 on the outer peripheral side (side wall 15 side) from the central axis 106 is set as width W1. The width of the overlap between the first wing portion 82-1 and the second wing portion 82-2 at the central axis 106 side is set as width W2. The width W1 and the width W2 are respectively, the distance between the position Q1 and the position Q2, and the distance between the position Q3 and the position Q4, when seen from the travelling direction E2 of the exhaust gas 30. The width W2 may be larger than the width W1. The width of the overlap between the first wing portion 82-1 and the second wing portion 82-2 may increase from the side wall 15 to the central axis 106 in a tapered shape when seen from the travelling direction E2 of the exhaust gas 30.

In the present example, the spinning portion 80 includes a supporting column 81 provided on the central axis 106. In the present example, the width of the overlap between the first wing portion 82-1 and the second wing portion 82-2 increases from the side wall 15 to the supporting column 81 in a tapered shape when seen from the travelling direction E2.

The position of the intersection point between the second end portion 88-1 of the first wing portion 82-1 and the side wall 15 is set as the position P1. The straight line passing through the position P1 and the position C1 of the center of the supporting column 81 is set as a line J1-J2. In Fig. 6A, the line J1-J2 is illustrated by a chain line. The line J1-J2 overlaps with the radius of the reaction tower 10 that passes through the position P1 when seen from the travelling direction E2 of the exhaust gas 30. The second end portion 88-1 may overlap with the line J1-J2.

The position of the intersection point between the second end portion 88-2 of the second wing portion 82-2 and the side wall 15 is set as the position Q5. The straight line passing through the position Q5 and the position C1 of the center of the supporting column 81 is set as a line K1-K2. In the Fig. 6A, the line K1-K2 is illustrated by a chain line. The line K1-K2 overlaps with the radius of the reaction tower 10 that passes through the position Q5 when seen from the travelling direction E2 of the exhaust gas 30. The second end portion 88-2 may overlap with the line K1-K2.

The position of the intersection point between the first end portion 87-1 of the first wing portion 82-1 and the side wall 15 is set as the position P2. In the present example, the other end 86-1 extends from the position P1 to the position P2 in an arc shape. In the other end 86-1 in an arc shape, the midpoint between the position P1 and the position P2 is set as a position P3. The straight line passing through the position P3 and the position C1 of the center of the supporting column 81 is set as a line G1-G2. In Fig. 6A, the line G1-G2 is illustrated by a chain line. It should be noted that the position Q5 may be arranged between the position P3 and the position P2 when seen from the travelling direction E2 of the exhaust gas 30.

The line H1-H2 illustrated in Fig. 6A is a straight line perpendicular to the line G1-G2 when seen from the travelling direction E2 of the exhaust gas 30, and a straight line parallel to the back surface 84-1. In Fig. 6A, the line H1-H2 is illustrated by a chain line. Details about the line H1-H2 is described below.

In the wing portion 82-1, the position corresponding to the position Q3 in the wing portion 82-2 is set as a position Q3'. The position Q3' corresponding to the position Q3 refers to that the distance from the one end 85-2 to the position Q3 in the second end portion 88-2 is equal to the distance from the one end 85-1 to the position Q3' in the second end portion 88-1.

The direction of spinning of the wing portion 82 is set as the spinning direction F3. Using the wing portion 82-1 and the wing portion 82-2 as an example for description, the spinning direction F3 refers to the direction from the first end portion 87 to the second end portion 88 in one wing portion 82, and the direction from the position Q3 in the wing portion 82-2 to the position Q3' in the wing portion 82-1. That is, the spinning direction F3 is the direction from the first end portion 87 to the second end portion 88 portion in one wing portion 82 and the direction of rotation around the central axis 106. In Fig. 6A, the spinning direction F3 is illustrated by a bold arrow.

When seen from the travelling direction E2 of the exhaust gas 30, the spinning direction F3 may be the same as the spinning direction F1 (refer to Fig. 3) in which the exhaust gas 30 spins through the liquid spraying portion 90. By making the spinning direction F3 be same as the spinning direction F1, the spinning portion 80 can increase the velocity of the exhaust gas 30 while maintaining the spinning direction F1 of the exhaust gas 30.

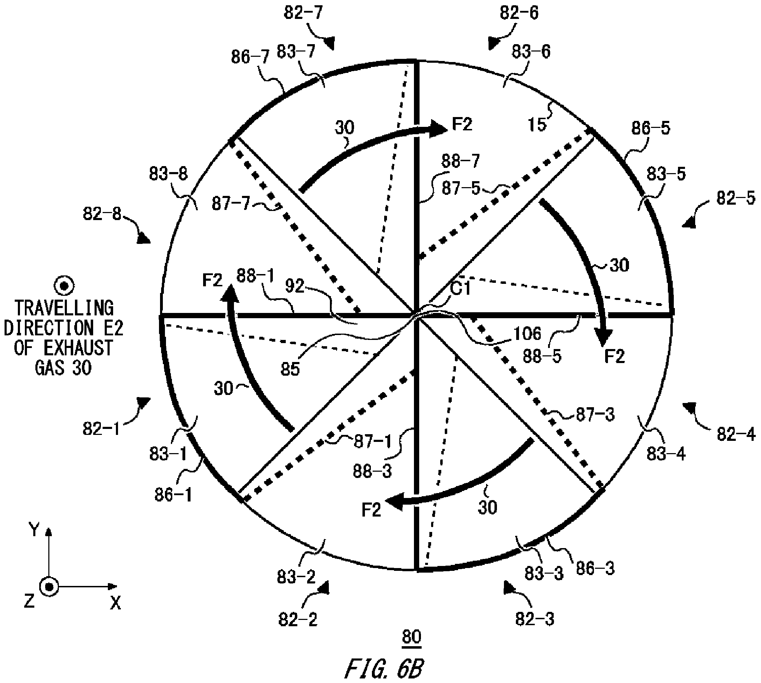

Fig. 6B illustrates another example when the spinning portion 80 illustrated in Fig. 1 and Fig. 4 is seen from the travelling direction E2 of the exhaust gas 30. The spinning portion 80 of the present example is different from the spinning portion 80 illustrated in Fig. 5 in not including a supporting column 81. In the present example, the positions of the one ends 85 of wing portions 82-1 to 82-8 match the position of the central axis 106, when seen from the travelling direction E2 of the exhaust gas 30. That is, in the present example, the one ends 85-1 to 85-5 of each of the wing portions 82-1 to 82-8 are connected in the position of the central axis 106. In this manner, the exhaust gas 30 passing through the interior of the spinning portion 80 is less likely to pass through the position of the central axis 106 when seen from the travelling direction E2 of the exhaust gas 30.

The second ends 88-1 to 88-8 of each of the wing portions 82-1 to 82-8 may extend from the position of the central axis 106 to the position of the side wall 15, when seen from the travelling direction E2 of the exhaust gas 30. In the present example, the second ends 88-1 to 88-8 extend from the position of the central axis 106 to the position of the side wall 15 in a straight line shape, when seen from the travelling direction E2 of the exhaust gas 30.

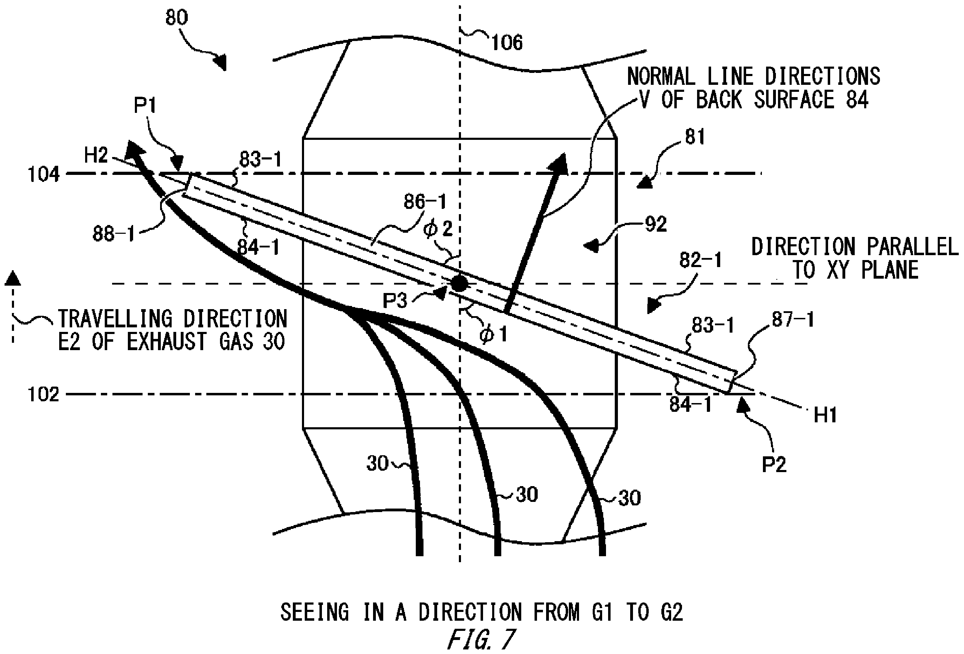

Fig 7 illustrates one example of a side view seen in a direction along a line G1-G2 from G1 to G2 of Fig. 6A in the spinning portion 80 illustrated in Fig. 4. In Fig 7, the wing portions 82-2 to 82-8 are omitted. In Fig 7, the direction passing through the central axis 106 (the position C1 of the center of the supporting column 81), which is parallel to the travelling direction E2 of the exhaust gas 30, is illustrated by a thin dashed line. The direction passing through the position P3 in a side view of the Fig 7, which is parallel to the XY surface, is illustrated by a thick dashed line. In the side view of the Fig 7, one end 85 of the wing portion 82 is arranged in a position overlapping with the other end 86.

In the side view of the Fig 7, the position of the ingoing end 102 and the position of the outgoing end 104 in the travelling direction E2 of the exhaust gas 30 is illustrated in a chain line. In the present example, the ingoing end 102 and the outgoing end 104 are parallel to the XY surface. In the present example, the positions of the ingoing end 102 and the outgoing end 104 in the travelling direction E2 of the exhaust gas 30 respectively matches the position of first end portion 87 and the position of the second end portion 88.

The first wing portion 82-1, taking the line G1-G2 illustrated in Fig. 6A as the central axis, may incline in a direction that forms a predetermined angle with the travelling direction E2 of the exhaust gas 30 in the side view of Fig 7. In the side view of Fig 7, the back surface 84-1 and the front surface 83-1 may respectively form an angle ϕ1 and an angle ϕ2 with the travelling direction E2 of the exhaust gas 30.

The angle ϕ1 and the angle ϕ2 may be equal or may be different. In the present example, the angle ϕ1 and the angle ϕ2 are equal. The angle ϕ1 and the angle ϕ2 may be from 10 degrees to 80 degree, or from 20 degrees to 70 degree, or from 30 degrees to 60 degree.

In the spinning portion 80 (refer to Fig. 1, Fig. 4 and Fig. 5), the travelling direction of the exhaust gas 30 from the ingoing end 102 to the outgoing end 104 is changed by the back surface 84 of the wing portion 82. The exhaust gas 30 with the travelling direction changed by the back surface 84 travels to the outside of the spinning portion 80 from the outgoing end 104 after passing through the vicinity of the second end portion 88. In Fig 7, this travelling direction of the exhaust gas 30 is illustrated with a bold arrow. The angle ϕ1 may be determined based on the travelling velocity of the exhaust gas 30 travelling in the direction from the ingoing end 102 to the outgoing end 104 passing through the interior of the spinning portion 80.

The normal line direction of the back surface 84 of the wing portion 82 is set as direction V. Herein, the normal line direction of the back surface 84 refers to the direction perpendicular to the back surface 84, from the back surface 84 to the front surface 83.

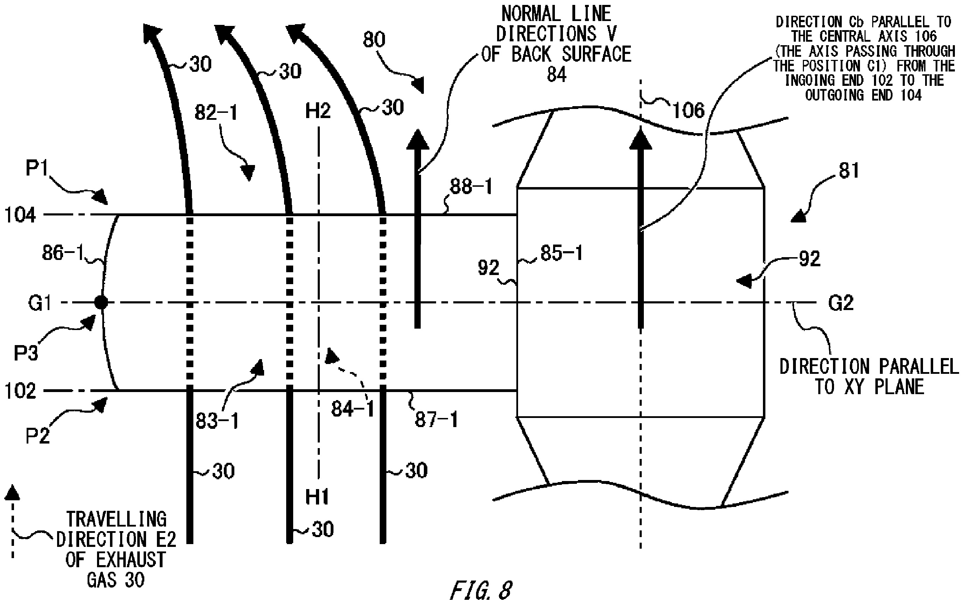

Fig. 8 illustrates one example of a side view seen in a direction along a line H1-H2 from H1 to H2 of Fig. 6A in the spinning portion 80 illustrated in Fig. 4. In Fig. 8, the wing portions 82-2 to 82-8 are omitted. In Fig. 8, the normal line directions V of the back surface 84 (refer to Fig. 7) are illustrated together. Also, the direction Cb parallel to the central axis 106 (the central axis of the supporting column 81 (the axis passing through the position C1 (refer to Fig. 6A))), which is from the ingoing end 102 to the outgoing end 104, is illustrated as a bold line. It should be noted that the direction Cb is the same as the travelling direction E2 of the exhaust gas 30. Also, when the central axis of the cylindrical supporting column 81 is parallel to the direction Cb, the direction Cb is parallel to the side surface 92.

In the present example, the direction Cb is the same as the normal line direction V of the back surface 84. Therefore, the exhaust gas 30 passing through the region overlapping with the back surface 84 of the wing portion 82 in a side view of the Fig. 8 tends to travel in a direction same as the direction Cb in the side view of Fig. 8. In Fig. 8, the exhaust gas 30 passing through the region overlapping with the back surface 84 is illustrated by a bold dashed line in a straight line shape.

As described above, the spinning portion 80 of the present example increases the velocity of the exhaust gas 30 after passing through the liquid spraying portion 90 (refer to Fig. 1). Therefore, after passing through the region overlapping with the back surface 84 of the wing portion 82, the exhaust gas 30 travelling from the outgoing end 104 (the second end portion 88 of the wing portion 82 in the present example) to the outside of the spinning portion 80 tends to pass through the outer peripheral side (the side wall 15 side than the center C1 (refer to Fig. 6A) side of the reaction tower 10) from the central axis 106 in the spinning direction F2 (refer to Fig. 5), when seen from the travelling direction E2 of the exhaust gas 30. Therefore, the liquid 40 in a misting state accompanying the exhaust gas 30 tends to accumulate on the side wall 15 of the reaction tower 10. In Fig. 8, the exhaust gas 30 travelling from the outgoing end 104 (the second end portion 88 in the present example) to the outside of the spinning portion 80 is illustrated by curved solid arrows.

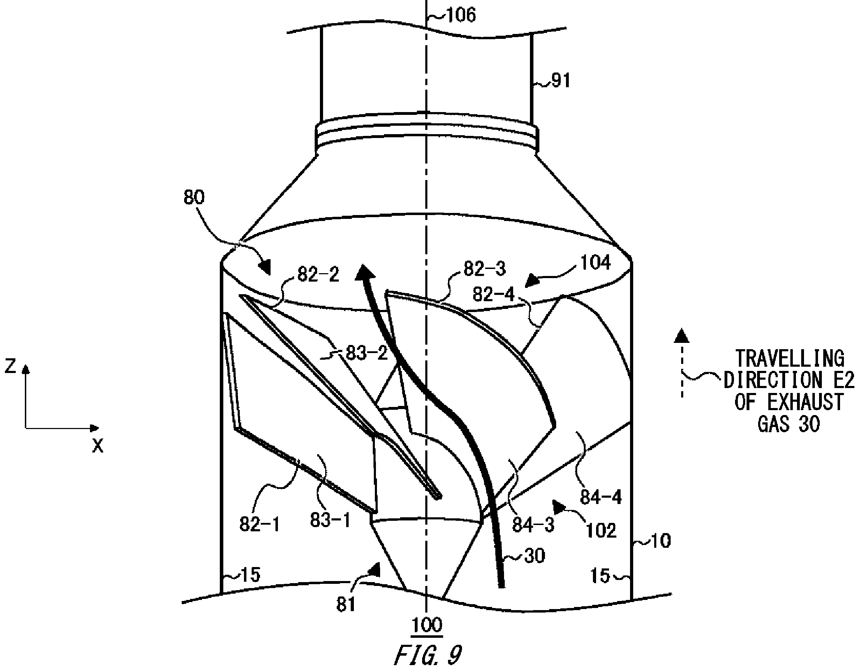

Fig 9 illustrates a perspective view showing another example of the spinning portion 80 in Fig. 1. As described below, in the spinning portion 80 illustrated in Fig 9, the normal line direction V (refer to Fig. 8) of the back surface 84 of the wing portion 82 forms an acute angle with the direction Cb (refer to Fig. 8). The spinning portion 80 of the present example is different from the examples illustrated in Fig. 4 to Fig 8 in this point. In the spinning portion 80 of the present example, the positions of the supporting column 81 and the wing portion 82 when seen from the travelling direction E2 of the exhaust gas 30 may be the same as those shown in Fig. 5 and Fig. 6A. In Fig 9, one example of the path of the exhaust gas 30 is illustrated by a thick solid arrow.

In the present example, the ingoing end 102 of the spinning portion 80 may be a conical end portion passing through the first end portion 87 of the plurality of wing portions 82 (refer to Fig. 6A to Fig. 8). In the present example, the outgoing end 104 of the spinning portion 80 is a conical end portion passing through the second end portion 88 of the plurality of wing portions 82 (refer to Fig. 6A to Fig. 8).

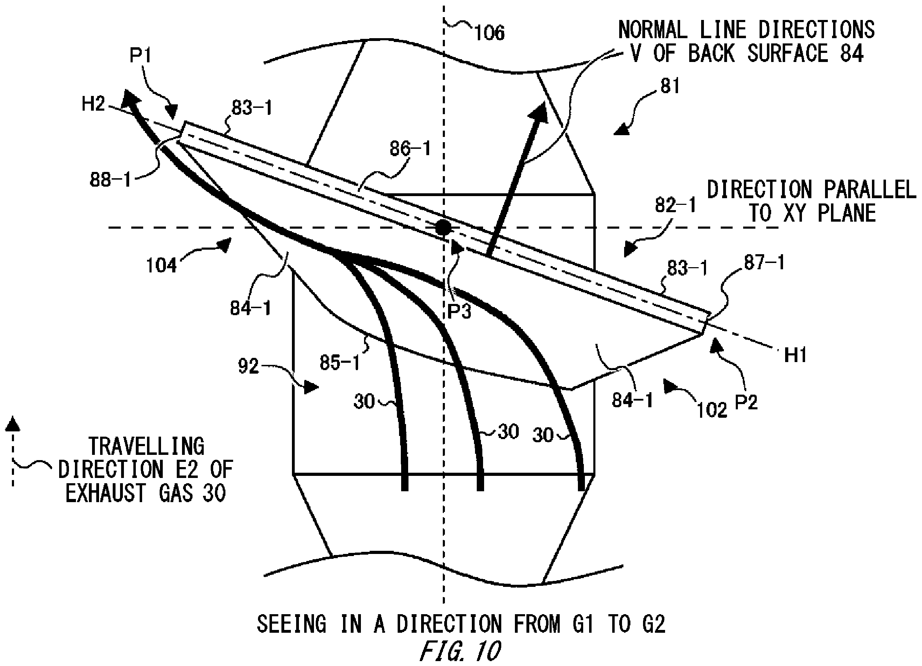

Fig. 10 illustrates one example of a side view seen in a direction along the line G1-G2 from G1 to G2 of Fig. 6A in the spinning portion 80 illustrated in Fig 9. In Fig. 10, the wing portions 82-2 to 82-8 are omitted. In the present example, the other end 86 of the wing portion 82 is arranged on the outgoing end 104 side from the one end 85. Therefore, in the side view of the Fig. 10, the one end 85 can be seen.

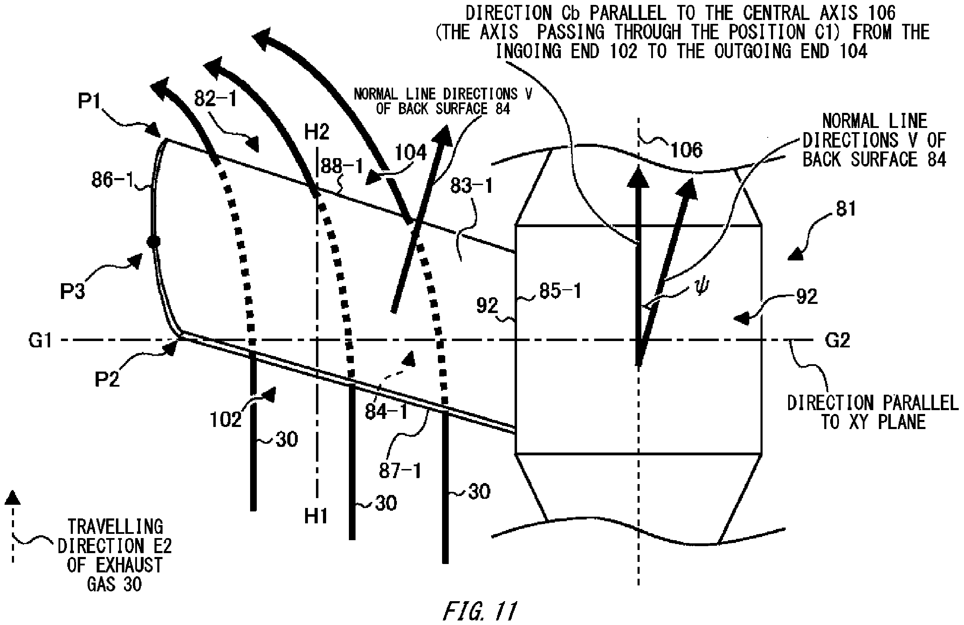

Fig. 11 illustrates one example of a side view when seen in a direction along the line H1-H2 from H1 to H2 of Fig. 6A in the spinning portion 80 illustrated in Fig 9. In Fig. 11, the wing portions 82-2 to 82-8 are omitted. In Fig. 11, the normal line directions V (refer to Fig. 7) of the back surface 84 are illustrated together. To make the direction of the normal line direction V easier to understand, arrows illustrating the normal line direction V are illustrated from the start points of the arrows illustrating the direction Cb.

In the present example, the normal line direction V forms an acute angle Ψ with the direction Cb. Herein, the angle Ψ formed by the normal line direction V and the direction Cb is referred to as a sweepback angle Ψ. In the present example, since the normal line direction V forms the sweepback angle Ψ with the direction Cb, the exhaust gas 30 passing through the downward of the back surface 84 of the wing portion 82 tends to travel to the side wall 15 side from the central axis 106 (the supporting column 81 side) in the side view of Fig. 10. Therefore, after passing through the region overlapping with the back surface 84 of the wing portion 82 in Fig. 11, the exhaust gas 30 travelling from the outgoing end 104 of the wing portion 82 (the second end portion 88) to the outside of the spinning portion 80 further tends to travel through the side wall 15 side than the example illustrated in Fig. 8. Therefore, the liquid 40 in a misting state accompanying the exhaust gas 30 further tends to accumulate on the side wall 15 of the reaction tower 10 than the example illustrated in Fig. 8. In the side view of Fig. 10, the exhaust gas 30 passing through the region overlapping with the back surface 84 is illustrated by curved bold dashed lines. In Fig. 10, the exhaust gas 30 passing from the outgoing end 104 (the second end portion 88) to the outside of the spinning portion 80 is illustrated by curved solid arrows.

The sweepback angle Ψ may be between 0 degree and 60 degree. The sweepback angle Ψ may be from 15 degrees to 45 degree. The sweepback angle Ψ is, for example, 30 degree.

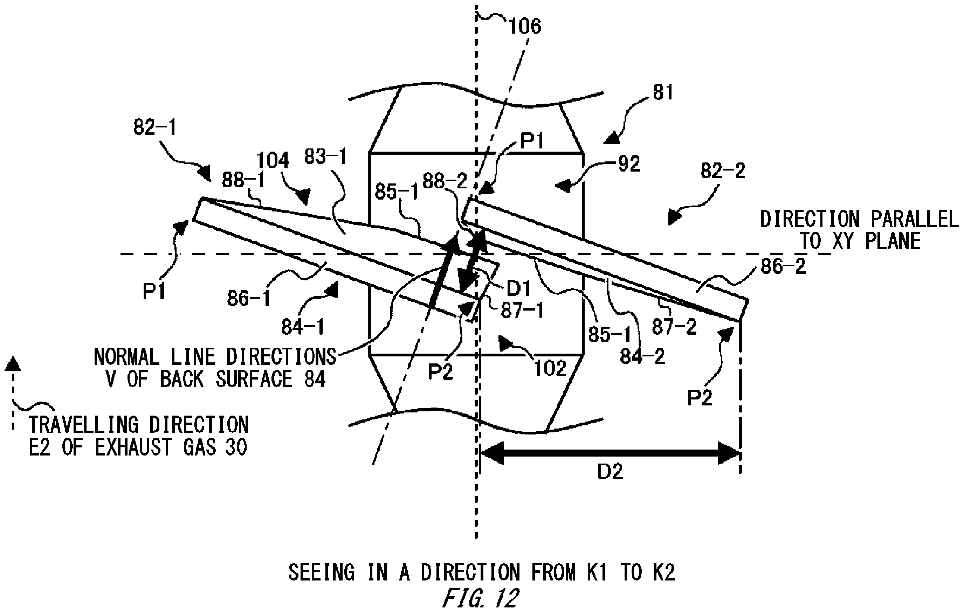

Fig. 12 illustrates one example of a side view when seen in a direction along the line K1-K2 from K1 to K2 of Fig. 6A in the spinning portion 80 illustrated in Fig. 4. In Fig. 12, the wing portions 82-3 to 82-8 are omitted. The present example uses the case where the sweepback angle Ψ formed by the normal line direction V of the back surface 84 and the direction Cb (refer to Fig. 11) is 0 degree (that is, the case where the normal line direction V is parallel to the direction Cb) as an example for description.

The distance between the first wing portion 82-1 and the second wing portion 82-2 is set as a distance D1. In the present example, the distance D1 is the distance between the front surface 83-1 of the first wing portion 82-1 and the back surface 84-2 of the second wing portion 82-2, in the normal line direction V of the back surface 84-1 of the first wing portion 82-1. The distance between the position P2 of the first wing portion 82-1 (refer to Fig. 6A, Fig 7 and Fig. 8) and the position P2 of the second wing portion 82-2 is set as a distance D2.

The distance D1 may be less than the distance D2. By making the distance D1 less than the distance D2, the velocity V2 of the exhaust gas 30 after passing through the spinning portion 80 tends to be greater than the velocity V1 of the exhaust gas 30 before passing through the spinning portion 80. In this manner, the liquid 40 in a misting state accompanying the exhaust gas 30 after passing through the spinning portion 80 tends to accumulate on the side wall 15 of the reaction tower 10.

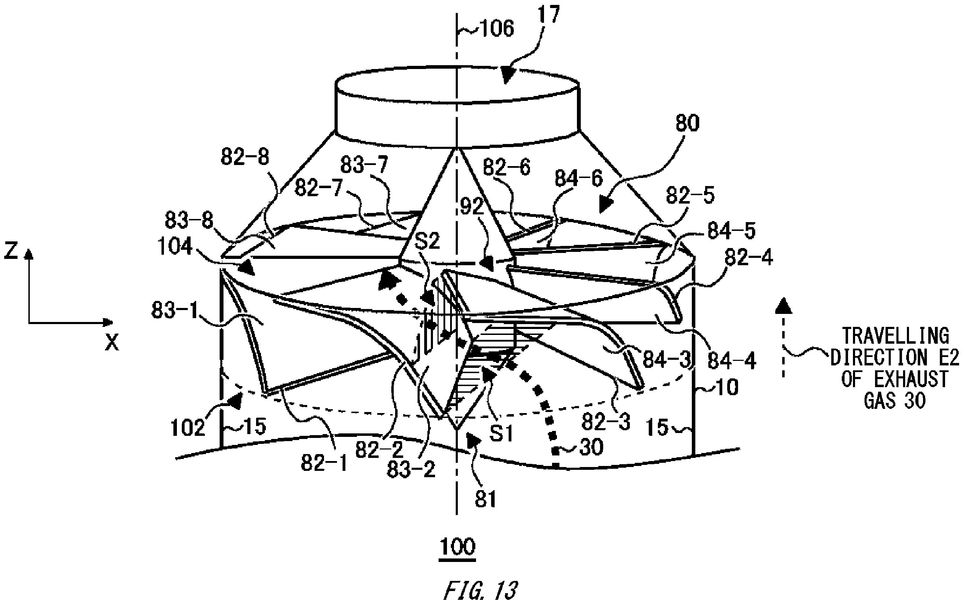

Fig. 13 illustrates a perspective view showing another example of the spinning portion 80 in Fig. 1. The back surface 84 of one wing portion 82 in the spinning portion 80 may include a plurality of planes in directions different from each other. The front surface 83 of one wing portion 82 in the spinning portion 80 may include a plurality of planes in directions different from each other. A direction of the surface refers to the normal line direction of the surface. In the present example, the back surface 84 of one wing portion 82 includes two planes in directions different from each other and a curved surface connecting the two planes. In the present example, the front surface 83 of one wing portion 82 includes two planes in directions different from each other and a curved surface connecting the two planes. The spinning portion 80 of the present example is different from the spinning portion 80 illustrated in Fig. 4 in this point. In the present example, one wing portion 82 has a convex shape on the outgoing end 104 side in the side view of the reaction tower 10.

In the spinning portion 80 of the present example, the positions of the supporting column 81 and the wing portion 82, when seen from the travelling direction E2 of the exhaust gas 30, may be the same as those in Fig. 5 and Fig. 6A. In Fig. 13, one example of the path of the exhaust gas 30 is illustrated by a bold dashed arrow.

In the example illustrated in Fig. 13, the normal line direction V of the back surface 84 of the wing portion 82 does not form the sweepback angle Ψ with the direction Cb (refer to Fig. 11). In the example illustrated in Fig. 13, the normal line direction V may form the sweepback angle Ψ with the direction Cb.

In the path of the exhaust gas 30, which is surrounded by the front surface 83-2 of the wing portion 82-2, the back surface 84-3 of the wing portion 82-3, the side wall 15 of the reaction tower 10 and the side surface 92 of the supporting column 81, the areas at the upstream and the downstream side in the travelling direction E2 of the exhaust gas 30 are set as area S1 and area S2. In Fig. 13, each of the cross-sections of the area S1 and the area S2 is illustrated by hatching.

The area S2 may be smaller than the area S1. By making the area S2 smaller than the area S1, the velocity V2 of the exhaust gas 30 after passing through the spinning portion 80 tends to be greater than the velocity VI of the exhaust gas 30 before passing through the spinning portion 80. Therefore, the liquid 40 in a misting state accompanying the exhaust gas 30 after passing through the spinning portion 80 tends to accumulate on the side wall 15 of the reaction tower 10.

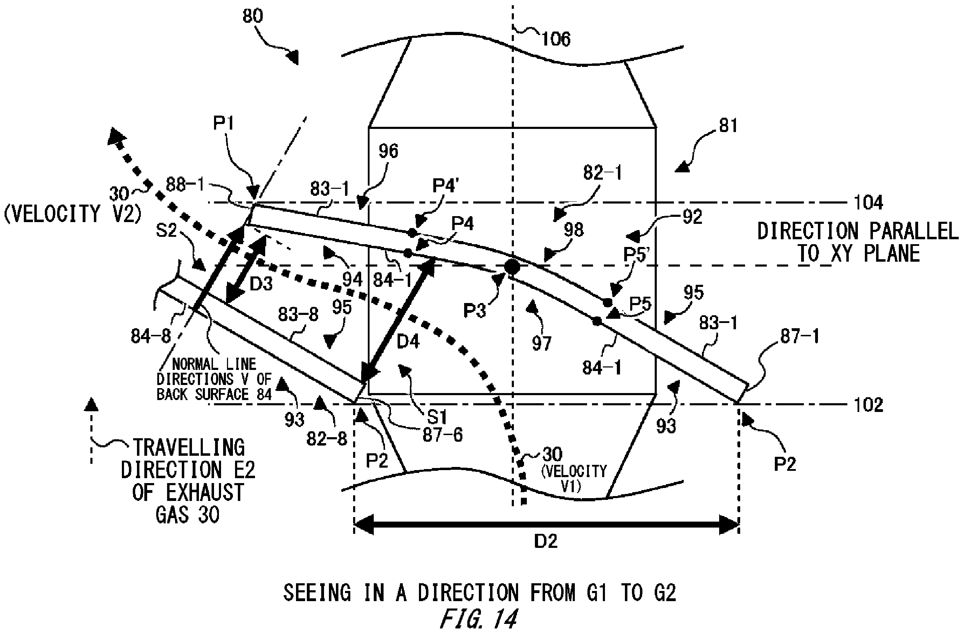

Fig. 14 illustrates one example of a side view when seen in a direction along the line G1-G2 from G1 to G2 of Fig. 6A in the spinning portion 80 illustrated in Fig. 13. In Fig. 14, the wing portions 82-2 to 82-7 are omitted. In Fig. 14, a part of the wing portions 82-8 that is not illustrated in Fig. 6A are illustrated together.

The back surface 84 of the wing portion 82 of the present example is different from the wing portion 82 illustrated in Fig 7 and Fig. 12, in the point of including a first surface 93 and a second surface 94. The second surface 94 is provided on the outgoing end 104 side from the first surface 93. The front surface 83 of the wing portion 82 of the present example is different from the wing portion 82 illustrated in Fig 7 and Fig. 12, in the point of including the first surface 95 and the second surface 96. The second surface 96 is provided on the outgoing end 104 side from the first surface 95. In the present example, the first surface 93, the second surface 94, the first surface 95 and the second surface 96 are planes.

In the side view of Fig. 14, the end positions of the outgoing end 104 sides of the first surface 93 and the first surface 95 are respectively set as the position P5 and the position P5', and the end positions of the ingoing end 102 sides of the second surface 94 and the second surface 96 are respectively set as a position P4 and a position P4'. In Fig. 14, the position P4, the position P4', the position P5 and the position P5' are illustrated by black circle signs. However, the circle signs only indicate the end positions of the first surface 93, the first surface 95, the second surface 94 and the second surface 96, respectively, and are not real.

The back surface 84 and the front surface 83 of the wing portion 82 of the present example respectively include a third surface 97 and a third surface 98. In the present example, the third surface 97 and the third surface 98 are curved surfaces. In the side view of Fig. 14, the position P4 and position P5 are respectively the end positions of the outgoing end 104 side and the ingoing end 102 side of the third surface 97, and the position P4' and the position P5' are respectively the end positions of the outgoing end 104 side and the ingoing end 102 side of the third surface 98.

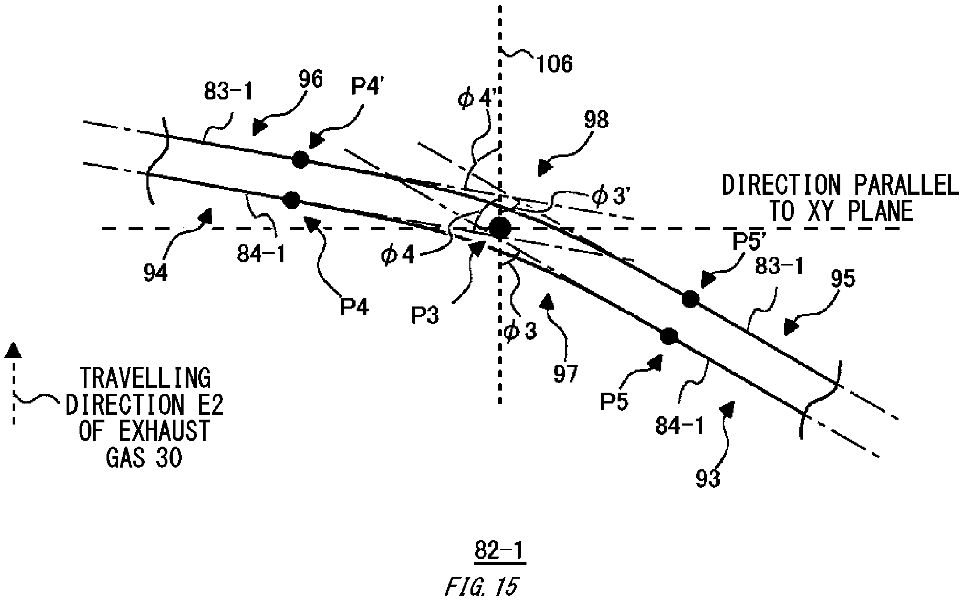

Fig. 15 illustrates enlarged views of a third surface 97 and a third surface 98 of the wing portion 82-1, a part of a first surface 93 and a part of a first surface 95, and a part of a second surface 94 and a part of the second surface 96 in Fig. 14. In Fig. 15, in order to make the angle formed by the travelling direction E2 of the exhaust gas 30 with each of the first surface 93, the second surface 94, the first surface 95 and the second surface 96 to be easier to understand, the directions of the first surface 93, the second surface 94, the first surface 95 and the second surface 96 are illustrated by chain lines.

The angle formed by the first surface 93 and the travelling direction E2 of the exhaust gas 30 is set as a first angle ϕ3. The angle formed by the second surface 94 and the travelling direction E2 of the exhaust gas 30 is set as a second angle ϕ4. The second angle ϕ4 is different from the first angle ϕ3. In the present example, the second angle ϕ4 is larger than the first angle ϕ3. That is, when the XY surface is a horizontal surface, in the present example, the inclination of the second surface 94 to the horizontal direction is smaller than the inclination of the first surface 93 to the horizontal direction.

The angle formed by the first surface 95 and the travelling direction E2 of the exhaust gas 30 is set as a third angle ϕ3'. The angle formed by the second surface 96 and the travelling direction E2 of the exhaust gas 30 is set as a fourth angle ϕ4'. The fourth angle ϕ4' may be different from the third angle ϕ3'. The fourth angle ϕ4' may be larger than the third angle ϕ3'.

The third angle ϕ3' may be equal to the first angle ϕ3, or may be different. That is, the first surface 93 and the first surface 95 may be parallel or may be not parallel. The fourth angle ϕ4' may be equal to the second angle ϕ4, or may be different. That is, the second surface 94 and the second surface 96 may be parallel or may be not parallel. In the present example, the third angle ϕ3' is equal to the first angle ϕ3, and the fourth angle ϕ4' is equal to the second angle ϕ4.

Return to Fig. 14 again for description. In Fig. 14, the exhaust gas 30 passing through between the wing portion 82-8 and the wing portion 82-1 is illustrated by a bold dashed arrow. In the path of the exhaust gas 30, between the first wing portion (the wing portion 82-8) and the second wing portion (the wing portion 82-1), the distance on the outgoing end 104 side is set as a distance D3, and the distance on the ingoing end 102 side is set as distance D4. In the present example, the distance D3 is the distance between the front surface 83-8 of the wing portion 82-8 and the second end portion 88-1 of the wing portion 82-1 in the normal line direction V of the back surface 84-8 of the wing portion 82-8. In the present example, the distance D4 is the distance between the first end portion 87-8 of the wing portion 82-8 and the back surface 84-1 of the wing portion 82-1 in the normal line direction V.

The distance D3 may be less than the distance D4. In the present example, since the second angle ϕ4 is larger than the first angle ϕ3, the distance D3 tends to be less than the distance D4. Therefore, the area S2 (refer to Fig. 13) surrounded by the front surface 83-8 of the wing portion 82-8, the second end portion 88-1 of the wing portion 82-1, the side wall 15 and the side surface 92 tends to be smaller than the area S1 (refer to Fig. 13) surrounded by the first end portion 87-8 of the wing portion 82-8, the back surface 84-1 of the wing portion 82-1, the side wall 15 of the reaction tower 10 and the side surface 92 of the supporting column 81. Therefore, as described above, the velocity V2 of the exhaust gas 30 after passing through the spinning portion 80 tends to be greater than the velocity VI of the exhaust gas 30 before passing through the spinning portion 80. Therefore, the liquid 40 in a misting state accompanying the exhaust gas 30 after passing through the spinning portion 80 tends to accumulate on the side wall 15 of the reaction tower 10. When the distance D3 is less than the distance D4, and the normal line direction V of the wing portion 82 forms a sweepback angle ψ (refer to Fig. 11) with the direction Cb, the liquid 40 in a misting state further tends to accumulate on the side wall 15.

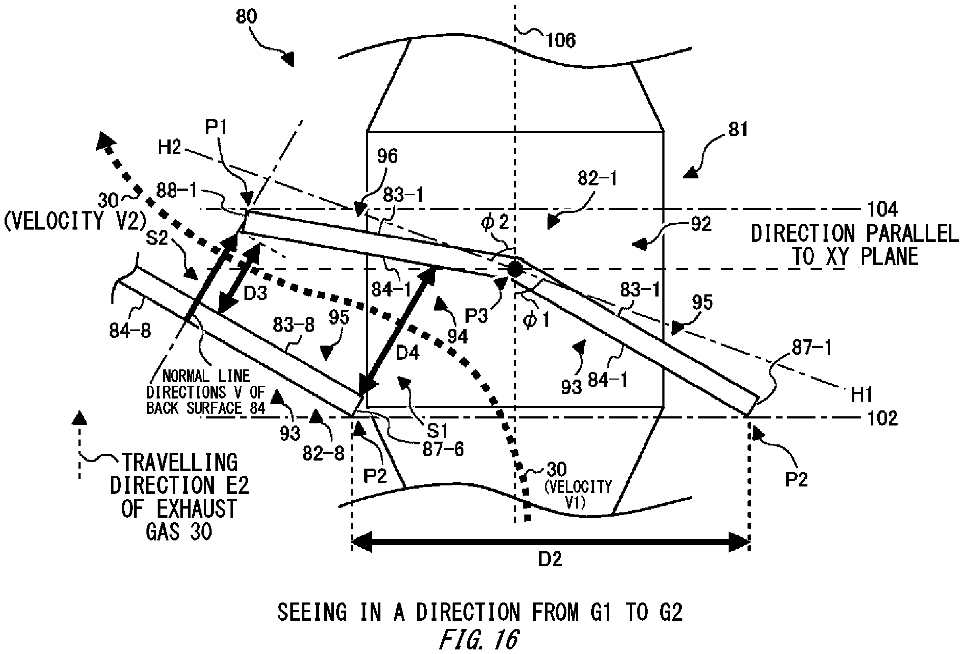

Fig. 16 illustrates another example of a side view seen in a direction along the line G1-G2 from G1 to G2 of Fig. 6A. Either of the front surface 83 and the back surface 84 of the wing portion 82 of the present example does not have a third surface 98 nor a third surface 97. The wing portion 82 of the present example is different form the wing portion 82 illustrated in Fig. 14 in this point. The back surface 84 of the present example is in contact with the first surface 93 and the second surface 94. In the front surface 83 of the present example, the first surface 95 is in contact with the second surface 96.

In Fig. 16, the line H1-H2 illustrated in Fig 7, and the angle ϕ1 and the angle ϕ2 are illustrated together. The angle ϕ1 is an angle formed by the front surface 83 and the travelling direction E2 of the exhaust gas 30 in the example in Fig 7. The angle ϕ2 is an angle formed by the back surface 84 and the travelling direction E2 of the exhaust gas 30 in the example in Fig 7.

The angle ϕ3 and the angle ϕ3' (refer to Fig. 15) may be smaller than the angle ϕ1. The angle ϕ4 and the angle ϕ4' (refer to Fig. 15) may be greater than the angle ϕ2.

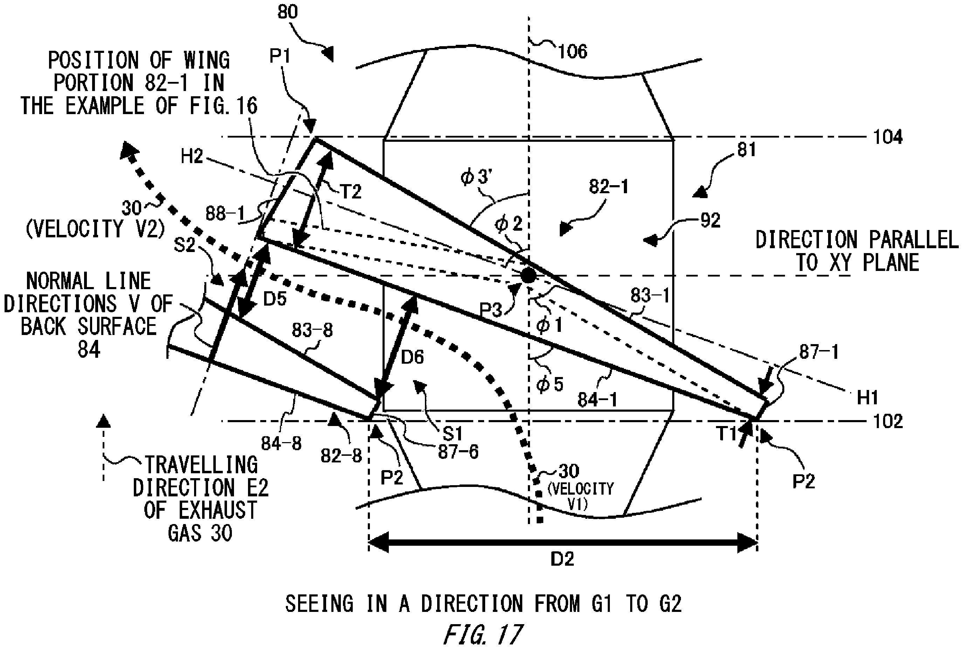

Fig. 17 illustrates another example of a side view seen in a direction along the line G1-G2 from G1 to G2 of Fig. 6A. In order to compare with the example illustrated in Fig. 16, the position of the wing portion 82-1 in the example of Fig. 16 is illustrated by a dashed line. In the present example, the thickness between the front surface 83 and the back surface 84 of the wing portion 82 on the ingoing end 102 side is set as thickness T1, and the thickness between the front surface 83 and the back surface 84 of the wing portion 82 on the outgoing end 104 side is set as thickness T2. The thickness T1 and the thickness T2 are distances between the back surface 84 and the front surface 83 in the normal line direction V of the back surface 84.

In the present example, the thickness T2 is greater than the thickness T1. The wing portion 82 may have a tapered shape with the thickness increasing from position P2 to position P1 in the side view of Fig. 17. The front surface 83 and the back surface 84 of the wing portion 82 may be in a curved shape in the side view of Fig. 17. The front surface 83 and the back surface 84 of the wing portion 82 may be in a convex curved shape on the outgoing end 104 side in the side view of Fig. 17.

In the present example, the angle formed by the back surface 84 and the travelling direction E2 of the exhaust gas 30 is set as an angle ϕ5. In the present example, the angle formed by the front surface 83 and the travelling direction E2 of the exhaust gas 30 is equal to the angle ϕ3'. The angle ϕ5 may be larger than the angle ϕ3'.

In the path of the exhaust gas 30, between the first wing portion (the wing portion 82-8) and the second wing portion (the wing portion 82-1), the distance on the outgoing end 104 side is set as a distance D5, and the distance on the ingoing end 102 side is set as distance D6. In the present example, the distance D5 is the distance between the front surface 83-8 of the wing portion 82-8 and the second end portion 88-1 of the wing portion 82-1 in the normal line direction V of the back surface 84-8 of the wing portion 82-8. In the present example, the distance D6 is the distance between the first end portion 87-8 of the wing portion 82-8 and the back surface 84-1 of the wing portion 82-1 in the normal line direction V.

The distance D5 may be less than the distance D6. In the present example, since the thickness T2 is greater than the thickness T1, the distance D5 tends to be less than the distance D6. Therefore, the area S2 (refer to Fig. 13, Fig. 16) tends to be smaller than the area S1 (refer to Fig. 13, Fig. 16). Therefore, also in the present example, Therefore, as described above, the velocity V2 of the exhaust gas 30 after passing through the spinning portion 80 tends to be greater than the velocity VI of the exhaust gas 30 before passing through the spinning portion 80. Therefore, the liquid 40 in a misting state accompanying the exhaust gas 30 after passing through the spinning portion 80 tends to accumulate on the side wall 15 of the reaction tower 10. When the distance D5 is less than the distance D6, and the normal line direction V of the wing portion 82 forms a sweepback angle ψ (refer to Fig. 11) with the direction Cb, the liquid 40 in a misting state further tends to accumulate on the side wall 15.

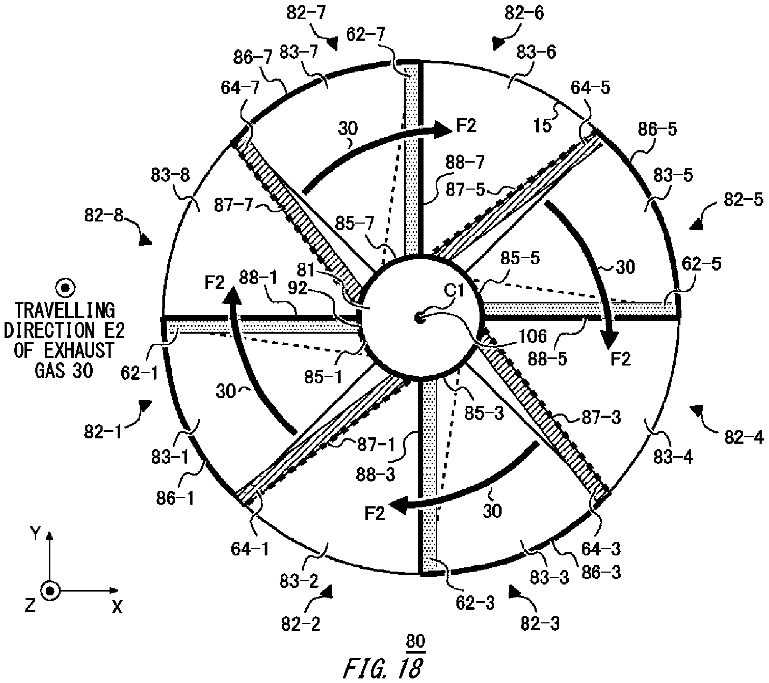

Fig. 18 illustrates another example of a case where the spinning portion 80 illustrated in Fig. 1 and Fig. 4 is seen from the travelling direction E2 of the exhaust gas 30. The wing portion 82 in the spinning portion 80 of the present example is different form the example illustrated in Fig. 5, in the point of further including a support portion 62 and a support portion 64 for controlling the pressure loss of the exhaust gas 30. In the present example, the support portion 62 is provided on the back surface 84, and the support portion 64 is provided on the front surface 83. In Fig. 18, the positions where the support portion 62 and the support portion 64 when seen from the travelling direction E2 of the exhaust gas 30 are provided are illustrated by hatching.

The support portion 62 and the support portion 64 may extend from one end 85 to the other end 86 when seen from the travelling direction E2 of the exhaust gas 30. The one end and the other end in the extending direction of the support portion 62 and the support portion 64 may be respectively connected to the side wall 15 and the reaction tower 10 and the side surface 92 of the supporting column 81, when seen from the travelling direction E2 of the exhaust gas 30. The support portion 62 and the support portion 64 may be in contact with the second end portion 88 and the first end portion 87, respectively.

In the present example, the support portions 62-1 to 62-8 are respectively provided on the back surfaces 84-1 to 84-8, and the support portions 64-1 to 64-8 are respectively provided on the front surfaces 83-1 to 83-8. In Fig. 18, due to the visibility of the figure, the illustrations of support portion 62-2, the support portion 62-4, the support portion 62-6 and the support portion 62-8, and the support portion 64-2, the support portion 64-4, the support portion 64-6 and the support portion 64-8 are omitted.

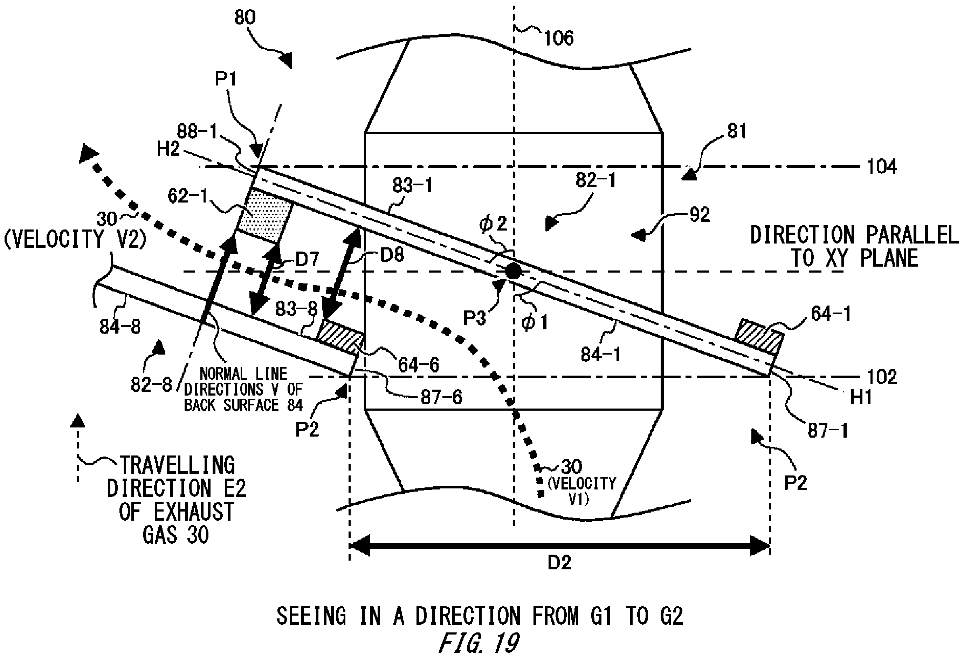

Fig. 19 illustrates another example of a side view seen in a direction along the line G1-G2 from G1 to G2 of Fig. 6A in the spinning portion 80 illustrated in Fig. 18. In the present example, the support portion 62-1 is provided in contact with the second end portion 88-1 on the back surface 84-1 of the wing portion 82-1, and the support portion 64-1 is provided in contact with the first end portion 87-1 on the front surface 83-1 of the wing portion 82-1. In the present example, the support portion 64-8 is provided in contact with the first end portion 87-8 on the front surface 83-8 of the wing portion 82-8.

In the path of the exhaust gas 30, the distance between the wing portion 82-8 and the support portion 62-1 is set as a distance D7, the distance between the support portion 64-8 and the wing portion 82-1 is set as a distance D8. In the present example, the distance D7 is the distance between the front surface 83-8 of the wing portion 82-8 and the end portion of the ingoing end 102 side in the support portion 62-1, in the normal line direction V of the back surface 84-8 of the wing portion 82-8. In the present example, the distance D8 is the distance between the end portion of the outgoing end 104 side in the support portion 64-8 and the back surface 84-1 of the wing portion 82-1, in the normal line direction V.

The distance D7 may be less than the distance D8. By controlling at least one of the distance between the back surface 84 and the end portion of the ingoing end 102 side in the support portion 62, and the distance between the front surface 83 and the end portion on the outgoing end 104 side in the support portion 64, at least one of the distance D7 and the distance D8 are controlled. By controlling at least one of the distance D7 and the distance D8, the pressure loss of the exhaust gas 30 passing through the spinning portion 80 is controlled. By controlling the pressure loss of the exhaust gas 30 passing through the spinning portion 80, the velocity V2 of the exhaust gas 30 after passing through the spinning portion 80 is controlled. By controlling the velocity V2 of the exhaust gas 30, at the downstream side of the exhaust gas 30 from the spinning portion 80 (the exhaust gas outlet 17 side of the reaction tower 10), the accumulation state of the liquid 40 in a misting state, which is accumulate on the side wall 15 of the reaction tower 10, is controlled.

The wing portion 82 may include no support portion 64 provided on the front surface 83. When the support portion 64 is not provided on the front surface 83, by controlling the distance D7, the pressure loss of the exhaust gas 30 passing through the spinning portion 80 may be controlled.

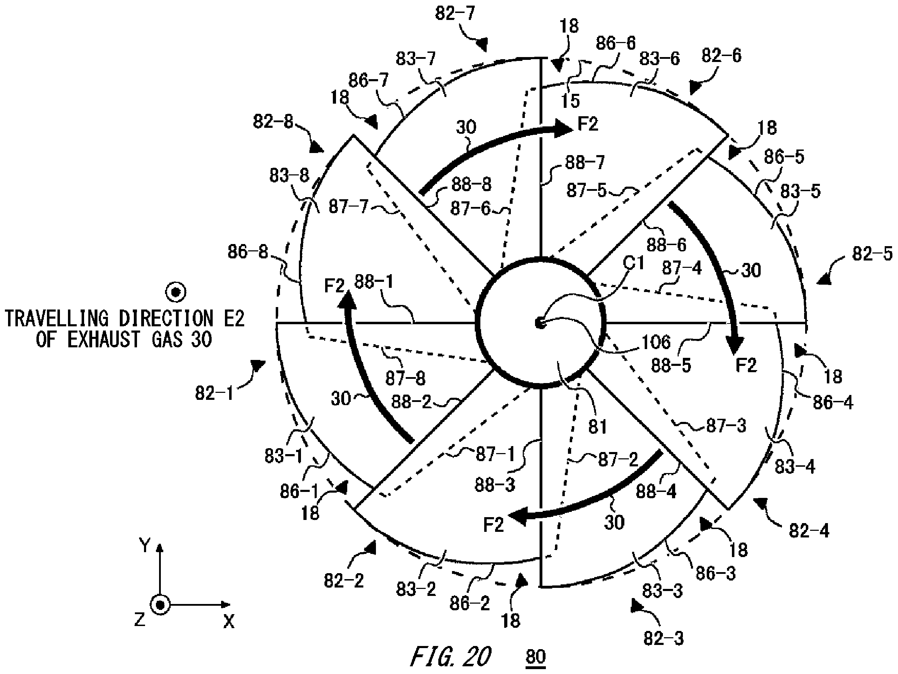

Fig. 20 illustrates another example of a case where the spinning portion 80 illustrated in Fig. 1 and Fig. 4 is seen from the travelling direction E2 of the exhaust gas 30. In Fig. 20, the position of the side wall 15 of the reaction tower 10 when seen from the travelling direction E2 of the exhaust gas 30 is illustrated by thick dashed lines. The wing portion 82 in the spinning portion 80 of the present example is connected to the side wall 15 of the reaction tower 10 on the outgoing end 104 side (refer to Fig. 7) in the travelling direction E2 of the exhaust gas 30. The wing portion 82 in the spinning portion 80 of the present example is away from the side wall 15 on the ingoing end 102 side (refer to Fig. 7) in the travelling direction E2 of the exhaust gas 30.

As described above, in one wing portion 82, the first end portion 87 is provided on the ingoing end 102 side from the second end portion 88. In the present example, the intersection point between the other end 86 and the second end portion 88 in one wing portion 82 is connected with the side wall 15 of the reaction tower 10. In one wing portion 82, a part of the other end 86 including the intersection point between the other end 86 and the second end portion 88 may be connected with the side wall 15. In the present example, the intersection point between the other end 86 and the first end portion 87 in one wing portion 82 is away from the side wall 15. In one wing portion 82, a part of the other end 86 including the intersection point between the other end 86 and the first end portion 87 may be away from the side wall 15. The separation width between the other end 86 and the side wall 15 when seen from the travelling direction E2 of the exhaust gas 30 may increase from the second end portion 88 side to the first end portion 87 side. It should be noted that in the present example, the space between the other end 86 and the side wall 15 is the gas treatment portion 18.

As described above, the spinning portion 80 increases the velocity of the exhaust gas 30 introduced into the spinning portion 80, or controls the travelling direction of the exhaust gas 30 when seen from the travelling direction E2. In this manner, after the exhaust gas 30 passing through the spinning portion 80, the spinning portion 80 accumulates the liquid 40 in a misting state accompanying the exhaust gas 30 on the side wall 15 of the reaction tower 10. Therefore, on the outgoing end 104 side in the travelling direction E2 of the exhaust gas 30, the wing portion 82 is preferably connected with the side wall 15 of the reaction tower 10. In this manner, the liquid 40 in a misting state accompanying the exhaust gas 30 after passing through the spinning portion 80 tends to accumulate on the side wall 15.

As described above, the spinning portion 80 of the present example increases the velocity of the exhaust gas 30 in the interior of the spinning portion 80. Therefore, the exhaust gas 30 travelling through the interior of the spinning portion 80 tends to travel on the side wall 15 side from the supporting column 81 side when seen from the travelling direction E2 of the exhaust gas 30. Therefore, the wing portion 82 may also be away from the side wall 15 on the ingoing end 102 side from the outgoing end 104 side in the travelling direction E2 of the exhaust gas 30. When the normal line direction V of the back surface 84 of the wing portion 82 and the direction Cb forms a sweepback angle ψ, the exhaust gas 30 travelling through the interior of the spinning portion 80 tends to travel on the side wall 15 side from the supporting column 81 side when seen from the travelling direction E2 of the exhaust gas 30. Therefore, the wing portion 82 may also be away from the side wall 15 on the ingoing end 102 side, similarly.

In the example illustrated in Fig. 20, when seen from the travelling direction E2 of the exhaust gas 30, the entire interior of the reaction tower 10 is not covered by the plurality of wing portions 82, but the entire interior of the reaction tower 10 is covered by the plurality of wing portions 82 when seen from the travelling direction E2, and the wing portion 82 may be away from the side wall 15 on the ingoing end 102 side from the outgoing end 104 side in the travelling direction E2 of the exhaust gas 30. That is, using the wing portion 82-1 and the wing portion 82-2, which are adjacent in the circumferential direction of Fig. 20, as an example for description, only in the region where the wing portion 82-1 overlaps with the wing portion 82-2 (refer to Fig. 6A), the wing portion 82-1 of the ingoing end 102 side in the overlapping region may be away from the side wall 15.

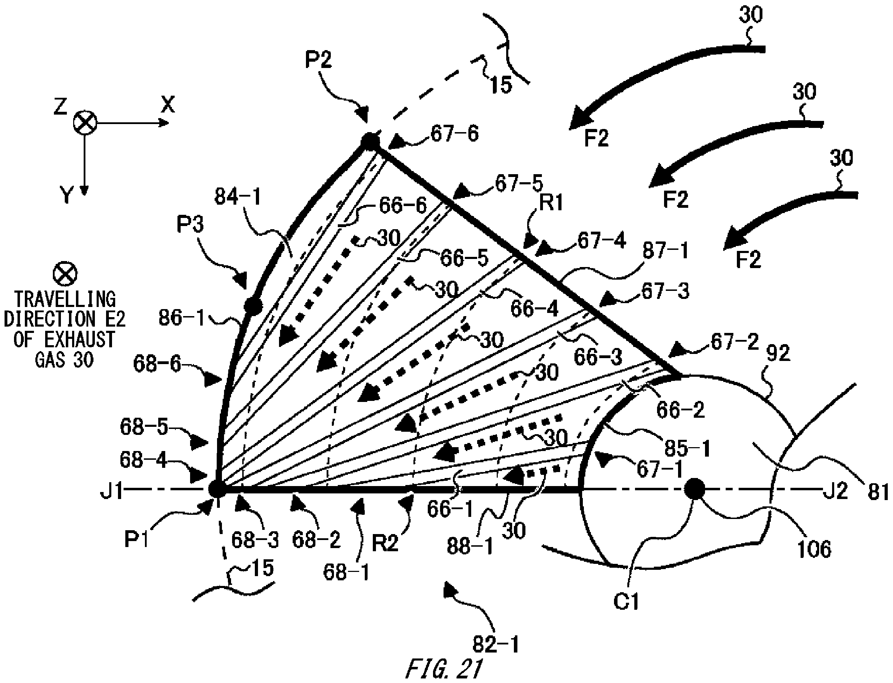

Fig. 21 illustrates an enlarged view of the supporting column 81 and the wing portion 82-1 in Fig. 5. Fig. 21 illustrates a view when the supporting column 81 and the wing portion 82-1 are seen from the opposite direction to the travelling direction E2 of the exhaust gas 30. Herein, the central axis 106 side in the spinning direction F2 of the spinning portion 80 (refer to Fig. 5) is defined as the inner circumference side, and the side wall 15 side from the central axis 106 is defined as the outer peripheral side.

In the present example, a groove 66 is provided on the back surface 84 of the wing portion 82. The groove 66 may control the travelling direction of the liquid 40 included in the exhaust gas 30. The liquid 40 included in the exhaust gas 30 refers to the liquid 40 in a misting state accompanying the exhaust gas 30, for example. The liquid 40 in a misting state tends to be turned to a liquid film on the back surface 84. The groove 66 may control the travelling direction of the liquid 40 that has been turned to a liquid film on the back surface 84. The groove 66 may be depressed in the Z axis direction from the back surface 84 toward the front surface 83. The groove 66 may guide the travelling direction of the liquid 40 toward a predetermined direction. The predetermined direction refers to a direction from the center C1 to the side wall 15 of the reaction tower in Fig. 21, for example.

A plurality of grooves 66 may be provided on the back surface 84. In the present example, the exhaust gas 30 is spun in the spinning direction F2 (refer to Fig. 5). When seen from the direction opposite to the travelling direction E2 of the exhaust gas 30, the spinning direction F2 is counterclockwise. In the present example, on the back surface 84, grooves 66-1 to 66-6 are provided from the inner to outer circumference of the spinning portion 80.

One end and the other end in the extending direction of the groove 66 are set as one end 67 and the other end 68, respectively. The other end 68 may be provided on the outgoing end 104 side from the one end 67. Ends 67-1 to 67-6 are respectively one end 67 of the grooves 66-1 to 66-6. The other ends 68-1 to 68-6 are respectively the other end 68 of the grooves 66-1 to 66-6.

The one end 67 may be provided on the one end 85 of the first end portion 87 or the wing portion 82. In the present example, the one end 67-1 is provided on the one end 85 of the wing portion 82, and the one ends 67-2 to 67-6 are provided on the first end portion 87. The other end 68 may be provided on the other end 86 of the second end portion 88 or the wing portion 82. In the present example, the other ends 68-1 to 68-3 are provided on the second end portion 88, and the other ends 68-4 to 68-6 are provided on the other end 86 of the wing portion 82.

The plurality of grooves 66 may not intersect, or may intersect with each other on the back surface 84. In the present example, the plurality of grooves 66 do not intersect with each other on the back surface 84.

The groove 66 may control the travelling direction of the liquid 40 so that the liquid 40 in a misting state accompanying the exhaust gas 30 after passing through the spinning portion 80 passes through the outer peripheral side from the inner circumference side. The groove 66 may guide the liquid 40 passing through the spinning portion 80 toward the outer peripheral side from the inner circumference side. In the example illustrated in Fig. 21, the position of the one end 67-4 of the groove 66-4 is set as a position R1. In Fig. 21, concentric circumferences passing through the one ends 67-2 to 67-6, respectively, are illustrated by dashed lines. When seen from the direction opposite to the travelling direction E2 of the exhaust gas 30, the position of the intersection point where the circumference passing through the position R1 intersects with the second end portion 88 is set as the position R2.

The position of the other end 68-4 of the groove 66-4, when seen from the direction opposite to the travelling direction E2 of the exhaust gas 30, may be the outer peripheral side of the spinning portion 80 from the position R2. By making the position of the other end 68-4 of the groove 66-4 be the outer peripheral side of the spinning portion 80 from the position R2, the liquid 40 in a misting state accompanying the exhaust gas 30 after passing through the spinning portion 80 tends to accumulate on the side wall 15.

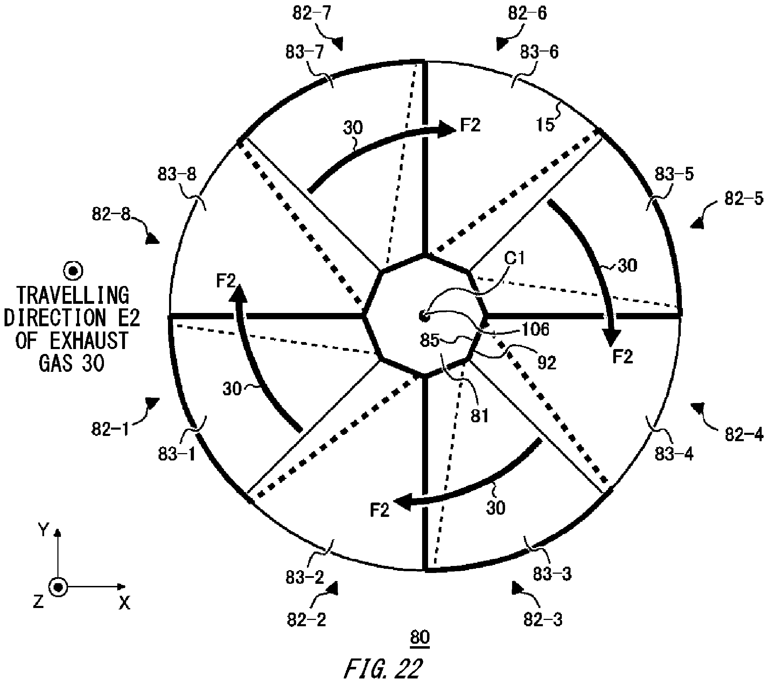

Fig. 22 illustrates another example when the spinning portion 80 illustrated in Fig. 1 and Fig. 4 is seen from the travelling direction E2 of the exhaust gas 30. In the present example, the supporting column 81 is a polygonal shape when seen from the travelling direction E2 of the exhaust gas 30. The spinning portion 80 of the present example is different from the example illustrated in Fig. 5 in this point. The supporting column 81 may also be in a regular polygonal shape when seen from the travelling direction E2 of the exhaust gas 30. The supporting column 81 of the present example is in a regular octagon shape when seen from the travelling direction E2 of the exhaust gas 30. When the supporting column 81 is in a polygonal shape when seen from the travelling direction E2 of the exhaust gas 30, the side surface 92 of the supporting column 81 includes a straight line portion when seen from the travelling direction E2. Therefore, the one end 85 of the wing portion 82 connected to the side surface 92 may be in a straight line shape. Therefore, when the one end 85 is curved, the wing portion 82 becomes easier to be manufactured.

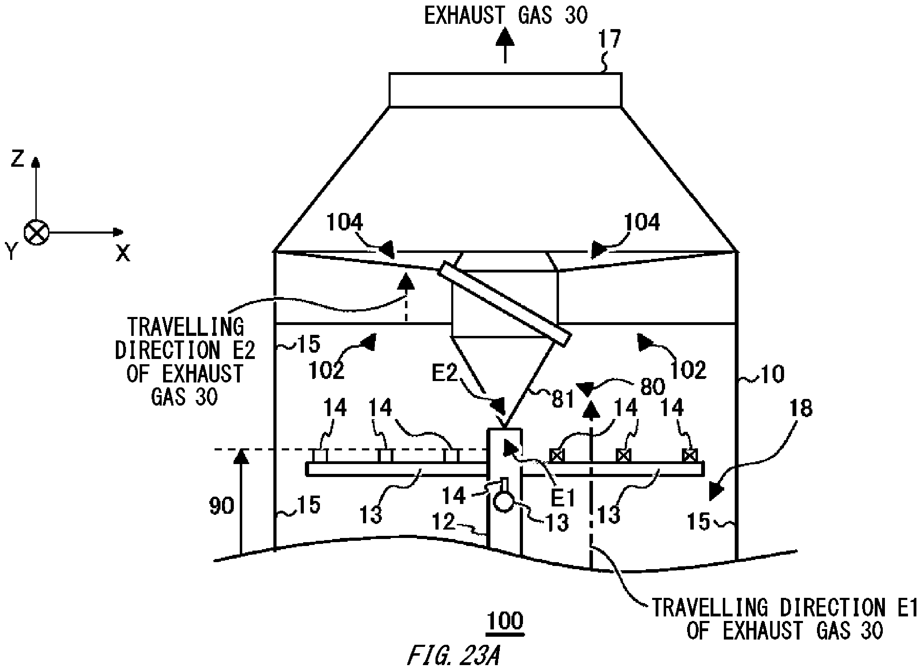

Fig. 23A illustrates another example of the exhaust gas treatment apparatus 100 according to the one embodiment of the present invention. In Fig. 23A, the exhaust gas inlet 11 side (refer to Fig. 1) is omitted from the branch tube 13, which extends in the Y axis direction and is provided on the side closest to the exhaust gas outlet 17 in the travelling direction E1 of the exhaust gas.

The end portion of the exhaust gas outlet 17 side of the trunk tube 12 is set as an end portion E1. The end portion E1 may be a planar or stippled region including an end portion of the exhaust gas outlet 17 side of the trunk tube 12. The end portion E1 of the present example may be a planar region including the end portion of the exhaust gas outlet 17 side of the trunk tube 12. The end portion of the exhaust gas inlet 11 (refer to Fig. 1) side of the supporting column 81 is set as an end portion E2. The end portion E2 may be a planar or stippled region including the end portion on the exhaust gas inlet 11 side of the supporting column 81. The end portion E2 of the present example is a stippled region including the end portion of the exhaust gas inlet 11 side of the supporting column 81.

In the present example, the end portion E1 is in contact with the end portion E2. The present example is different from the exhaust gas treatment apparatus 100 illustrated in the Fig. 1 in this point. In the present example, the end portion E2 of the supporting column 81 is supported by the end portion E1 of the trunk tube 12. Therefore, the spinning portion 80 of the present example tends to be more stabilized in the interior of the reaction tower 10 than the case where the end portion E1 is away from the end portion E2.

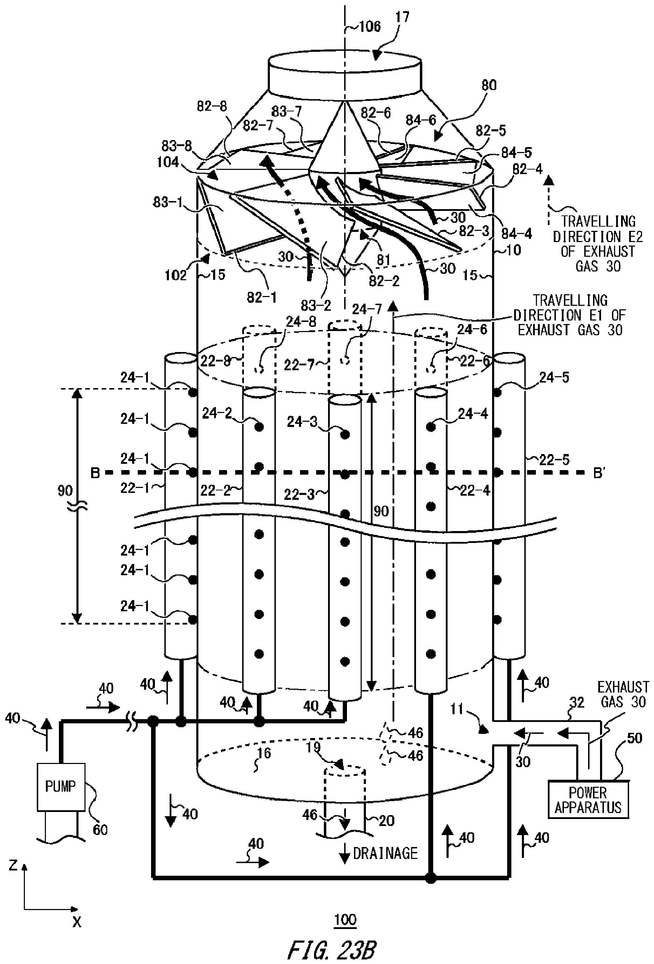

Fig. 23B illustrates a perspective view showing another example of the exhaust gas treatment apparatus 100 according to the one embodiment of the present invention. In the exhaust gas treatment apparatus 100 of the present example, the reaction tower 10 includes a trunk tube 22 outside the reaction tower 10. The exhaust gas treatment apparatus 100 of the present example is different from the exhaust gas treatment apparatus 100 illustrated in Fig. 1 and Fig. 2 in this point. However, the volumetric flow rate control portion 70 and the valve 72 in Fig. 2 are omitted in Fig. 23B.

In the present example, at least a part of the trunk tube 22 is provided in the liquid spraying portion 90. In Fig. 23B, the range of the liquid spraying portion 90 in the interior of the reaction tower 10 is illustrated by a two-way arrow. The liquid spraying portion 90 may be the range from the discharge ion portion 24 arranged on the side closest to the exhaust gas inlet 11 to the discharge ion portion 24 arranged on the side closest to the exhaust gas outlet 17 in the direction parallel to the Z axis. The liquid spraying portion 90 may be the region surrounded by the side wall 15 in the XY surface. The trunk tube 22 may extend in the direction parallel with the travelling direction E1 of the exhaust gas 30 (the Z axis direction). The trunk tube 22 may extend from the end portion of the bottom surface 16 side to the end portion of the exhaust gas outlet 17 side in the travelling direction E1 of the exhaust gas 30 (the Z axis direction).

The liquid 40 is supplied in the trunk tube 22. The liquid 40 may be supplied from the pump 60 to the trunk tube 22. The liquid 40 may be supplied from the end portion of the bottom surface 16 side in the trunk tube 22. The liquid 40 may flow in the direction parallel to the travelling direction E1 of the exhaust gas 30 in the interior of the trunk tube 22.

The reaction tower 10 may include a plurality of trunk tubes 22. In the present example, the reaction tower 10 includes eight trunk tubes 22 (trunk tubes 22-1 to 22-8). The trunk tubes 22-1 to 22-8 may be arranged in an equal interval surrounding the side wall 15 when seen from the travelling direction E1 of the exhaust gas 30.

In the exhaust gas treatment apparatus 100 of the present example, the reaction tower 10 further includes an discharge ion portion 24. The discharge ion portion 24 discharges the liquid 40 to the gas treatment portion 18 of the reaction tower 10. The discharge ion portion 24 may be provided in the trunk tube 22.

The reaction tower 10 may include a plurality of discharge ion portions 24. In the present example, the reaction tower 10 includes discharge ion portions 24-1 to 24-8. The discharge ion portions 24-1 to 24-8 may be respectively provided in the trunk tubes 22-1 to 22-8.

A plurality of discharge ion portions 24 may be provided in one trunk tube 22. Using the trunk tube 22-1 as an example for description, in the present example, a plurality of discharge ion portions 24-1 are provided in the trunk tube 22-1. The plurality of discharge ion portions 24-1 may be arranged in a predetermined interval along the travelling direction E1 of the exhaust gas 30 (the Z axis direction).

One discharge ion portion 24-1 to one discharge ion portion 24-8 may be arranged in the same position in the travelling direction E1 of the exhaust gas 30 (the Z axis direction). The discharge ion portions 24-1 to 24-8 arranged in the same position in the travelling direction E1 of the exhaust gas 30 (the Z axis direction) may be arranged in an equal interval along the side wall 15 when seen from the travelling direction E1 of the exhaust gas 30.

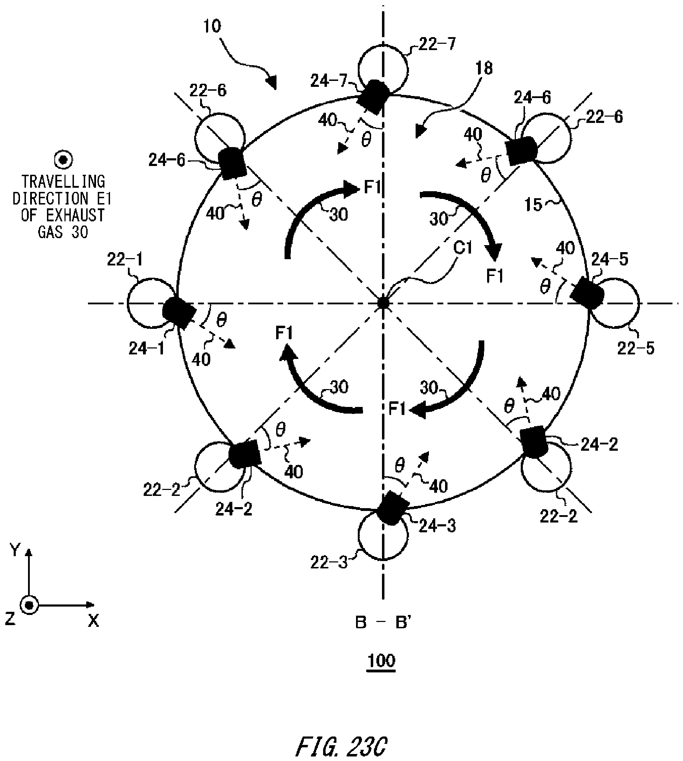

Fig. 23C illustrates one example of the B-B' cross-section in Fig. 23B. The B-B' cross-section is a XY cross-section through the trunk tubes 22-1 to 22-8, the discharge ion portions 24-1 to 24-8, the side wall 15 and the gas treatment portion 18.

The discharge ion portions 24-1 to 24-8 may arrange the center position C1 of the reaction tower 10 at an equal interval in the center when seen from the travelling direction E1 of the exhaust gas 30. The discharge ion portion 24 may be provided through the side wall 15 from the interior of the trunk tube 22 to the gas treatment portion 18 of the reaction tower 10. The discharge ion portions 24-1 to 24-8 respectively discharges the liquid 40 supplied to the trunk tubes 22-1 to 22-8 to the gas treatment portion 18.

The discharge ion portion 24 may discharge the liquid 40 to the direction of the straight line connecting the discharge ion portion 24 and the position C1, and the direction of forming the predetermined angle θ, when seen from the travelling direction E1 of the exhaust gas 30. In Fig. 23C, the discharge ion direction of the liquid 40 is illustrated by dashed arrows. The angle θ may be from 30 degrees to 90 degree. The direction for forming the angle θ refers to the direction of the central axis in the direction of discharging the liquid 40 from the discharge ion portion 24.

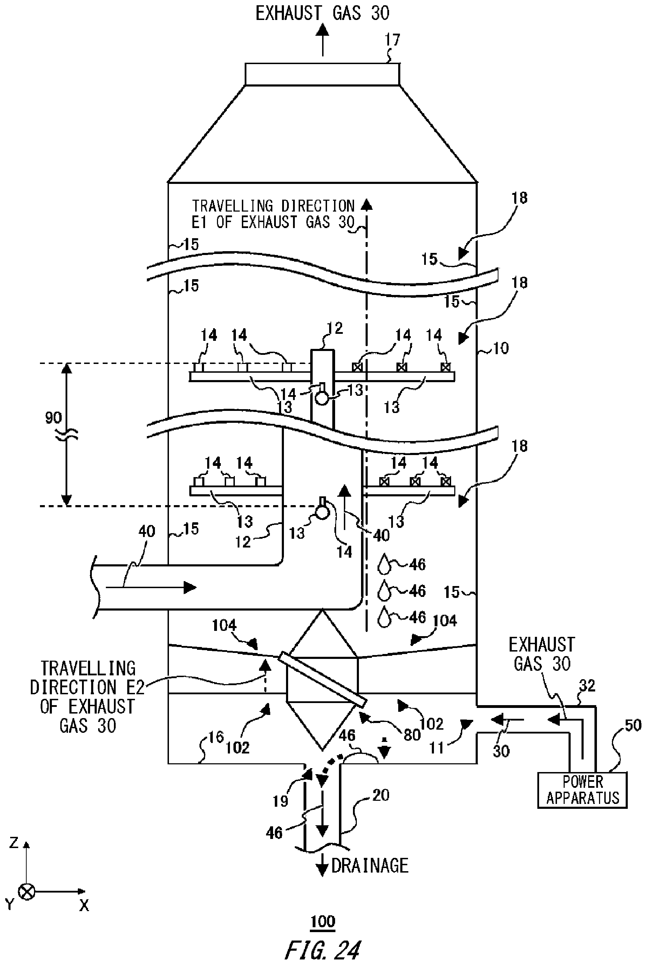

Fig. 24 illustrates another example of the exhaust gas treatment apparatus 100 according to the one embodiment of the present invention. The spinning portion 80 of the present example is provided upstream of the exhaust gas 30 from the liquid spraying portion 90 in the travelling direction E1 of the exhaust gas 30. In the present example, the spinning portion 80 is provided between the exhaust gas inlet 11 and the liquid spraying portion 90 in the travelling direction E1 of the exhaust gas 30. The exhaust gas treatment apparatus 100 of the present example is different from the exhaust gas treatment apparatus 100 illustrated in Fig. 1 in this point.

The exhaust gas treatment apparatus 100 of the present example includes a spinning portion 80 on the upstream side of the exhaust gas 30 from the liquid spraying portion 90 in the travelling direction E1 of the exhaust gas 30. The spinning portion 80 of the present example increases the velocity of the exhaust gas 30 before passing through the liquid spraying portion 90. In the liquid spraying portion 90, since the liquid 40, which has the velocity increases by the spinning portion 80, is sprayed to the exhaust gas 30, the liquid 40 in a misting state travelling to the exhaust gas outlet 17, accompanying the exhaust gas 30, tends to accumulate on the side wall 15 on the downstream side of the exhaust gas 30 than the liquid spraying portion 90. When the liquid 40 in a misting state accumulates on the side wall 15, the liquid 40 tends to be turned to a liquid film. When the liquid 40 is turned to a liquid film when the travelling direction E1 of the exhaust gas 30 has a vertical component (when the travelling direction E1 is other than horizontal), the liquid 40 tends to fall to the bottom surface 16 of the reaction tower 10. Therefore, the liquid 40 is less likely to be discharged outside the exhaust gas treatment apparatus 100 accompanying the exhaust gas 30. As a result, the exhaust gas treatment apparatus 100 in the present example is less likely to corrode steel or other material outside the exhaust gas treatment apparatus 100.

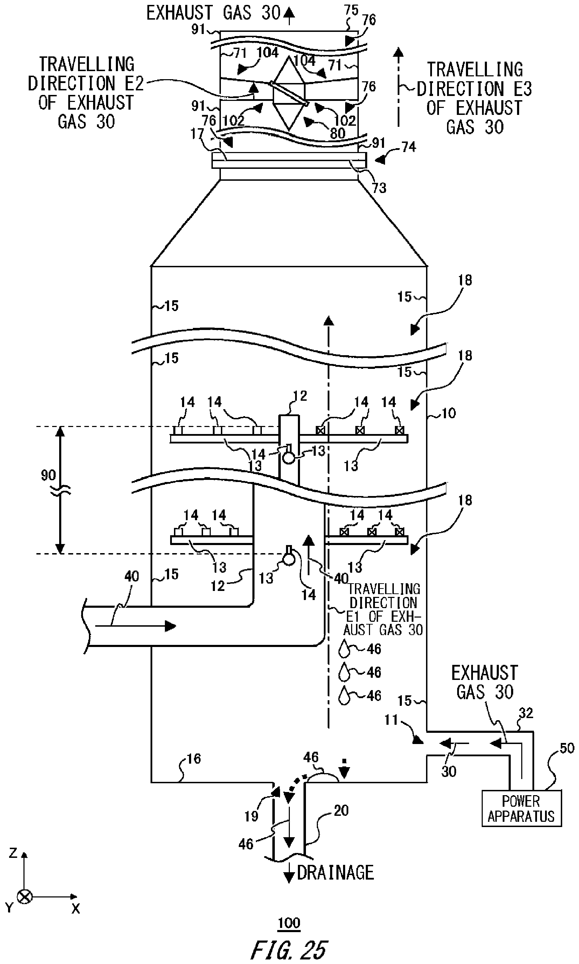

Fig. 25 illustrates another example of the exhaust gas treatment apparatus 100 according to the one embodiment of the present invention. The exhaust gas treatment apparatus 100 of the present example further includes an exhaust gas outgoing portion 91 connected to the exhaust gas outlet 17. In the exhaust gas treatment apparatus 100 of the present example, a spinning portion 80 is provided in the exhaust gas outgoing portion 91. The exhaust gas treatment apparatus 100 of the present example is different from the exhaust gas treatment apparatus 100 illustrated in Fig. 1 in these points.

The exhaust gas outgoing portion 91 of the present example includes a side wall 71, one end 73, the other end 75 and an exhaust gas passage portion 76. The exhaust gas passage portion 76 is a space where the exhaust gas 30 passes in the interior of the exhaust gas outgoing portion 91. The side wall 71 is an inner side surface of the exhaust gas passage portion 76 so that the exhaust gas passage portion 76 is provided to enclose the in the XY surface.

The exhaust gas outgoing portion 91 of the present example is in a cylindrical shape. In the present example, one end 73 and the other end 75, which are an end portion on one side and an end portion on the other side in the direction parallel to the central axis of the cylindrical exhaust gas outgoing portion 91, respectively, are linear in the side view of Fig. 25. The line of the one end 73 and the other end 75 in the side view may be parallel to the XY surface, or may not be parallel to the XY surface.

The exhaust gas treatment apparatus 100 may further include a fastening portion 74. The exhaust gas outlet 17 of the present example is parallel to the XY surface in the side view. In the present example, the position in the Z axis direction of the exhaust gas outlet 17 matches the position in the Z axis direction of one end 73 of the exhaust gas outgoing portion 91. In the present example, the fastening portion 74 fastens the exhaust gas outlet 17 of the reaction tower 10 and the one end 73 of the exhaust gas outgoing portion 91.

In the exhaust gas outgoing portion 91, the travelling direction of the exhaust gas 30 from the one end 73 to the other end 75 is set as a travelling direction E3. In the present example, the travelling direction E3 is parallel to the Z axis. That is, in the present example, the exhaust gas 30 travels in the travelling direction E3 in the side view of the reaction tower 10.

The exhaust gas 30 discharged from the exhaust gas outlet 17 is introduced from the one end 73 to the interior of the exhaust gas outgoing portion 91. The spinning portion 80 spins through the exhaust gas 30 introduced from the one end 73 to the exhaust gas passage portion 76 in a predetermined spinning direction F2 (refer to Fig. 5). The exhaust gas 30 led out from the spinning portion 80 introduce the exhaust gas passage portion 76 to travel toward the other end 75. That is, in the present example, in the side view of the exhaust gas outgoing portion 91, the exhaust gas 30 travels in the travelling direction E3, and spins in the spinning direction F2 when seen from the travelling direction E3. The exhaust gas 30 travelling to the other end 75 through the exhaust gas passage portion 76 is discharged outside the exhaust gas outgoing portion 91 from the other end 75.

The travelling direction E3 of the exhaust gas 30 in the exhaust gas outgoing portion 91 may be parallel with the travelling direction E2 of the exhaust gas 30 in the spinning portion 80, or may not. In the present example, the travelling direction E3 is parallel with the travelling direction E2.

The exhaust gas outgoing portion 91 may be a flue unit including a spinning portion 80. The flue unit may also be independent from the exhaust gas treatment apparatus 100 illustrated in Fig. 1. When the flue unit is independent, the flue unit may be fastened by the fastening portion 74 to the exhaust gas outlet 17 of the reaction tower 10.

When the spinning portion 80 is provided in the interior of the exhaust gas outgoing portion 91, similarly to the case of the example illustrated in Fig. 5, at least a part of the other end 86 of the wing portion 82 may be connected to the side wall 71 of the exhaust gas outgoing portion 91 when seen from the travelling direction E2 of the exhaust gas 30.

When the spinning portion 80 is provided in the interior of the exhaust gas outgoing portion 91, the entire interior of the exhaust gas outgoing portion 91 may be covered by the plurality of wing portions 82 when seen from the travelling direction E2 of the exhaust gas 30.

When the spinning portion 80 is provided in the interior of the exhaust gas outgoing portion 91, similarly to the case of the example illustrated in Fig. 20, the wing portion 82 may be connected to the side wall 71 of the exhaust gas outgoing portion 91 on the outgoing end 104 (refer to Fig. 7)side in the travelling direction E2 of the exhaust gas 30, or may be away from the side wall 71 of the exhaust gas outgoing portion 91 on the ingoing end 102 (refer to Fig. 7) side.

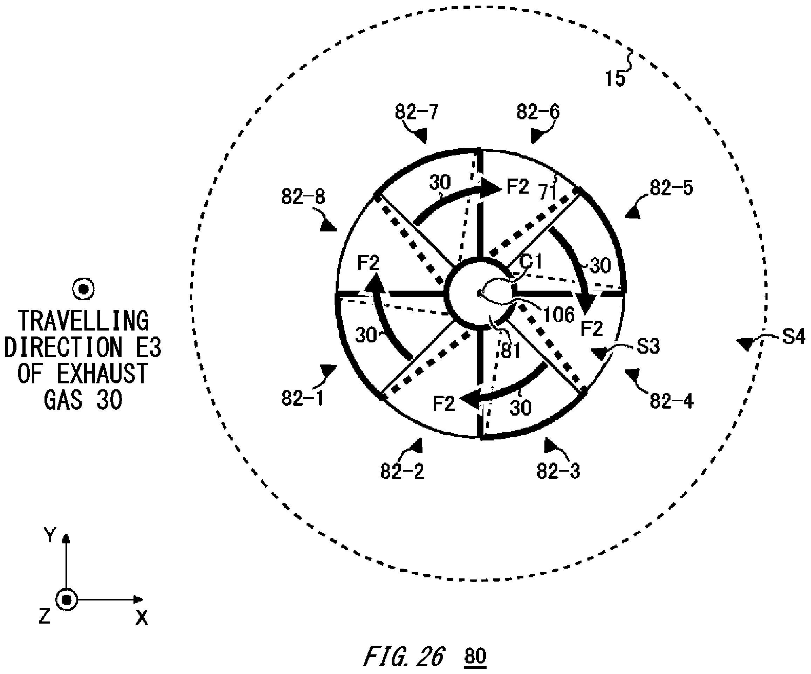

Fig. 26 illustrates one example of a case where the spinning portion 80 illustrated in Fig. 25 is seen from the travelling direction E3 of the exhaust gas 30. In Fig. 26, when seen from the travelling direction E1 of the exhaust gas 30, the position of the side wall 15 is illustrated by a dashed line. When seen from the travelling direction E3 of the exhaust gas 30, the spinning portion 80 may have the same shape as shown in any one of Fig. 5, Fig. 18, Fig. 20 and Fig. 22, excepting for the point that the size is different when seen from the travelling direction E3. The wing portion 82 may have the same shape in the side view as shown in any one of Fig 7, Fig. 8, Fig. 10 to Fig. 12, Fig. 14 to Fig. 17 and Fig. 19, excepting for the point that the size is different in the side view. The wing portion 82 may have the same shape as shown in Fig. 21 excepting for the point that the size is different when seen from the direction opposite to the travelling direction E3 of the exhaust gas 30.

In the direction (any direction in the XY surface in the present example) intersecting with the travelling direction E3 of the exhaust gas 30 (the Z axis direction in the present example), the cross-sectional area of the exhaust gas outgoing portion 91 is set as area S3, and the cross-sectional area of the liquid spraying portion 90 is set as area S4. In the present example, the area S4 is equal to the area of the gas treatment portion 18.

The area S3 may be less than the area S4. By making the area S3 smaller than the area S4, the spinning portion 80 provided in the exhaust gas outgoing portion 91 is miniaturized. Therefore, the manufacturing cost of the spinning portion 80 tends to be reduced.

However, when the area S3 is smaller than the area S4, the velocity of the exhaust gas 30 spinning through the reaction tower 10 tends to be less than the velocity of the exhaust gas 30 spinning through the exhaust gas outgoing portion 91, according to the law of conservation of angular momentum. Therefore, the pressure loss of the exhaust gas 30 passing through the spinning portion 80 tends to be less when the spinning portion 80 is provided inside the reaction tower 10 (the case of Fig. 1) than the case where the spinning portion 80 is provided in the exhaust gas outgoing portion 91 (the case of Fig. 25). Therefore, the pressure loss of the exhaust gas 30 tends to be suppressed when the spinning portion 80 is provided inside the reaction tower 10 than the case where the spinning portion 80 is provided in the exhaust gas outgoing portion 91.

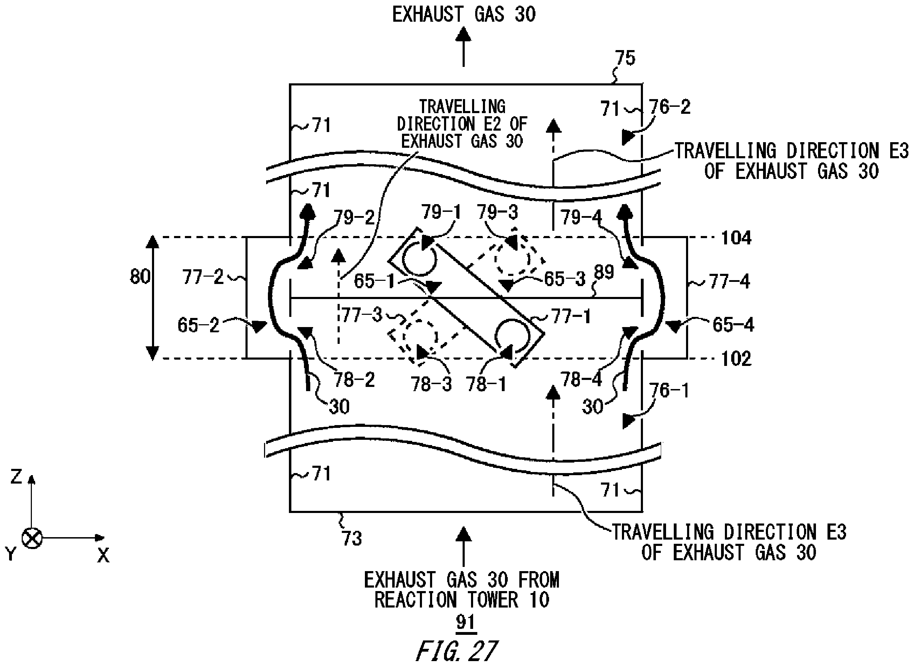

Fig. 27 illustrates another example of the exhaust gas outgoing portion 91. In the exhaust gas outgoing portion 91 of the present example, the spinning portion 80 is not provided inside the exhaust gas passage portion 76. The exhaust gas outgoing portion 91 of the present example is different from the exhaust gas outgoing portion 91 illustrated in Fig. 25 and Fig. 26 in this point.

The exhaust gas outgoing portion 91 of the present example includes a partition 89 provided inside the exhaust gas outgoing portion 91. The partition 89 prevents the passage of at least a part of the exhaust gas 30 inside the exhaust gas outgoing portion 91. In the present example, the partition 89 prevents the passage of the entire exhaust gas 30 in the exhaust gas passage portion 76.

The exhaust gas passage portions 76 on the one side and the other side of the partition 89 in the flow channel of the exhaust gas 30 are set as the exhaust gas passage portion 76-1 and the exhaust gas passage portion 76-2. In the present example, the exhaust gas passage portion 76-1 and the exhaust gas passage portion 76-2 are respectively in the interior of the exhaust gas outgoing portions 91 of the one side and the other side of the partition 89. The exhaust gas passage portion 76-2 is arranged at downstream from the exhaust gas passage portion 76-1 in the travelling direction E3 of the exhaust gas 30. In the present example, the exhaust gas 30 does not flow from the exhaust gas passage portion 76-1 to the exhaust gas passage portion 76-2 through the interior of the exhaust gas outgoing portion 91.

The spinning portion 80 of the present example is provided outside the exhaust gas outgoing portion 91. In the present example, the spinning portion 80 includes a tube 77. The tube 77 is provided outside the exhaust gas outgoing portion 91. The spinning portion 80 may include a plurality of tubes 77. In the present example, the spinning portion 80 includes four tubes 77 (tubes 77-1 to 77-4). The tubes 77-1 to 77-4 may be arranged in the surroundings in the XY surface of the exhaust gas outgoing portion 91. In the side view of Fig. 27, the tube 77-3 is illustrated by dashed lines as it is arranged overlapping the exhaust gas outgoing portion 91.

In the travelling direction E3 of the exhaust gas 30, the interior of the exhaust gas outgoing portion 91 of one side of the partition 89 (the exhaust gas passage portion 76-1), and the interior of the exhaust gas outgoing portion 91 of the other side of the partition 89 (the exhaust gas passage portion 76-2) are connected by the tube 77. In the present example, the exhaust gas passage portion 76-1 and the exhaust gas passage portion 76-2 are connected by the tube 77.

The tube 77 includes an aperture 78, an aperture 79 and a cavity 65. The cavity 65 is a space through which the exhaust gas 30 passes inside the tube 77. In the present example, each of the tubes 77-1 to 77-4 includes apertures 78-1 to 78-4. In the present example, each of the tubes 77-1 to 77-4 includes apertures 79-1 to 79-4. In the present example, each of the tubes 77-1 to 77-4 includes cavities 65-1 to 65-4.

In the present example, the cavities 65 and the exhaust gas passage portion 76-1 are communicated by the aperture 78. In the present example, the cavity 65 and the exhaust gas passage portion 76-2 are communicated by the aperture 79. The exhaust gas 30 introduced from the reaction tower 10 to the exhaust gas passage portion 76-1 passes through the exhaust gas passage portion 76-2 after passing through the cavity 65 of the tube 77 outside the exhaust gas outgoing portion 91. In Fig. 27, the exhaust gas 30 passing through the tube 77-2 and the tube 77-4 are illustrated by bold arrows.

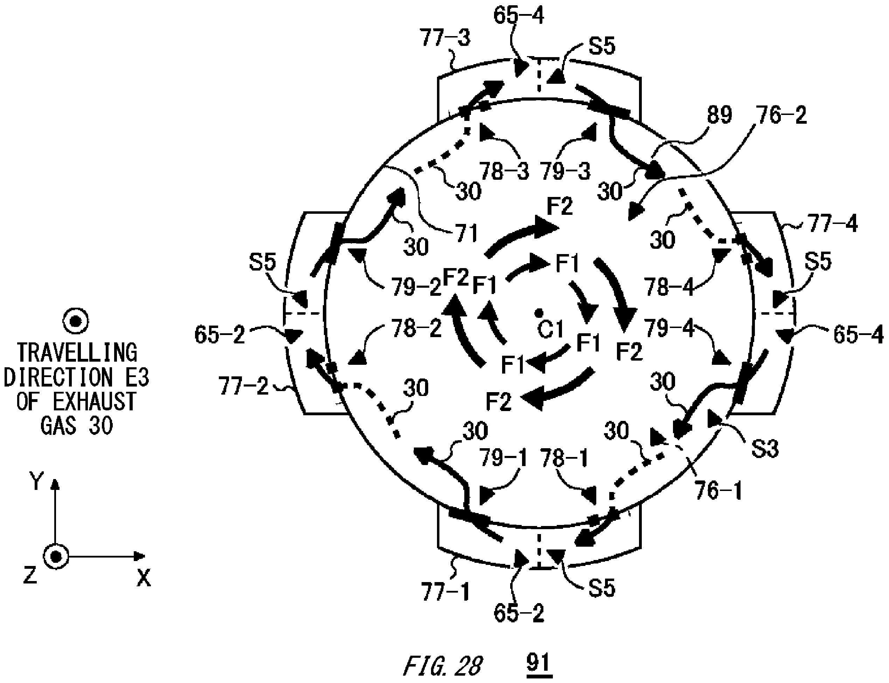

Fig. 28 illustrates one example of a case where the exhaust gas outgoing portion 91 illustrated in the Fig. 27 is seen from the travelling direction E3 of the exhaust gas 30. The position of the center of the exhaust gas outgoing portion 91 when seen from travelling direction E3 of the exhaust gas 30 may be the same as the position C1 (refer to Fig. 3). A plurality of tubes 77 may arrange the centers C1 at an equal interval in the circumferential direction outside the exhaust gas outgoing portion 91 in the center. In the present example, four tubes 77 arranges the centers C1 90 degrees apart in the circumferential direction outside the exhaust gas outgoing portion 91 in the center.

In the present example, the partition 89 covers the entire exhaust gas passage portion 76 when seen from the travelling direction E3 of the exhaust gas 30. Each of the exhaust gas passage portion 76-1 and the exhaust gas passage portion 76-2 is arranged on the other end 75 side (refer to Fig. 27) and the one end 73 side (refer to Fig. 27) of the partition 89. In the present example, each of the aperture 78 and the aperture 79 is arranged on the one end 73 side (refer to Fig. 27) and the other end 75 side (refer to Fig. 27) of the partition 89. In Fig. 28, the positions of the aperture 78 and the aperture 79 when seen from the travelling direction E3 of the exhaust gas 30 are illustrated by dashed lines and solid lines, respectively.

The exhaust gas 30 introduced from the reaction tower 10 to the exhaust gas passage portion 76-1 passes through the exhaust gas passage portion 76-2 after passing through the cavity 65 of the tube 77. In Fig. 28, the flow channel of the exhaust gas 30 is illustrated by a bold arrow. In Fig. 28, the exhaust gas 30 of the one end 73 side (refer to Fig. 27) from the partition 89 is illustrated by dashed lines.

The cross-sectional area of the cavity 65 in the direction intersecting the travelling direction E3 of the exhaust gas 30 (the Z axis direction in the present example) (any direction in the XY surface in the present example) is set as area S5. In Fig. 28, the positions of the cross-section in the cavities 65 are illustrated by dashed lines. The Area S5 may be smaller than the area S3 of the exhaust gas outgoing portion 91. By making the area S5 be smaller than the area S3, the velocity of the exhaust gas 30 passing through the cavities 65 tends to increase, greater than the velocity of the exhaust gas 30 passing through the exhaust gas passage portion 76-1.

In Fig. 28, the spinning directions F1 (refer to Fig. 3) of the exhaust gas 30 in the gas treatment portion 18 (refer to Fig. 3) are illustrated together. In the present example, the aperture 78 and the aperture 79 are respectively arranged on the one end 73 side (refer to Fig. 27) and the other end 75 side (refer to Fig. 27) of the partition 89, and the aperture 79 is arranged on the downstream side in the spinning direction F1 from the aperture 78 when seen from the travelling direction E3 of the exhaust gas 30. Therefore, the exhaust gas 30 passing through the cavity 65 is spun in the spinning direction F2, which is the same as the spinning direction F1, while increasing the velocity in the cavity 65. Therefore, after passing through the cavity 65, the exhaust gas 30 passing through the exhaust gas passage portion 76-2 tends to pass through the outer peripheral side in the exhaust gas passage portion 76-2. Therefore, the liquid 40 in a misting state accompanying the exhaust gas 30 tends to accumulate on the side wall 71 in the exhaust gas passage portion 76-2.

When the liquid 40 in a misting state accumulates on the side wall 71, the liquid 40 tends to be turned to a liquid film. When the liquid 40 is turned to a liquid film when the travelling direction E3 of the exhaust gas 30 has a vertical component (when the travelling direction E3 is other than horizontal), the liquid 40 tends to fall to the downward of the exhaust gas passage portion 76-2 (the direction to the partition 89). Therefore, the liquid 40 is less likely to be discharged outside the exhaust gas treatment apparatus 100 (outside the exhaust gas outgoing portion 91 in the present example) accompanying the exhaust gas 30.

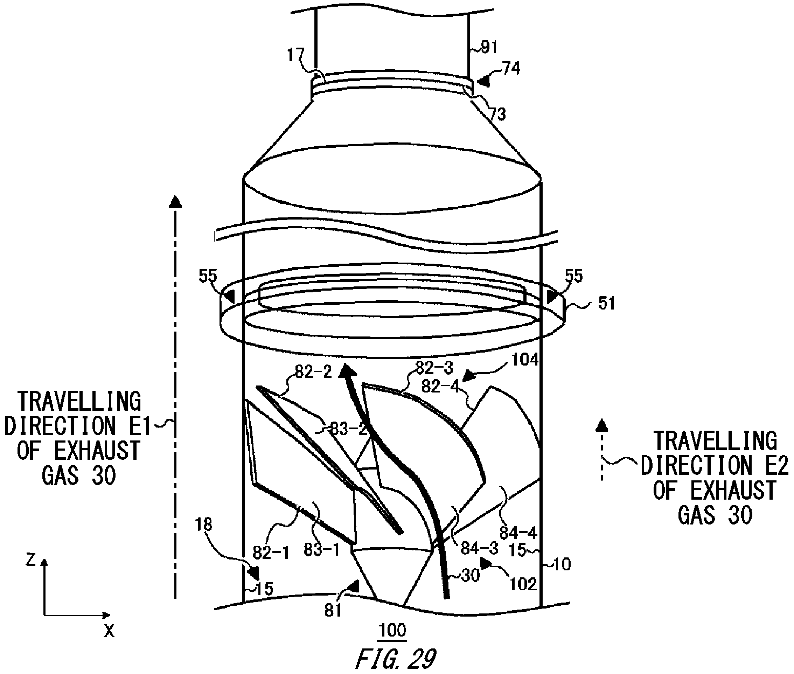

Fig. 29 illustrates another example of the exhaust gas treatment apparatus 100 according to the one embodiment of the present invention. The exhaust gas treatment apparatus 100 of the present example further includes one or more collection portions 51 for collecting the liquid 40 that has treated the exhaust gas 30. In Fig. 29, the collection portions 51 are illustrated together in the spinning portion 80 illustrated in Fig 9. The exhaust gas treatment apparatus 100 of present example is different from the exhaust gas treatment apparatus illustrated in Fig. 1 and Fig 9 in this point. The collection portion 51 is provided on the downstream side (the exhaust gas outlet 17 side) of the exhaust gas 30 from the spinning portion 80 in the travelling direction E1 of the exhaust gas 30. The collection portion 51 of the present example is provided on the side wall 15 of the reaction tower 10.

As described above, the liquid 40 in a misting state accompanying the exhaust gas 30 tends to accumulate on the side wall 15 on the downstream side of the exhaust gas 30 from the spinning portion 80. The collection portion 51 collects the liquid 40 accumulated on the side wall 15.

In the present example, one collection portion 51 is provided in the circumferential direction of the side wall 15 in a circulating shape. In the present example, the collection portion 51 includes a collection chamber 55 for collecting the liquid 40 that has treated the exhaust gas 30.

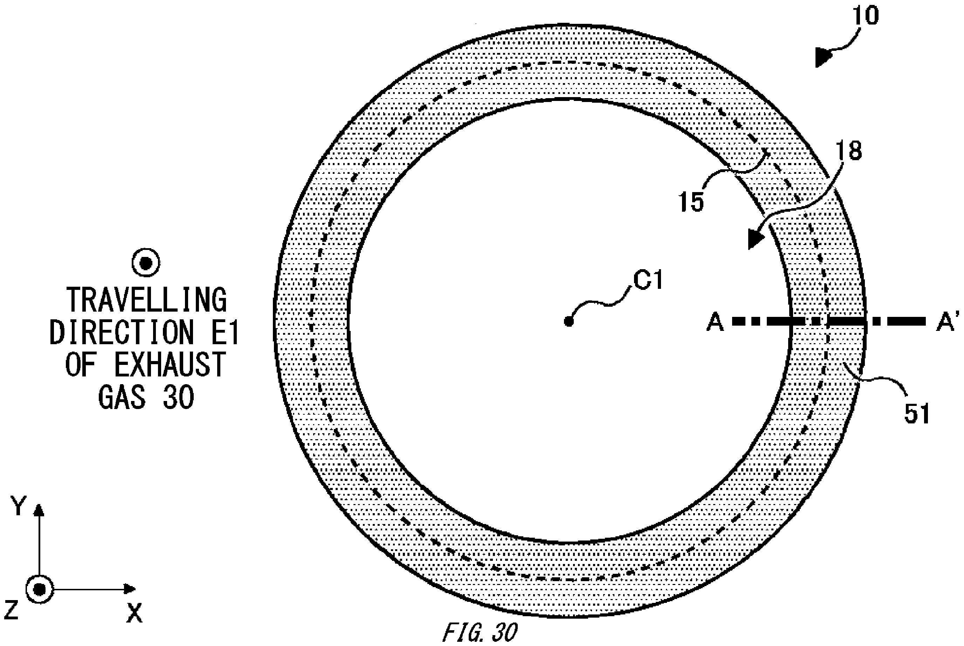

Fig. 30 illustrates one example of the collection portion 51 illustrated in Fig. 29 when the reaction tower 10 is seen from the travelling direction E1 of the exhaust gas 30. In the present example, one collection portion 51 is arranged in a circulating shape in the circumferential direction of the side wall 15 in the position overlapping the side wall 15 when seen from the travelling direction E1 of the exhaust gas 30. In Fig. 30, when seen from the travelling direction E1 of the exhaust gas 30, the position of the collection portion 51 is illustrated by hatching. The collection portion 51 may be arranged from the inside to the outside of the reaction tower 10 when seen from the travelling direction E1 of the exhaust gas 30, straddling the side wall 15. In Fig. 30, when seen from the travelling direction E1 of the exhaust gas 30, the position of the side wall 15 is illustrated by a dashed line.

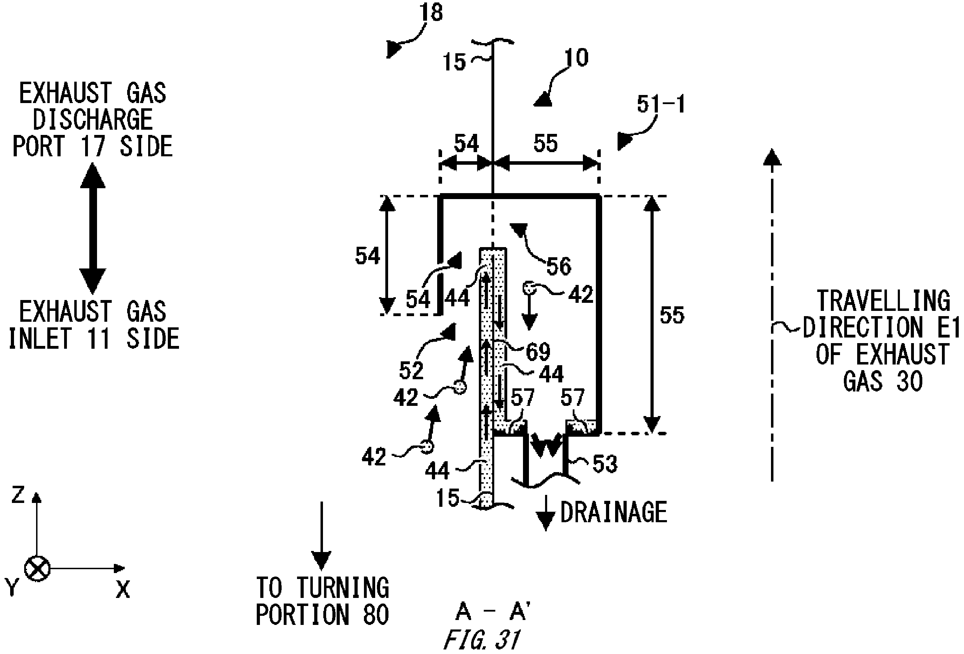

Fig. 31 illustrates one example of the cross section A-A' in Fig. 30. The A-A cross-section is an XZ cross section passing through the gas treatment portion 18, the side wall 15 and the collection portion 51 of the reaction tower 10.

In the present example, the collection portion 51 includes a first ingoing portion 54, a collection chamber 55, and a drainage portion 53. The first ingoing portion 54 and the collection chamber 55 may be provided outside the interior of the reaction tower 10, respectively. In Fig. 31, the ranges in the XZ cross section of the first ingoing portion 54 and the collection chamber 55 are illustrated by two-way arrows. The drainage portion 53 may be provided on the bottom surface 57 of the collection chamber 55.

In the present example, a first aperture 52 and an aperture 56 are provided in the collection portion 51. The liquid 40 after treating the exhaust gas 30 is introduced to the first aperture 52. In the present example, the first aperture 52 is provided in the interior of the reaction tower 10. In the present example, the gas treatment portion 18 of the reaction tower 10 and the first ingoing portion 54 are communicated by the first aperture 52. The first aperture 52 may be provided in the end portion of the exhaust gas inlet 11 side of the first ingoing portion 54. In the present example, the first ingoing portion 54 and the collection chamber 55 are communicated by the aperture 56. The position in the X axis direction of the aperture 56 may match the position in the X axis direction of the side wall 15.

As described above, the liquid 40 treats the exhaust gas 30 in the liquid spraying portion 90 (refer to Fig. 1). The liquid 40 that has treated the exhaust gas 30 may accompany the liquid 40 in a misting state. As described above, when the spinning portion 80 is provided in the reaction tower 10, the exhaust gas 30 spun by the spinning portion 80 tends to pass through the outer peripheral side (side wall 15 side) of the reaction tower 10.

The liquid 40 in a misting state accompanying the exhaust gas 30 spun by the spinning portion 80 is set as the liquid droplet 42. The liquid droplet 42 tends to be turned to a liquid film on the side wall 15. The liquid droplet 42 turned to a liquid film on the side wall 15 is set as a liquid film 44. In Fig. 31, the liquid droplet 42 and the liquid film 44 are illustrated by hatching. The exhaust gas 30 spun by the spinning portion 80 travels in the travelling direction E1 of the exhaust gas 30 (the exhaust gas outlet 17 side from the exhaust gas inlet 11 side). Therefore, the liquid film 44 tends to travel from the exhaust gas inlet 11 side to the exhaust gas outlet 17 side along the side wall 15.

In the present example, the liquid film 44 travelling in the travelling direction E1 of the exhaust gas 30 is collected in the collection portion 51 from the first aperture 52. In the present example, since the first aperture 52 is provided in the end portion of the exhaust gas inlet 11 side of the first ingoing portion 54, the collection portion 51 tends to collect the liquid film 44, which travels from the exhaust gas inlet 11 side to the exhaust gas outlet 17 side along the side wall 15.

The liquid film 44 is collected in the collection chamber 55 from the aperture 56, after travelling to the exhaust gas outlet 17 side from the exhaust gas inlet 11 side through the side wall 15 of the reaction tower 10. The liquid film 44 collected in the collection chamber 55 travels from the exhaust gas outlet 17 side to the exhaust gas inlet 11 side through the side wall 69 of the collection chamber 55. A drainage portion 53 is provided on the bottom surface 57 of the collection chamber 55. The liquid film 44 travelling from the exhaust gas outlet 17 side to the exhaust gas inlet 11 side through the side wall 69 of the collection chamber 55 is drained from the drainage portion 53.

The exhaust gas treatment apparatus 100 of the present example further includes a collection portion 51. Therefore, in the exhaust gas treatment apparatus 100 of the present example, the collection portion 51 can collect the liquid film 44. Therefore, compared to the case where the exhaust gas treatment apparatus 100 does not include the collection portion 51, the liquid 40 is less likely to be discharged outside the exhaust gas treatment apparatus 100 accompanying the exhaust gas 30. Therefore, the exhaust gas treatment apparatus 100 of the present example is less likely to corrode the steel or other material outside the exhaust gas treatment apparatus 100.

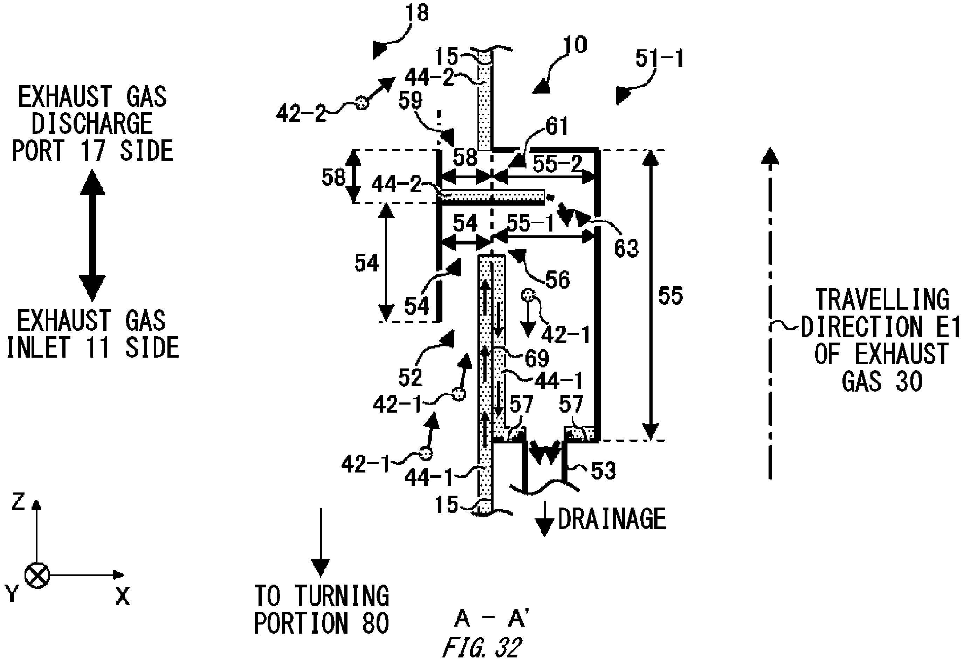

Fig. 32 illustrates another example of the A-A cross-section in Fig. 30. In the collection portion 51 of the present example, a second aperture 59 is further provided. The collection portion 51 of the present example is different from the collection portion 51 illustrated in Fig. 31 in this point. The collection portion 51 of the present example further includes a second ingoing portion 58. The second ingoing portion 58 may be arranged on the exhaust gas outlet 17 side from the first ingoing portion 54.

In the present example, a second aperture 59 and an aperture 61 are further provided in the collection portion 51. The liquid 40 that has treated the exhaust gas 30 is introduced to the second aperture 59. In the present example, the second aperture 59 is provided in the interior of the reaction tower 10. In the present example, the gas treatment portion 18 and the second ingoing portion 58 of the reaction tower 10 are communicated by the second aperture 59. The second aperture 59 may be provided in the end portion of the exhaust gas outlet 17 side of the second ingoing portion 58. In the present example, the second ingoing portion 58 and the collection chamber 55 are communicated by the aperture 61. The position in the X axis direction of the aperture 61 may match the position in the X axis direction of the side wall 15.

In the present example, the collection chamber 55 illustrated in Fig. 31 is set as the collection chamber 55-1, and the collection chamber 55 arranged on the exhaust gas outlet 17 side than the collection chamber 55-1 is set as the collection chamber 55-2. The collection chamber 55-1 and the collection chamber 55-2 are communicated by the aperture 63.

Since the liquid droplet 42 is in a misting state, a part of the liquid droplet 42 may travel to the exhaust gas outlet 17 side from the collection portion 51 accompanying the exhaust gas 30. The liquid droplet 42 travelling to the exhaust gas outlet 17 side from the collection portion 51 may be turned to a liquid film on the side wall 15 of the exhaust gas outlet 17 side from the collection portion 51.

In the present example, the liquid droplet 42 and the liquid film 44 on the exhaust gas inlet 11 side from the collection portion 51 are set as the liquid droplet 42-1 and the liquid film 44-1, respectively, and the liquid droplet 42 and the liquid film 44 on the exhaust gas outlet 17 side from the collection portion 51 are set as the liquid droplet 42-2 and the liquid film 44-2, respectively. In Fig. 32, the liquid droplet 42-1 and the liquid film 44-1, and the liquid droplet 42-2 and the liquid film 44-2 are illustrated by hatching.

The gas treatment portion 18 of the exhaust gas outlet 17 side from the collection portion 51 is away from the spinning portion 80 further than the gas treatment portion 18 of the exhaust gas inlet 11 side from the collection portion 51. Therefore, the travelling velocity of the exhaust gas 30 on the exhaust gas outlet 17 side from the collection portion 51 tends to be less than the travelling velocity of the exhaust gas 30 on the exhaust gas inlet 11 side from the collection portion 51. Therefore, the liquid film 44-2 is difficult to travel toward the exhaust gas outlet 17 side from the liquid film 44-1. Therefore, the liquid film 44-2 tends to travel to the exhaust gas inlet 11 side along the side wall 15 from the liquid film 44-1.

In the present example, the liquid film 44-2 travelling in the travelling direction E1 of the exhaust gas 30 (the direction from the exhaust gas outlet 17 to the exhaust gas inlet 11) is collected in the collection portion 51 from the second aperture 59. In the present example, since the second aperture 59 is provided in the end portion of the exhaust gas outlet 17 side of the second ingoing portion 58, the collection portion 51 tends to collect the liquid film 44-2 travelling from the exhaust gas outlet 17 side to the exhaust gas inlet 11 side along the side wall 15.

The liquid film 44-2 is collected in the collection chamber 55-2 from the aperture 61 after travelling from the exhaust gas outlet 17 side to the exhaust gas inlet 11 side through the side wall 15 of the reaction tower 10. The liquid film 44-2 collected in the collection chamber 55-2 is collect in the collection chamber 55-1 from the aperture 63. The liquid film 44-2 collected in the collection chamber 55-1 is intermixed with the liquid film 44-1. The liquid film 44 where the liquid film 44-1 and the liquid film 44-2 are intermixed is drained from the drainage portion 53.

In the present example, since the first aperture 52 and the second aperture 59 are provided in the collection portion 51, the collection portion 51 can collect the liquid film 44 further effectively than the case where the second aperture 59 is not provided in the collection portion 51 (that is, the case of the example of Fig. 31). Therefore, the liquid 40 is further less likely to be discharged outside the exhaust gas treatment apparatus 100 accompanying the exhaust gas 30 than the case where the first aperture 52 is only provided in the collection portion 51. Therefore, the exhaust gas treatment apparatus 100 of the present example is less likely to corrode the steel or other material outside the exhaust gas treatment apparatus 100.

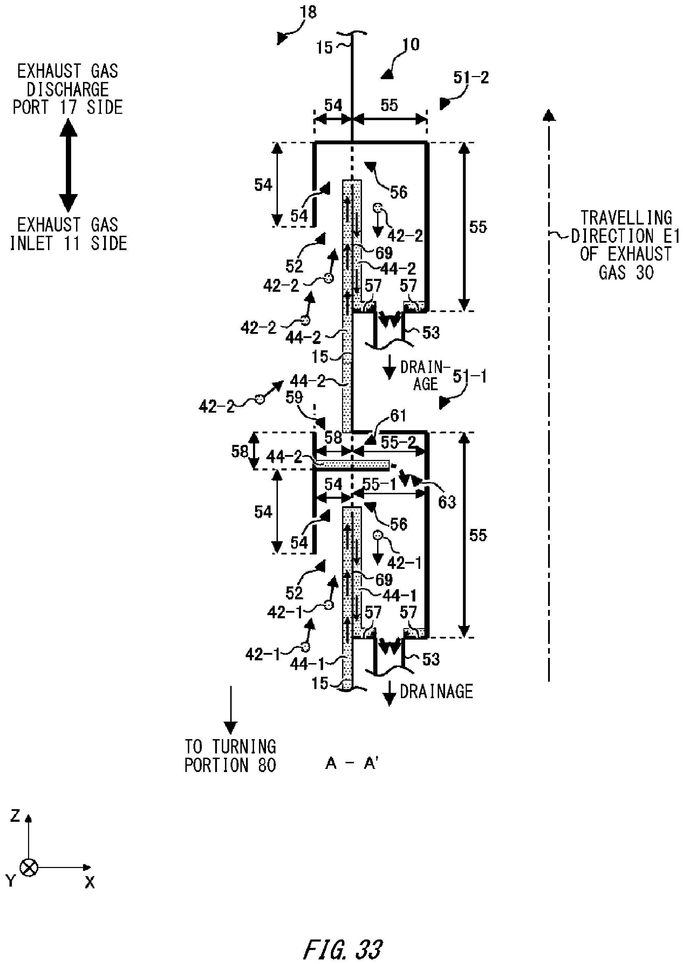

Fig. 33 illustrates another example of the A-A cross-section in Fig. 30. The exhaust gas treatment apparatus 100 of the present example includes a plurality of collection portions 51. In the present example, the exhaust gas treatment apparatus 100 includes two collection portions 51. One and the other of the two collection portions 51 are respectively set as the first collection portion 51-1 and the second collection portion 51-2.

In the present example, the second collection portion 51-2 is provided on the downstream side in the travelling direction E1 of the exhaust gas 30 from the first collection portion 51-1 (the exhaust gas outlet 17 side). The first collection portion 51-1 is the same as the collection portion 51 illustrated in Fig. 32. The second collection portion 51-2 is the same as the collection portion 51 illustrated in Fig. 31.

In the present example, the liquid film 44-1 of the exhaust gas inlet 11 side from the first collection portion 51-1 tends to be collected in the first collection portion 51-1. In the present example, the liquid film 44-2 on the exhaust gas outlet 17 side from the first collection portion 51-1, and on the exhaust gas inlet 11 side from the second collection portion 51-2, tends to be collected in at least one of the first collection portion 51-1 and the second collection portion 51-2. Therefore, the total amount of the liquid film 44 collected by the first collection portion 51-1 and the second collection portion 51-2 in the present example tends to be more than the amount of the liquid film 44 collected by the collection portion 51 in the example of Fig. 31 or Fig. 32 (that is, when there is one collection portion 51). Therefore, in the present example, the amount of the liquid film 44 of the exhaust gas outlet 17 side from the second collection portion 51-2 tends to be less than the amount of the liquid film 44 of the upward from the collection portion 51 in the example of Fig. 31 or Fig. 32 (that is, when there is one collection portion 51). Therefore, a second aperture 59 may be provided in the first collection portion 51-2.

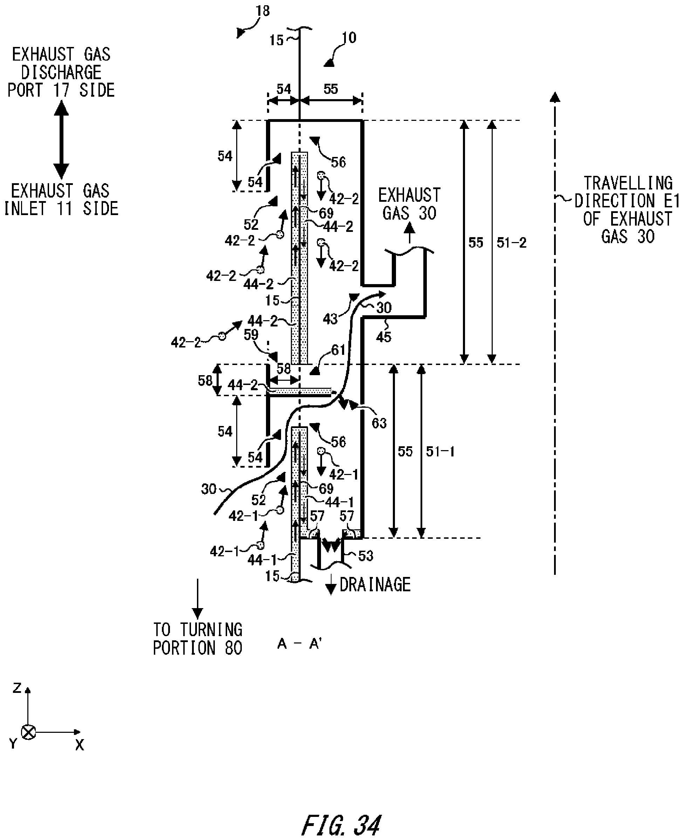

Fig. 34 illustrates another example of the A-A cross-section in Fig. 30. In the present example, the first collection portion 51-1 and the second collection portion 51-2 are connected. In the present example, the first collection portion 51-1 and the collection chamber 55, the second collection portion 51-2 and the collection chamber 55 are connected. In Fig. 34, the range of the first collection portion 51-1 and the second collection portion 51-2 are illustrated by two-way arrows.

In the present example, the liquid film 44-2 collected in the second collection portion 51-2 travels from the collection chamber 55 of the second collection portion 51-2 to the collection chamber 55 of the first collection portion 51-1. The liquid film 44-2 is intermixed with the liquid film 44-1 collected in the collection chamber 55 of the first collection portion 51-1. The liquid film 44-2 is drained from the drainage portion 53 after being intermixed with the liquid film 44-1.

In the present example, the second collection portion 51-2 further includes an exhaust gas outlet 43. A part of the exhaust gas 30 accompanying the liquid droplet 42-1 may travel to the collection chamber 55 of the second collection portion 51-2 after passing through the first aperture 52, the aperture 56 and the aperture 63 of the first collection portion 51-1. In Fig. 34, the exhaust gas 30 is illustrated by arrows. Since the second collection portion 51-2 of the present example further includes an exhaust gas outlet 43, the exhaust gas 30 travelling to the collection chamber 55 of the second collection portion 51-2 tends to be discharged outside the collection chamber 55.

When the spinning portion 80 is provided in the interior of the exhaust gas outgoing portion 91, the collection portion 51 illustrated in Fig. 31 to Fig. 34 may be provided on the side wall 71 of the exhaust gas outgoing portion 91. When the spinning portion 80 is provided in the interior of the exhaust gas outgoing portion 91, the collection portion 51 may be provided on the downstream side of the exhaust gas 30 from the spinning portion 80 in the interior of the exhaust gas outgoing portion 91.

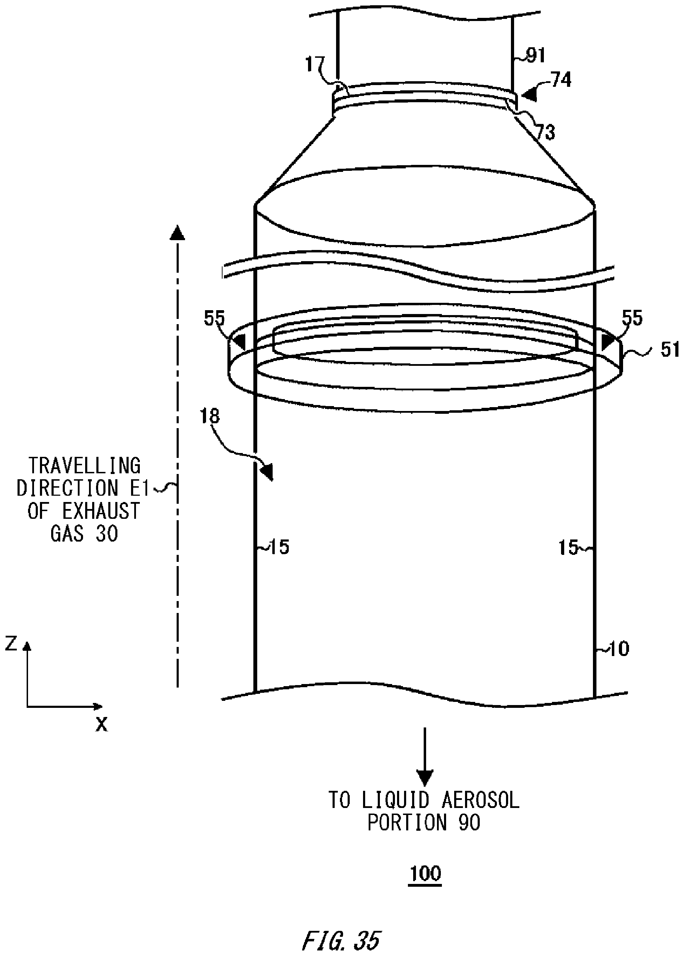

Fig. 35 illustrates one example excluding the spinning portion 80 in the exhaust gas treatment apparatus 100 illustrated in Fig. 29. The exhaust gas treatment apparatus 100 of the present example is different from the exhaust gas treatment apparatus 100 illustrated in Fig. 29 in the points of not including a spinning portion 80, and including one or more collection portions 51. The collection portion 51 is provided on the downstream side of the exhaust gas 30 from the liquid spraying portion 90 in the travelling direction E1 of the exhaust gas 30 (the exhaust gas outlet 17 side). The collection portion 51 of the present example is provided on the side wall 15 of the reaction tower 10.

In the exhaust gas treatment apparatus 100 of the present example, the exhaust gas 30 is spun in the spinning direction F1 (refer to Fig. 3) in a spiral pattern (cyclone shape) through the gas treatment portion 18, and travels in the travelling direction E1 of the exhaust gas 30 (the direction from the exhaust gas inlet 11 side to the exhaust gas outlet 17 side). Therefore, the exhaust gas 30 tends to pass through the outer peripheral side (the side wall 15 side (refer to Fig. 3) from the position C1 side) from the position C1 (refer to Fig. 3) in the interior of the reaction tower 10. Therefore, even when the exhaust gas treatment apparatus 100 does not include the spinning portion 80, the collection portion 51 can collect a part of the liquid 40 that has treated the exhaust gas 30.

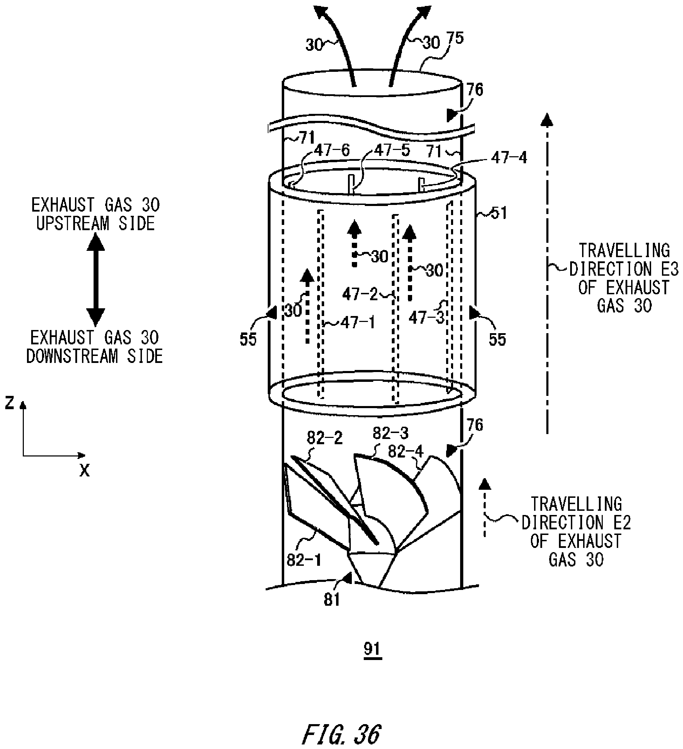

Fig. 36 illustrates a perspective view showing one example of the exhaust gas outgoing portion 91 illustrated in Fig. 25 to Fig. 28. In the present example, the spinning portion 80 is provided in the exhaust gas outgoing portion 91. In the present example, the collection portion 51 is provided on the side wall 71 of the exhaust gas outgoing portion 91. The collection portion 51 is provided on the downstream side in the travelling direction E3 of the exhaust gas 30 from the spinning portion 80. The collection portion 51 collects the liquid 40 that has treated the exhaust gas 30.

The collection portion 51 of the present example includes a groove 47 and a collection chamber 55. The groove 47 may be provided on the side wall 71. The collection portion 51 may include a plurality of grooves 47. The collection portion 51 of the present example includes six grooves 47 (groove 47-1 to 47-6). The groove 47 may extend in the direction with a component parallel to the travelling direction E3 of the exhaust gas 30. The groove 47 may extend in a direction not orthogonal to the travelling direction E3 of the exhaust gas 30. In the present example, the groove 47 extends in the direction parallel to the travelling direction E3 of the exhaust gas 30. The plurality of grooves 47 may be arranged at an equal interval in the circumferential direction of the side wall 71 when seen from the travelling direction E3 of the exhaust gas 30.

The collection chamber 55 may be provided outside the exhaust gas outgoing portion 91. In the present example, the liquid 40 in a misting state accompanying the exhaust gas 30 is collected in the collection chamber 55 after passing through the groove 47.

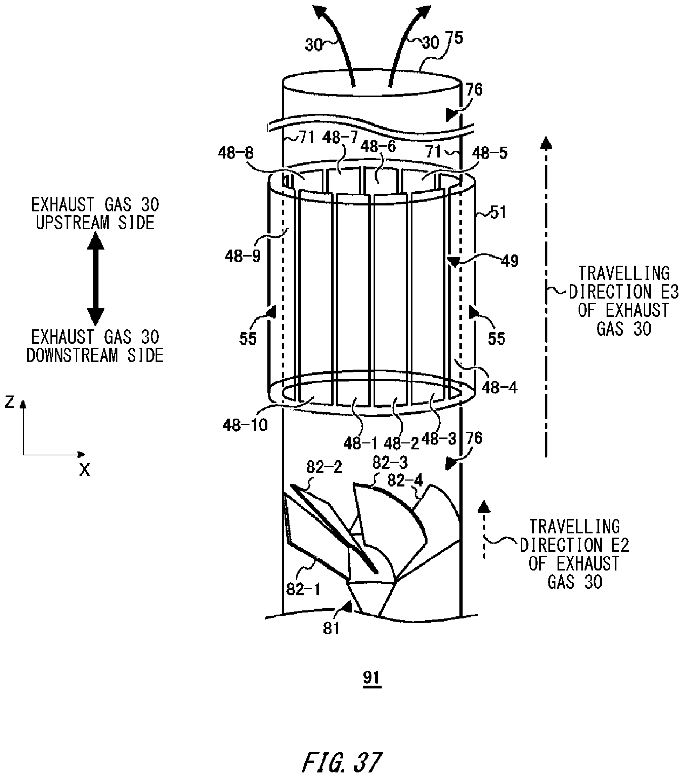

Fig. 37 illustrates a perspective view showing another example of the exhaust gas outgoing portion 91 illustrated in Fig. 25 to Fig. 28. The collection portion 51 of the present example is different from the exhaust gas outgoing portion 91 illustrated in Fig. 36 in the point of having a board 48 instead of the groove 47 illustrated in Fig. 36.

The board 48 may be a part of the side wall 71. The collection portion 51 may include a plurality of boards 48. The collection portion 51 of the present example includes ten boards 48 (boards 48-1 to 48-10). A gap 49 may be provided between the two adjacent boards 48. The two adjacent boards 48 may be arranged to provide a gap 49. The gap 49 may extend in the direction with a component parallel to the travelling direction E3 of the exhaust gas 30. The gap 49 may extend in the direction not orthogonal to the travelling direction E3 of the exhaust gas 30. In the present example, the gap 49 extends in the direction parallel to the travelling direction E3 of the exhaust gas 30. The plurality of boards 48 may be arranged in a circulating shape along the side wall 15 so that the interval between the adjacent boards 48 (the width of the gap 49) is equal.

The collection chamber 55 may be provided outside the exhaust gas outgoing portion 91. In the present example, the liquid 40 in a misting state accompanying the exhaust gas 30 is collected in the collection chamber 55 after passing through the gap 49.

When the spinning portion 80 is provided in the interior of the reaction tower 10, the collection portion 51 illustrated in the Fig. 36 and the Fig. 37 may be provided on the side wall 15 of the reaction tower 10. When the spinning portion 80 is provided in the interior of the reaction tower 10, the collection portion 51 may be provided on the downstream side in the travelling direction E3 of the exhaust gas 30 from the spinning portion 80 in the interior of the reaction tower 10.

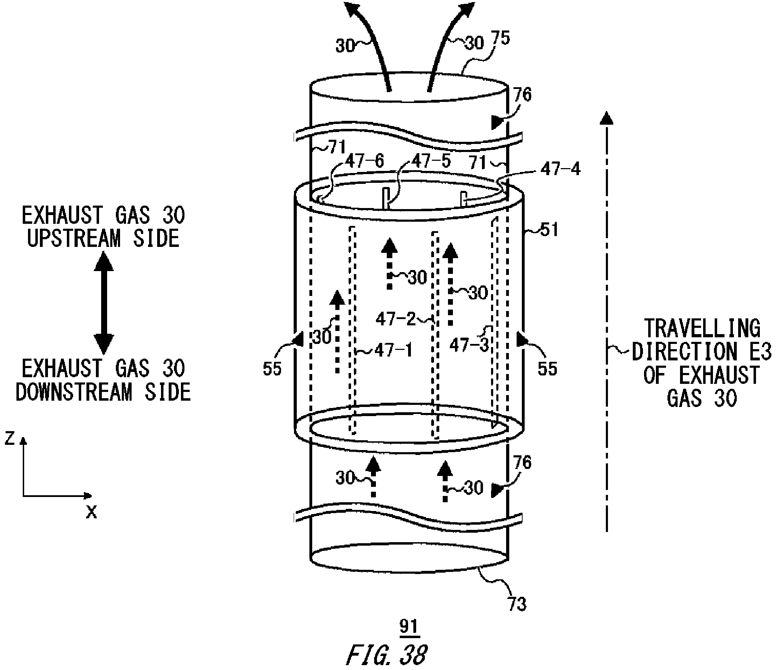

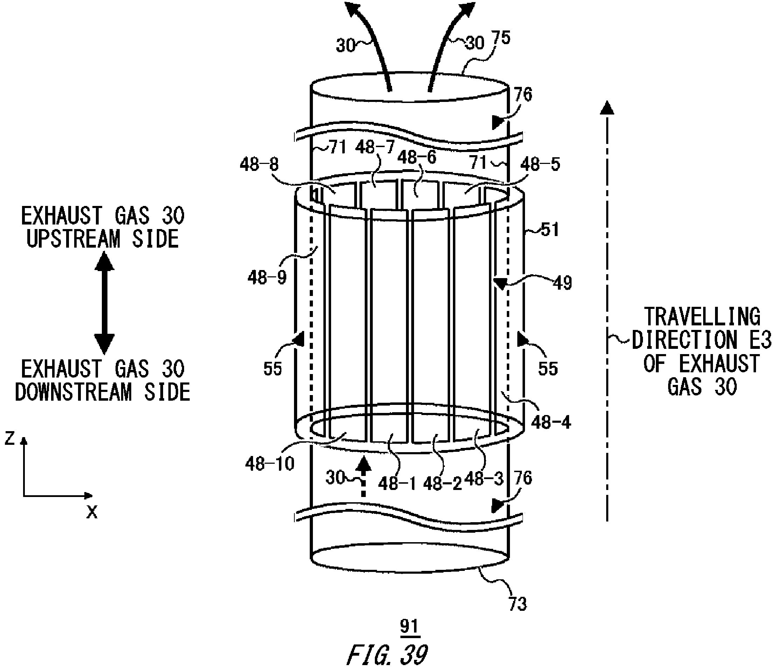

Fig. 38 and Fig. 39 respectively illustrate one example of excepting for the spinning portion 80, in the exhaust gas outgoing portion 91 illustrated in Fig. 36 and Fig. 37. The exhaust gas outgoing portion 91 of the present example is different from the exhaust gas outgoing portion 91 illustrated in Fig. 36 and Fig. 37, in the point of not including the spinning portion 80, and including one or more collection portions 51.

As described above, the liquid spraying portion 90 is provided in the interior of the reaction tower 10. In the present example, since the collection portion 51 is provided in the exhaust gas outgoing portion 91, the collection portion 51 is provided on the downstream side in the travelling direction E3 of the exhaust gas 30 (the exhaust gas outlet 17 side) from the liquid spraying portion 90 in the travelling direction E3 of the exhaust gas 30. The collection portion 51 of the present example is provided on the side wall 71 of the exhaust gas outgoing portion 91.

As described above, the exhaust gas 30 travels from the exhaust gas inlet 11 side to the exhaust gas outlet 17 side while spinning through the gas treatment portion 18 in a spiral pattern (cyclone shape) in the spinning direction F1 (refer to Fig. 3). As described above, when seen from the travelling direction E3 of the exhaust gas 30, the area S3 of the exhaust gas outgoing portion 91 is smaller than the area S4 of the exhaust gas treatment portion 18 (refer to Fig. 26). Therefore, even when the exhaust gas outgoing portion 91 does not include spinning portion 80, due to the law of conservation of angular momentum, the velocity of the exhaust gas 30 spinning through the exhaust gas outgoing portion 91 tends to be less than the velocity of the exhaust gas 30 spinning through the reaction tower 10. Therefore, the exhaust gas 30 introduced to the exhaust gas outgoing portion 91 tends to passing through the outer peripheral side (the side wall 71 side from the position C1) from the position C1 (refer to Fig. 26) in the exhaust gas passage portion 76. Therefore, the collection portion 51 can collect a part of the liquid 40 that has treated the exhaust gas 30.

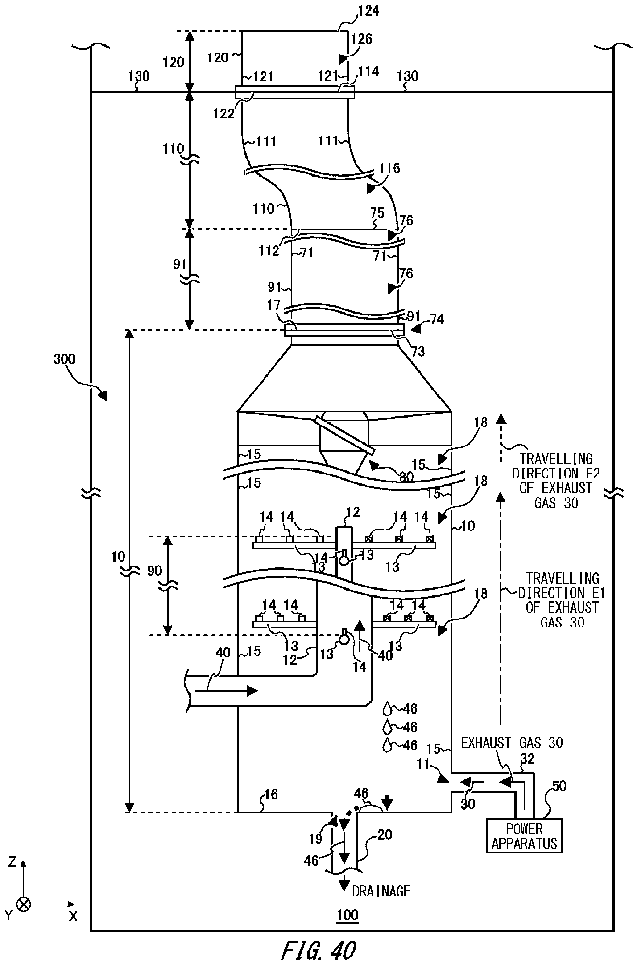

Fig. 40 illustrates one example of the exhaust gas treatment apparatus 100 according to one embodiment of the present invention. In the present example, the exhaust gas treatment apparatus 100 includes a reaction tower 10, a flue 110 and a spinning portion 80. The exhaust gas treatment apparatus 100 may include an exhaust gas outgoing portion 91 and an exhaust flue 120. In Fig. 40, the range of the reaction tower 10, the exhaust gas outgoing portion 91, the flue 110 and the exhaust flue 120 in the travelling direction E1 of the exhaust gas 30 are illustrated by two-way arrows.

The storage chamber 300 is a chamber where the exhaust gas treatment apparatus 100 is placed. The storage chamber 300 may be included in a ship, a factory etc. The storage chamber 300 may be arranged downward of the funnel top 130. The reaction tower 10, the exhaust gas outgoing portion 91 and the flue 110 may be included in a storage chamber 300. The exhaust flue 120 may be included outside the storage chamber 300.

The flue 110 is directly or indirectly connected to the exhaust gas outlet 17. In the present example, the flue 110 is connected indirectly to the exhaust gas outlet 17. The flue 110 includes one end 112 and the other end 114 in the travelling direction of the exhaust gas 30. In the present example, the one end 112 is connected to the other end 75 of the exhaust gas outgoing portion 91. The flue 110 includes an exhaust gas passage portion 116. The exhaust gas passage portion 116 of the flue 110 is communicated with the exhaust gas passage portion 76 of the exhaust gas outgoing portion 91.

The flue 110 includes a side wall 111. In the present example, the side wall 111 is the inner side surface of the exhaust gas passage portion 116. The exhaust gas passage portion 116 is a space surrounded by the side wall 111 when seen from the travelling direction of the exhaust gas 30 in the flue 110.

The exhaust gas treatment apparatus 100 may not include the exhaust gas outgoing portion 91. When the exhaust gas treatment apparatus 100 does not include the exhaust gas outgoing portion 91, the flue 110 may be connected directly to the exhaust gas outlet 17. That is, when the exhaust gas treatment apparatus 100 does not include the exhaust gas outgoing portion 91, the one end 112 of the flue 110 may be connected to the exhaust gas outlet 17.

The exhaust flue 120 includes one end 122 and the other end 124 in the travelling direction of the exhaust gas 30. In the present example, the one end 122 is connected to the other end 114 of the flue 110. The exhaust flue 120 includes the exhaust gas passage portion 126. The exhaust gas passage portion 126 of the exhaust flue 120 is communicated to the exhaust gas passage portion 116 of the flue 110.

The exhaust flue 120 includes the side wall 121. In the present example, the side wall 121 is the inner side surface of the exhaust gas passage portion 126. The exhaust gas passage portion 126 is the space surrounded by the side wall 121 when seen from the travelling direction of the exhaust gas 30 in the exhaust flue 120.

In the present example, the spinning portion 80 is provided in the reaction tower 10. The spinning portion 80 of the present example is provided on the downstream side of the exhaust gas 30 from the liquid spraying portion 90 in the travelling direction E1 of the exhaust gas 30 in the reaction tower 10. The spinning portion 80 of the present example is provided between the liquid spraying portion 90 and the exhaust gas outlet 17 in the travelling direction E1 of the exhaust gas 30.

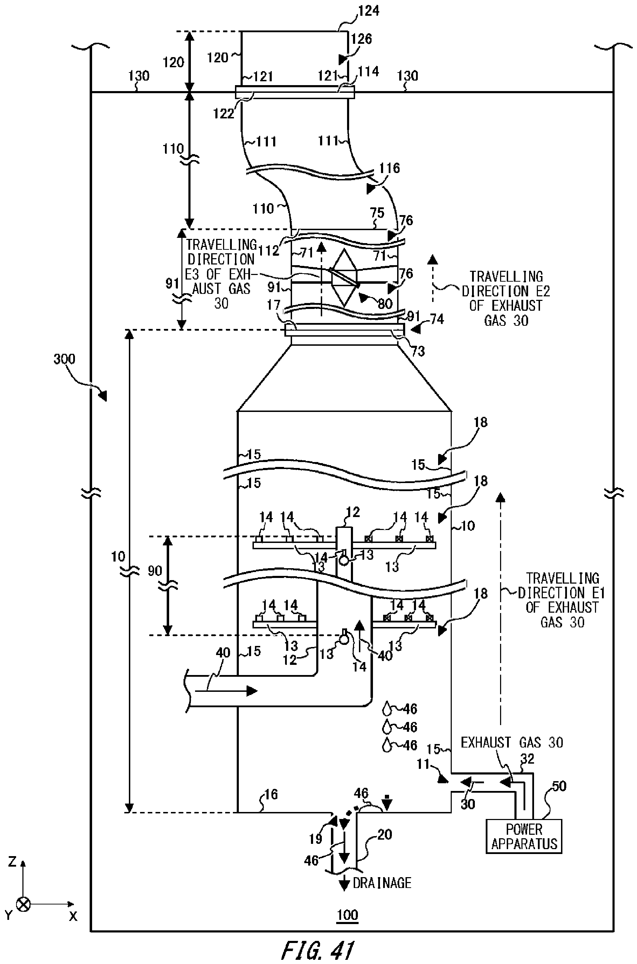

Fig. 41 illustrates another example of the exhaust gas treatment apparatus 100 according to one embodiment of the present invention. In the exhaust gas treatment apparatus 100 of the present example, the spinning portion 80 is provided in the exhaust gas outgoing portion 91. The exhaust gas treatment apparatus 100 of the present example is different from the exhaust gas treatment apparatus 100 illustrated in Fig. 40 in this point. The spinning portion 80 of the present example is provided in the exhaust gas passage portion 76 of the exhaust gas outgoing portion 91.

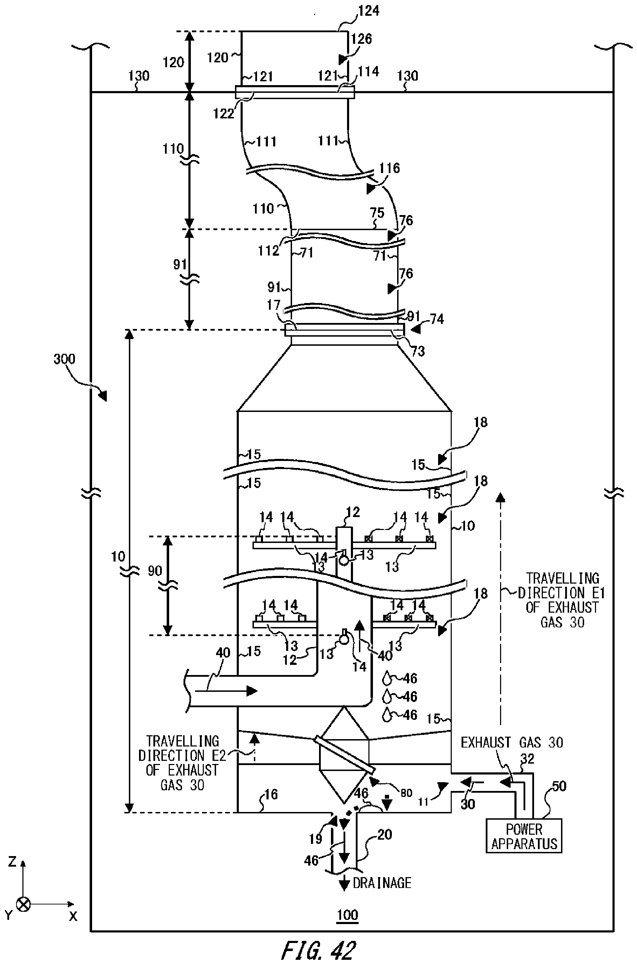

Fig. 42 illustrates another example of the exhaust gas treatment apparatus 100 according to the one embodiment of the present invention. In the exhaust gas treatment apparatus 100 of the present example, the spinning portion 80 is provided on the upstream of the exhaust gas 30 from the liquid spraying portion 90 in the travelling direction E1 of the exhaust gas 30. The exhaust gas treatment apparatus 100 of the present example is different from the exhaust gas treatment apparatus 100 illustrated in Fig. 40 in this point. The spinning portion 80 of the present example is provided between the exhaust gas inlet 11 and the liquid spraying portion 90 in the travelling direction E1 of the exhaust gas 30.

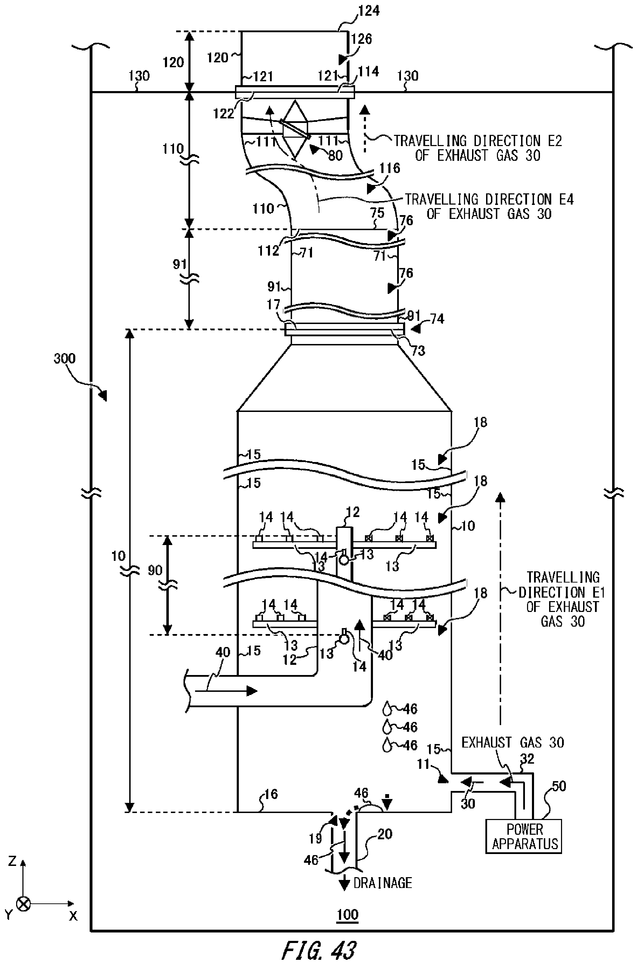

Fig. 43 illustrates another example of the exhaust gas treatment apparatus 100 according to one embodiment of the present invention. In the present example, the spinning portion 80 is provided in the flue 110. The exhaust gas treatment apparatus 100 of the present example is different from the exhaust gas treatment apparatus 100 illustrated in Fig. 40 in this point. The spinning portion 80 of the present example is provided in the exhaust gas passage portion 116 of the flue 110.

In the interior of the flue 110, the travelling direction of the exhaust gas 30 from the one end 112 to the other end 114 is set as the travelling direction E4. In the present example, the travelling direction E4 is the direction along the side wall 111 in the XZ cross section. In the direction intersecting the travelling direction E4 of the exhaust gas 30, the cross-sectional area of the flue 110 may be smaller than the cross-sectional area of the liquid spraying portion (the area S4 (refer to Fig. 26)). In the present example, the exhaust gas 30 travels in the travelling direction E4 in the side view of the flue 110, and spins in the spinning direction F1 when seen from the travelling direction E4.

The travelling direction E4 of the exhaust gas 30 in the flue 110 may be parallel to the travelling direction E2 of the exhaust gas 30, or may not parallel in the spinning portion 80. In the present example, the travelling direction E4 is parallel to the travelling direction E2.

When the spinning portion 80 is provided inside the flue 110, the collection portion 51 illustrated in Fig. 31 to Fig. 34 may be provided on the side wall 111 of the flue 110. When the spinning portion 80 is provided inside the flue 110, the collection portion 51 may be provided on the downstream side of the exhaust gas 30 from the spinning portion 80 inside the flue 110.

When the spinning portion 80 is provided inside the flue 110, similarly to the case of the example illustrated in the Fig. 5, at least a part of the other end 86 of the wing portion 82 may be connected to the side wall 111 of the flue 110 when seen from the travelling direction E2 of the exhaust gas 30.

When the spinning portion 80 is provided inside the flue 110, the entire interior of the flue 110 may be covered by the plurality of wing portions 82 when seen from the travelling direction E2 of the exhaust gas 30.

When the spinning portion 80 is provided inside the flue 110, similarly to the case of the example illustrated in Fig. 20, the wing portion 82 may be connected to the side wall 111 of the flue 110 on the outgoing end 104 (refer to Fig. 7) side, or may be away from the side wall 111 on the ingoing end 102 (refer to Fig. 7) side in the travelling direction E2 of the exhaust gas 30.

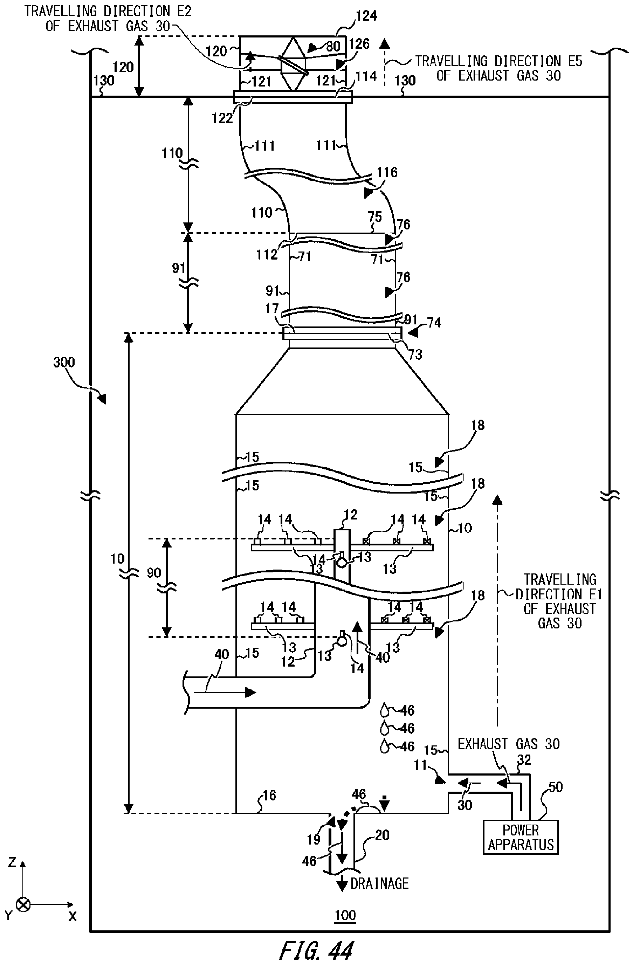

Fig. 44 illustrates another example of the exhaust gas treatment apparatus 100 according to one embodiment of the present invention. In the present example, the spinning portion 80 is provided in the exhaust flue 120. The exhaust gas treatment apparatus 100 of the present example is different from the exhaust gas treatment apparatus 100 illustrated in Fig. 40 in this point. The spinning portion 80 of the present example is provided in the exhaust gas passage portion 126 of the exhaust flue 120.

In the interior of the exhaust flue 120, the travelling direction of the exhaust gas 30 from the one end 122 to the other end 124 is set as the travelling direction E5. In the present example, the travelling direction E5 is parallel to the Z axis. In the direction intersecting the travelling direction E5 of the exhaust gas 30, the cross-sectional area of the exhaust flue 120 may be smaller than the cross-sectional area of the liquid spraying portion (The area S4 (refer to Fig. 26)). In the present example, the exhaust gas 30 travels in the travelling direction E5 in the side view of the exhaust flue 120, and spins in the spinning direction F1 when seen from the travelling direction E5.

The travelling direction E5 of the exhaust gas 30 in the exhaust flue 120 may be parallel to the travelling direction E2 of the exhaust gas 30, or may not parallel in the spinning portion 80. In the present example, the travelling direction E5 is parallel to the travelling direction E2.

When the spinning portion 80 is provided inside the exhaust flue 120, the collection portion 51 illustrated in Fig. 31 to Fig. 34 may be provided on the side wall 121 of the exhaust flue 120. When the spinning portion 80 is provided inside the exhaust flue 120, the collection portion 51 may be provided on the downstream side of the exhaust gas 30 from the spinning portion 80 inside the exhaust flue 120.

When the spinning portion 80 is provided inside the exhaust flue 120, similarly to the case of the example illustrated in the Fig. 5, at least a part of the other end 86 of the wing portion 82 may be connected to the side wall 121 of the exhaust flue 120 when seen from the travelling direction E2 of the exhaust gas 30.

When the spinning portion 80 is provided inside the exhaust flue 120, the entire interior of the exhaust flue 120 may be covered by the plurality of wing portions 82 when seen from the travelling direction E2 of the exhaust gas 30.

When the spinning portion 80 is provided inside the exhaust flue 120, similarly to the case of the example illustrated in Fig. 20, the wing portion 82 may be connected to the side wall 121 of the exhaust flue 120 on the outgoing end 104 (refer to Fig. 7) side, or may be away from the side wall 121 on the ingoing end 102 (refer to Fig. 7) side in the travelling direction E2 of the exhaust gas 30.

As illustrated in Fig. 40 to Fig. 44, the spinning portion 80 may be provided in any one of the reaction tower 10, the exhaust gas outgoing portion 91, the flue 110 and the exhaust flue 120. The spinning portion 80 may be provided in at least two of the reaction tower 10, the exhaust gas outgoing portion 91, the flue 110 and the exhaust flue 120. Two spinning portions 80 may be provided in the reaction tower 10. When two spinning portions 80 are provided in the reaction tower 10, one and the other spinning portion 80 may be provided on the upstream side and the downstream side in the travelling direction E1 of the exhaust gas 30 from the liquid spraying portion 90, respectively.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### (Item 1)

An exhaust gas treatment apparatus, comprising:
a reaction tower, including an exhaust gas inlet where exhaust gas is introduced; and an exhaust gas outlet where the exhaust gas is discharged, wherein a liquid for treating the exhaust gas is supplied; and
a spinning portion, configured to spin the exhaust gas, including an ingoing end wherein the exhaust gas is introduced; an outgoing end wherein the exhaust gas is led out,
wherein the reaction tower includes a liquid spraying portion provided between the exhaust gas inlet and the exhaust gas outlet;
wherein in the liquid spraying portion, the liquid is sprayed in an interior of the reaction tower;
the exhaust gas is configured to travel in a direction from the exhaust gas inlet to the exhaust gas outlet through the interior of the reaction tower, while spinning in a predetermined spinning direction through the liquid spraying portion;
the exhaust gas is configured to travel in a direction from the ingoing end to the outgoing end through the interior of the spinning portion;
the spinning portion is configured to spin the exhaust gas in a predetermined spinning direction when seen from a direction from the outgoing end to the ingoing end; and
the spinning direction in the liquid spraying portion of the exhaust gas when seen from the travelling direction of the exhaust gas in the interior of the reaction tower is the same as the spinning direction of the exhaust gas when seen from the travelling direction of the exhaust gas in the spinning portion.

### (Item 2)

The exhaust gas treatment apparatus according to item 1, wherein
the spinning portion includes one or more wing portions configured to spin the exhaust gas; and
a normal line direction of a back surface of the wing portion and the travelling direction of the exhaust gas in the spinning portion are configured to form an acute angle.

### (Item 3)

The exhaust gas treatment apparatus according to item 2, wherein
the spinning portion includes a first wing portion and a second wing portion included in the plurality of wing portions; and
the first wing portion is overlapped with the second wing portion when seen from the travelling direction of the exhaust gas in the spinning portion.

### (Item 4)

The exhaust gas treatment apparatus according to item 3, wherein
the exhaust gas spun by the spinning portion is configured to spin through surroundings of a predetermined central axis when seen from the travelling direction of the exhaust gas in the spinning portion; and
an overlapping width on the central axis side of the first wing portion and the second wing portion is larger than an overlapping width on an outer peripheral side from the central axis side of the first wing portion and the second wing portion, when seen from the travelling direction of the exhaust gas in the spinning portion. (Item 5)
The exhaust gas treatment apparatus according to item 4, wherein
the plurality of wing portions are provided to enclose the central axis; and
a direction of spinning of the plurality of wing portions is the same as the spinning direction of the exhaust gas in the liquid spraying portion, when seen from the travelling direction of the exhaust gas in the spinning portion.

### (Item 6)

The exhaust gas treatment apparatus according to item 4 or 5, wherein
the spinning portion includes a supporting column provided in the central axis; and
the supporting column is a polygonal shape when seen from the travelling direction of the exhaust gas in the spinning portion.

### (Item 7)

The exhaust gas treatment apparatus according to item 6, wherein
the reaction tower further includes a trunk tube, which is provided in the liquid spraying portion, wherein the liquid is supplied; and
an end portion of the exhaust gas outlet side of the trunk tube is contacted with an end portion of the exhaust gas inlet side of the supporting column.

### (Item 8)

The exhaust gas treatment apparatus according to any one of items 3 to 7, wherein a distance on the outgoing end side between the first wing portion and the second wing portion is smaller than a distance on the ingoing end side between the first wing portion and the second wing portion.

### (Item 9)

The exhaust gas treatment apparatus according to any one of items 2 to 8, wherein
a back surface of the wing portion includes a first surface, and a second surface provided on the outgoing end side from the first surface;
in a side view of the spinning portion,
the first surface and the travelling direction of the exhaust gas in the spinning portion are configured to form a first angle;
the second surface and the travelling direction of the exhaust gas in the spinning portion are configured to form a second angle, which is different from the first angle; and
the second angle is larger than the first angle.

### (Item 10)

The exhaust gas treatment apparatus according to any one of items 2 to 9, wherein
a thickness between a front surface and a back surface of the wing portion on the outgoing end side is greater than a thickness between a front surface and a back surface of the wing portion on the ingoing end side in one wing portion.

### (Item 11)

The exhaust gas treatment apparatus according to any one of items 2 to 10, wherein a groove for controlling a travelling direction of the liquid included in the exhaust gas is provided in the back surface of the wing portion.

### (Item 12)

The exhaust gas treatment apparatus according to any one of items 2 to 11, wherein the wing portion further includes a support portion for controlling the pressure loss of the exhaust gas.

### (Item 13)

The exhaust gas treatment apparatus according to any one of items 2 to 12, wherein the spinning portion is provided in the interior of the reaction tower, and is provided between the liquid spraying portion and the exhaust gas outlet in the travelling direction of the exhaust gas in the interior of the reaction tower.

### (Item 14)

The exhaust gas treatment apparatus according to item 13, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the reaction tower.

### (Item 15)

The exhaust gas treatment apparatus according to item 14, wherein the other end of the wing portion is connected with the side wall of the reaction tower in the outgoing end side, and away from the side wall of the reaction tower on the ingoing end side.

### (Item 16)

The exhaust gas treatment apparatus according to any one of items 13 to15, wherein an entire interior of the reaction tower is covered by the plurality of wing portions, when seen from the travelling direction of the exhaust gas in the spinning portion.

### (Item 17)

The exhaust gas treatment apparatus according to any one of items 13 to 16, further comprising
one or more collection portions for collecting the liquid that has treated the exhaust gas, which are provided on the downstream side in the travelling direction of the exhaust gas from the spinning portion, and provided on the side wall of the reaction tower in the travelling direction of the exhaust gas in the interior of the reaction tower,
wherein a first aperture, wherein the liquid that has treated the exhaust gas is introduced, is provided in the collection portion;
the liquid travelling on the downstream side in the travelling direction of the exhaust gas from the spinning portion is collected in the collection portion from the first aperture; and
the collection portion includes a drainage portion for draining the liquid that has treated the exhaust gas.

### (Item 18)

The exhaust gas treatment apparatus according to any one of items 2 to 12, further comprising
an exhaust gas outgoing portion, connected to the exhaust gas outlet,
wherein a cross-sectional area of the exhaust gas outgoing portion is smaller than a cross-sectional area of the liquid spraying portion, in a direction intersecting with a travelling direction of the exhaust gas in the exhaust gas outgoing portion;
wherein the exhaust gas outgoing portion is provided in the interior of the exhaust gas outgoing portion, including a partition configured to prevent a passage of at least a part of the exhaust gas;
wherein the spinning portion is provided in the exhaust gas outgoing portion.

### (Item 19)

The exhaust gas treatment apparatus according to item 18, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the exhaust gas outgoing portion.

### (Item 20)

The exhaust gas treatment apparatus according to item 19, wherein the other end of the wing portion is connected with the side wall of the exhaust gas outgoing portion in the outgoing end side, and is away from the side wall of the exhaust gas outgoing portion on the ingoing end side.

### (Item 21)

The exhaust gas treatment apparatus according to any one of items 18 to 20, wherein an entire interior of the exhaust gas outgoing portion is covered by the plurality of wing portions, when seen from the travelling direction of the exhaust gas in the spinning portion.

### (Item 22)

The exhaust gas treatment apparatus according to any one of items 18 to 21, further comprising
one or more collection portions for collecting the liquid that has treated the exhaust gas, which are provided on the downstream side in the travelling direction of the exhaust gas from the spinning portion, and provided on the side wall of the exhaust gas outgoing portion in the travelling direction of the exhaust gas in the interior of the exhaust gas outgoing portion,
wherein a first aperture, wherein the liquid that has treated the exhaust gas is introduced, is provided in the collection portion;
the liquid travelling on the downstream side in the travelling direction of the exhaust gas from the spinning portion is collected in the collection portion from the first aperture; and
the collection portion includes a drainage portion for draining the liquid that has treated the exhaust gas.

### (Item 23)

The exhaust gas treatment apparatus according to item 1, further comprising
an exhaust gas outgoing portion, connected to the exhaust gas outlet,
wherein a cross-sectional area of the exhaust gas outgoing portion is smaller than a cross-sectional area of the liquid spraying portion, in a direction intersecting with a travelling direction of the exhaust gas in the exhaust gas outgoing portion;
wherein the exhaust gas outgoing portion is provided in the interior of the exhaust gas outgoing portion, including a partition configured to prevent a passage of at least a part of the exhaust gas;
wherein the spinning portion includes a tube provided outside the exhaust gas outgoing portion;
wherein the interior of the exhaust gas outgoing portion of one side of the partition is connected with the interior of the exhaust gas outgoing portion of an other side of the partition by the tube in the travelling direction of the exhaust gas in the exhaust gas outgoing portion.

### (Item 24)

The exhaust gas treatment apparatus according to any one of items 2 to 12, further comprising
a flue connected directly or indirectly to the exhaust gas outlet,
wherein a cross-sectional area of the flue is smaller than a cross-sectional area of the liquid spraying portion, in a direction intersecting with the travelling direction of the exhaust gas in the flue; and
wherein the spinning portion is provided in the flue.

### (Item 25)

The exhaust gas treatment apparatus according to item 24, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the flue.

### (Item 26)

The exhaust gas treatment apparatus according to item 25, wherein the other end of the wing portion is connected with the side wall of the flue in the outgoing end side, and is away from the side wall of the flue on the ingoing end side.

### (Item 27)

The exhaust gas treatment apparatus according to any one of items 24 to 26, wherein an entire interior of the flue is covered by the plurality of wing portions, when seen from the travelling direction of the exhaust gas in the spinning portion. (Item 28)

The exhaust gas treatment apparatus according to any one of items 24 to 27, further comprising
one or more collection portions for collecting the liquid that has treated the exhaust gas, which are provided on the downstream side in the travelling direction of the exhaust gas from the spinning portion, and provided on the side wall of the flue in the travelling direction of the exhaust gas in the interior of the flue,
wherein a first aperture, wherein the liquid that has treated the exhaust gas is introduced, is provided in the collection portion;
the liquid travelling on the downstream side in the travelling direction of the exhaust gas from the spinning portion is collected in the collection portion from the first aperture; and
the collection portion includes a drainage portion for draining the liquid that has treated the exhaust gas.

### (Item 29)

The exhaust gas treatment apparatus according to any one of items 17, 22 to 28, wherein
a second aperture, wherein the liquid that has treated the exhaust gas is introduced, is further provided in the collection portion. The liquid travelling on the downstream side in the travelling direction of the exhaust gas from the spinning portion is collected in the collection portion from the second aperture.

### (Item 30)

The exhaust gas treatment apparatus according to item 29, comprising
a first collection portion and a second collection portion included in the plurality of collection portions,
wherein a second collection portion is provided on the downstream side of the exhaust gas from the first collection portion in the travelling direction of the exhaust gas;
the first collection portion includes the first aperture and the drainage portion; and
the second collection portion includes the first aperture, the second aperture and the drainage portion.

### (Item 31)

The exhaust gas treatment apparatus according to item 30, wherein
the first collection portion is connected with the second collection portion; and
the second collection portion further includes an exhaust gas outlet for leading out the exhaust gas.

### (Item 32)

A flue unit, comprising:
an exhaust gas passage portion; and
a spinning portion for spinning exhaust gas, which is provided in the exhaust gas passage portion.

### EXPLANATION OF REFERENCES

10: reaction tower; 11: exhaust gas inlet; 12: trunk tube; 13: branch tube; 14: discharge ion portion; 15: side wall; 16: bottom surface; 17: exhaust gas outlet; 18: gas treatment portion; 19: liquid outlet; 20: drainage pipe; 22: trunk tube; 24: discharge ion portion; 30: exhaust gas; 32: exhaust gas introducing pipe; 40: liquid; 42: liquid droplet; 43: exhaust gas outlet; 44: liquid film; 46: exhaust liquid; 47: groove; 48: board; 49: gap; 50: power apparatus; 51: collection portion; 52: first aperture; 53: drainage portion; 54: first ingoing portion; 55: collection chamber; 56: aperture; 57: bottom surface; 58: second ingoing portion; 59: second aperture; 60: pump; 61: aperture; 62: support portion; 63: aperture; 64: support portion; 65: cavity; 66: groove; 67: one end; 68: other end; 69: side wall; 70: volumetric flow rate control portion; 71: side wall; 72: valve; 73: one end; 74: fastening portion; 75: other end; 76: exhaust gas passage portion; 77: tube; 78: aperture; 79: aperture; 80: spinning portion; 81: supporting column; 82: wing portion; 83: surface; 84: back surface; 85: one end; 86: other end; 87: first end portion; 88: second end portion; 90: liquid spraying portion; 91: exhaust gas outgoing portion; 92: side surface; 93: first surface; 94: second surface; 95: first surface; 96: second surface; 97: third surface; 98: third surface; 100: exhaust gas treatment apparatus; 110: flue; 112: one end; 114: other end; 116: exhaust gas passage portion; 120: exhaust flue; 122: one end; 124: other end; 126: exhaust gas passage portion; 130: funnel top; 300: storage chamber

## Claims

1. An exhaust gas treatment apparatus, comprising:
a reaction tower, including an exhaust gas inlet where exhaust gas is introduced; and an exhaust gas outlet where the exhaust gas is discharged, wherein a liquid for treating the exhaust gas is supplied; and
a spinning portion, configured to spin the exhaust gas, including an ingoing end wherein the exhaust gas is introduced; an outgoing end wherein the exhaust gas is led out,
wherein the reaction tower includes a liquid spraying portion provided between the exhaust gas inlet and the exhaust gas outlet;
wherein in the liquid spraying portion, the liquid is sprayed in an interior of the reaction tower;
the exhaust gas is configured to travel in a direction from the exhaust gas inlet to the exhaust gas outlet through the interior of the reaction tower, while spinning in a predetermined spinning direction through the liquid spraying portion;
the exhaust gas is configured to travel in a direction from the ingoing end to the outgoing end through the interior of the spinning portion;
the spinning portion is configured to spin the exhaust gas in a predetermined spinning direction when seen from a direction from the outgoing end to the ingoing end; and
the spinning direction in the liquid spraying portion of the exhaust gas when seen from the travelling direction of the exhaust gas in the interior of the reaction tower is the same as the spinning direction of the exhaust gas when seen from the travelling direction of the exhaust gas in the spinning portion.

2. The exhaust gas treatment apparatus according to claim 1, wherein
the spinning portion includes one or a plurality of wing portions configured to spin the exhaust gas; and
a normal line direction of a back surface of the wing portion and the travelling direction of the exhaust gas in the spinning portion are configured to form an acute angle.

3. The exhaust gas treatment apparatus according to claim 2, wherein
the spinning portion includes a first wing portion and a second wing portion included in the plurality of wing portions; and
the first wing portion is overlapped with the second wing portion when seen from the travelling direction of the exhaust gas in the spinning portion.

4. The exhaust gas treatment apparatus according to claim 3, wherein
the exhaust gas spun by the spinning portion is configured to spin through surroundings of a predetermined central axis when seen from the travelling direction of the exhaust gas in the spinning portion; and
an overlapping width of the first wing portion and the second wing portion on the central axis side is larger than an overlapping width of the first wing portion and the second wing portion on an outer peripheral side from the central axis side, when seen from the travelling direction of the exhaust gas in the spinning portion.

5. The exhaust gas treatment apparatus according to claim 4, wherein
the plurality of wing portions are provided so as to enclose the central axis; and
a direction of spinning of the plurality of wing portions is the same as the spinning direction of the exhaust gas in the liquid spraying portion, when seen from the travelling direction of the exhaust gas in the spinning portion.

6. The exhaust gas treatment apparatus according to any one of claims 3 to 5, wherein a distance between the first wing portion and the second wing portion on the outgoing end side is smaller than a distance between the first wing portion and the second wing portion on the ingoing end side.

7. The exhaust gas treatment apparatus according to any one of claims 2 to 6, wherein
a back surface of the wing portion includes a first surface, and a second surface provided on the outgoing end side from the first surface;
in a side view of the spinning portion,
the first surface and the travelling direction of the exhaust gas in the spinning portion are configured to form a first angle;
the second surface and the travelling direction of the exhaust gas in the spinning portion are configured to form a second angle, which is different from the first angle; and
the second angle is larger than the first angle.

8. The exhaust gas treatment apparatus according to any one of claims 2 to 7, wherein
a thickness between a front surface and a back surface of the wing portion on the outgoing end side is greater than a thickness between a front surface and a back surface of the wing portion on the ingoing end side in one wing portion.

9. The exhaust gas treatment apparatus according to any one of claims 2 to 8, wherein a groove for controlling a travelling direction of the liquid included in the exhaust gas is provided on the back surface of the wing portion.

10. The exhaust gas treatment apparatus according to any one of claims 2 to 9, wherein the spinning portion is provided in the interior of the reaction tower, and is provided between the liquid spraying portion and the exhaust gas outlet in the travelling direction of the exhaust gas in the interior of the reaction tower.

11. The exhaust gas treatment apparatus according to claim 10, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the reaction tower.

12. The exhaust gas treatment apparatus according to claim 10 or 11, wherein an entire interior of the reaction tower is covered by the plurality of wing portions, when seen from the travelling direction of the exhaust gas in the spinning portion.

13. The exhaust gas treatment apparatus according to any one of claims 2 to 9, further comprising
an exhaust gas outgoing portion connected to the exhaust gas outlet,
wherein a cross-sectional area of the exhaust gas outgoing portion is smaller than a cross-sectional area of the liquid spraying portion in a direction intersecting with a travelling direction of the exhaust gas in the exhaust gas outgoing portion; and
wherein the spinning portion is provided in the exhaust gas outgoing portion.

14. The exhaust gas treatment apparatus according to claim 13, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the exhaust gas outgoing portion.

15. The exhaust gas treatment apparatus according to claim 13 or 14, wherein an entire interior of the exhaust gas outgoing portion is covered by the plurality of wing portions, when seen from the travelling direction of the exhaust gas in the spinning portion.

16. The exhaust gas treatment apparatus according to claim 1, further comprising
an exhaust gas outgoing portion connected to the exhaust gas outlet,
wherein a cross-sectional area of the exhaust gas outgoing portion is smaller than a cross-sectional area of the liquid spraying portion in a direction intersecting with a travelling direction of the exhaust gas in the exhaust gas outgoing portion;
wherein the exhaust gas outgoing portion is provided in the interior of the exhaust gas outgoing portion, and includes a partition configured to prevent a passage of at least a part of the exhaust gas;
wherein the spinning portion includes a tube provided outside the exhaust gas outgoing portion;
wherein the interior of the exhaust gas outgoing portion of one side of the partition is connected with the interior of the exhaust gas outgoing portion of an other side of the partition by the tube in the travelling direction of the exhaust gas in the exhaust gas outgoing portion.

17. The exhaust gas treatment apparatus according to any one of claims 2 to 9, further comprising
a flue connected directly or indirectly to the exhaust gas outlet,
wherein a cross-sectional area of the flue is smaller than a cross-sectional area of the liquid spraying portion, in a direction intersecting with the travelling direction of the exhaust gas in the flue; and
wherein the spinning portion is provided in the flue.

18. The exhaust gas treatment apparatus according to claim 17, wherein the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the flue.

19. The exhaust gas treatment apparatus according to claim 17 or 18, wherein an entire interior of the flue is covered by the plurality of wing portions, when seen from the travelling direction of the exhaust gas in the spinning portion.

## Amended claims

### Amended claims under Art. 19.1 PCT

1. An exhaust gas treatment apparatus, comprising:
a reaction tower, including an exhaust gas inlet where exhaust gas is introduced; and an exhaust gas outlet where the exhaust gas is discharged, wherein a liquid for treating the exhaust gas is supplied; and
a spinning portion, configured to spin the exhaust gas, including an ingoing end wherein the exhaust gas is introduced; an outgoing end wherein the exhaust gas is led out,
wherein the reaction tower includes a liquid spraying portion provided between the exhaust gas inlet and the exhaust gas outlet;
wherein in the liquid spraying portion, the liquid is sprayed in an interior of the reaction tower;
the exhaust gas is configured to travel in a direction from the exhaust gas inlet to the exhaust gas outlet through the interior of the reaction tower, while spinning in a predetermined spinning direction through the liquid spraying portion;
the exhaust gas is configured to travel in a direction from the ingoing end to the outgoing end through the interior of the spinning portion;
the spinning portion is configured to spin the exhaust gas in a predetermined spinning direction when seen from a direction from the outgoing end to the ingoing end; and
the spinning direction in the liquid spraying portion of the exhaust gas when seen from the travelling direction of the exhaust gas in the interior of the reaction tower is the same as the spinning direction of the exhaust gas when seen from the travelling direction of the exhaust gas in the spinning portion.

2. The exhaust gas treatment apparatus according to claim 1, wherein
the spinning portion includes one or a plurality of wing portions configured to spin the exhaust gas; and
a normal line direction of a back surface of the wing portion and the travelling direction of the exhaust gas in the spinning portion are configured to form an acute angle.

3. The exhaust gas treatment apparatus according to claim 1 or 2, wherein
the spinning portion includes a first wing portion and a second wing portion included in a plurality of wing portions, which are configured to spin the exhaust gas; and
the first wing portion is overlapped with the second wing portion when seen from the travelling direction of the exhaust gas in the spinning portion.

4. The exhaust gas treatment apparatus according to claim 3, wherein
the exhaust gas spun by the spinning portion is configured to spin through surroundings of a predetermined central axis when seen from the travelling direction of the exhaust gas in the spinning portion; and
an overlapping width of the first wing portion and the second wing portion on the central axis side is larger than an overlapping width of the first wing portion and the second wing portion on an outer peripheral side from the central axis side, when seen from the travelling direction of the exhaust gas in the spinning portion.

5. The exhaust gas treatment apparatus according to claim 4, wherein
the plurality of wing portions are provided so as to enclose the central axis; and
a direction of spinning of the plurality of wing portions is the same as the spinning direction of the exhaust gas in the liquid spraying portion, when seen from the travelling direction of the exhaust gas in the spinning portion.

6. The exhaust gas treatment apparatus according to any one of claims 3 to 5, wherein a distance between the first wing portion and the second wing portion on the outgoing end side is smaller than a distance between the first wing portion and the second wing portion on the ingoing end side.

7. The exhaust gas treatment apparatus according to any one of claims 2 to 6, wherein
a back surface of the wing portion includes a first surface, and a second surface provided on the outgoing end side from the first surface;
in a side view of the spinning portion,
the first surface and the travelling direction of the exhaust gas in the spinning portion are configured to form a first angle;
the second surface and the travelling direction of the exhaust gas in the spinning portion are configured to form a second angle, which is different from the first angle; and
the second angle is larger than the first angle.

8. The exhaust gas treatment apparatus according to any one of claims 2 to 7, wherein
a thickness between a front surface and a back surface of the wing portion on the outgoing end side is greater than a thickness between a front surface and a back surface of the wing portion on the ingoing end side in one wing portion.

9. The exhaust gas treatment apparatus according to any one of claims 2 to 8, wherein a groove for controlling a travelling direction of the liquid included in the exhaust gas is provided on the back surface of the wing portion.

10. The exhaust gas treatment apparatus according to any one of claims 2 to 9, wherein the spinning portion is provided in the interior of the reaction tower, and is provided between the liquid spraying portion and the exhaust gas outlet in the travelling direction of the exhaust gas in the interior of the reaction tower.

11. The exhaust gas treatment apparatus according to claim 10, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the reaction tower.

12. The exhaust gas treatment apparatus according to claim 10 or 11, wherein an entire interior of the reaction tower is covered by the plurality of wing portions, when seen from the travelling direction of the exhaust gas in the spinning portion.

13. The exhaust gas treatment apparatus according to any one of claims 2 to 9, further comprising
an exhaust gas outgoing portion connected to the exhaust gas outlet,
wherein a cross-sectional area of the exhaust gas outgoing portion is smaller than a cross-sectional area of the liquid spraying portion in a direction intersecting with a travelling direction of the exhaust gas in the exhaust gas outgoing portion; and
wherein the spinning portion is provided in the exhaust gas outgoing portion.

14. The exhaust gas treatment apparatus according to claim 13, wherein
the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the exhaust gas outgoing portion.

15. The exhaust gas treatment apparatus according to claim 13 or 14, wherein an entire interior of the exhaust gas outgoing portion is covered by the plurality of wing portions, when seen from the travelling direction of the exhaust gas in the spinning portion.

16. The exhaust gas treatment apparatus according to claim 1, further comprising
an exhaust gas outgoing portion connected to the exhaust gas outlet,
wherein a cross-sectional area of the exhaust gas outgoing portion is smaller than a cross-sectional area of the liquid spraying portion in a direction intersecting with a travelling direction of the exhaust gas in the exhaust gas outgoing portion;
wherein the exhaust gas outgoing portion is provided in the interior of the exhaust gas outgoing portion, and includes a partition configured to prevent a passage of at least a part of the exhaust gas;
wherein the spinning portion includes a tube provided outside the exhaust gas outgoing portion;
wherein the interior of the exhaust gas outgoing portion of one side of the partition is connected with the interior of the exhaust gas outgoing portion of an other side of the partition by the tube in the travelling direction of the exhaust gas in the exhaust gas outgoing portion.

17. The exhaust gas treatment apparatus according to any one of claims 2 to 9, further comprising
a flue connected directly or indirectly to the exhaust gas outlet,
wherein a cross-sectional area of the flue is smaller than a cross-sectional area of the liquid spraying portion, in a direction intersecting with the travelling direction of the exhaust gas in the flue; and
wherein the spinning portion is provided in the flue.

18. The exhaust gas treatment apparatus according to claim 17, wherein the wing portion includes one end arranged on a predetermined central axis side, and an other end arranged on an outer peripheral side from the central axis side, when seen from the travelling direction of the exhaust gas in the spinning portion; and
at least a part of the other end of the wing portion is connected to a side wall of the flue.

19. The exhaust gas treatment apparatus according to claim 17 or 18, wherein an entire interior of the flue is covered by the plurality of wing portions, when seen from the travelling direction of the exhaust gas in the spinning portion.
